# EUROPEAN PATENT APPLICATION

(11) **EP 4 783 637 A1**
(43) Date of publication of application: **29.07.2026**
(21) Application number: 23952641.1
(22) Date of filing: 21.09.2023
(51) Int. Cl.: H04W 12/069

(54) **AUTHENTICATION METHODS AND DEVICES**

(71) Applicant: GUANGDONG OPPO MOBILE TELECOMMUNICATIONS CORP., LTD., Dongguan, Guangdong 523860 (CN)
(72) Inventor: GAN, Lu, Dongguan, Guangdong 523860 (CN); LIU, Xuefeng, Dongguan, Guangdong 523860 (CN); LIU, Wenya, Dongguan, Guangdong 523860 (CN); SHI, Cong, Dongguan, Guangdong 523860 (CN)
(74) Representative: Grassi, Stefano
(86) International application number: PCT/CN2023/120361
(87) International publication number: WO 2025/059984

(57) **Abstract**

Provided are authentication methods, devices, a computer-readable storage medium, a computer program product, and a computer program. The method includes: sending a first request message to an AFE, the first request message carrying an address of a first certificate, the first certificate being a certificate of a first service node to which the first device belongs, and the first certificate being used to authenticate an identity of the first service node.

## Description

### TECHNICAL FIELD

The present disclosure relates to the field of communications, and more particularly, to authentication methods, devices, a computer readable storage medium, a computer program product, and a computer program.

### BACKGROUND

With the development of technology, there is a demand for communication between Internet of Things (IoT) devices or zero-power devices and the network side. In order to realize communication between IoT devices or zero-power devices and the network side, authentication needs to be completed first. However, storage space is usually limited on the side of zero-power devices or IoT devices, so how to implement authentication on the side of zero-power devices or IoT devices without occupying excessive storage space on such devices has become a problem to be addressed.

### SUMMARY

Embodiments of the present disclosure provide authentication methods, d, a computer readable storage medium, a computer program product, and a computer program.

An embodiment of the present disclosure provides an authentication method implemented by a first device, including:
sending a first request message to an authentication functional entity (AFE), the first request message carrying an address of a first certificate, the first certificate being a certificate of a first service node to which the first device belongs, and the first certificate being used to authenticate an identity of the first service node.

An embodiment of the present disclosure provides an authentication method implemented by an AFE, including:
receiving a first request message, the first request message carrying an address of a first certificate, the first certificate being a certificate of a first service node to which a first device belongs, and the first certificate being used to authenticate an identity of the first service node.

An embodiment of the present disclosure provides an authentication method implemented by a second device, including:
sending a first request message to an AFE, the first request message carrying an address of a first certificate, the first certificate being a certificate of a first service node to which a first device belongs, and the first certificate being used to authenticate an identity of the first service node.

An embodiment of the present disclosure provides an authentication method implemented by a first device, including:
sending a third request message to an AFE, the third request message carrying a second signature for authenticating the first device, the second signature being calculated based on a private key of the first device.

An embodiment of the present disclosure provides an authentication method implemented by an AFE, including:
receiving a third request message from a first device, the third request message carrying a second signature for authenticating the first device.

An embodiment of the present disclosure provides an authentication method implemented by a second device, including:
receiving a first response message from an AFE, the first response message carrying a first signature for authenticating the AFE.

An embodiment of the present disclosure provides an authentication method implemented by an AFE, including:
sending a first response message to a second device, the first response message carrying a first signature for authenticating the AFE.

An embodiment of the present disclosure provides an authentication method implemented by a first device, including:
receiving an authentication message from a third device, the authentication message carrying a fourth signature for authenticating the third device and an identity of the third device.

An embodiment of the present disclosure provides an authentication method implemented by a third device, including:
sending an authentication message to a first device, the authentication message carrying a fourth signature for authenticating the third device and an identity of the third device.

An embodiment of the present disclosure provides a first device, including:
a first communication unit, configured to send a first request message to an AFE, the first request message carrying an address of a first certificate, the first certificate being a certificate of a first service node to which the first device belongs, and the first certificate being used to authenticate an identity of the first service node.

An embodiment of the present disclosure provides an AFE, which includes:
a second communication unit, configured to receive a first request message, the first request message carrying an address of a first certificate, the first certificate being a certificate of a first service node to which a first device belongs, and the first certificate being used to authenticate an identity of the first service node.

An embodiment of the present disclosure provides a second device, including:
a third communication unit, configured to send a first request message to an AFE, the first request message carrying an address of a first certificate, the first certificate being a certificate of a first service node to which a first device belongs, and the first certificate being used to authenticate an identity of the first service node.

An embodiment of the present disclosure provides a first device, including:
a first communication unit, configured to send a third request message to an AFE, the third request message carrying a second signature for authenticating the first device, the second signature being calculated based on a private key of the first device.

An embodiment of the present disclosure provides an AFE, which includes:
a second communication unit, configured to receive a third request message from a first device, the third request message carrying a second signature for authenticating the first device.

An embodiment of the present disclosure provides a second device, including:
a third communication unit, configured to receive a first response message from an AFE, the first response message carrying a first signature for authenticating the AFE.

An embodiment of the present disclosure provides an AFE, which includes:
a second communication unit, configured to send a first response message to a second device, the first response message carrying a first signature for authenticating the AFE.

An embodiment of the present disclosure provides a first device, including:
a first communication unit, configured to receive an authentication message from a third device, the authentication message carrying a fourth signature for authenticating the third device and an identifier of the third device.

An embodiment of the present disclosure provides a third device, including:
a fourth communication unit, configured to send an authentication message to the first device, the authentication message carrying a fourth signature for authenticating the third device and an identifier of the third device.

An embodiment of the present disclosure provides a first device including a transceiver, a processor, and a memory. The memory is configured to store a computer program, and the processor is configured to call and run the computer program stored in the memory to cause the first device to perform the methods described above.

An embodiment of the present disclosure provides a second device including a transceiver, a processor, and a memory. The memory is configured to store a computer program, and the processor is configured to call and run the computer program stored in the memory to cause the second device to perform the methods described above.

An embodiment of the present disclosure provides a third device including a transceiver, a processor, and a memory. The memory is configured to store a computer program, and the processor is configured to call and run the computer program stored in the memory to cause the third device to perform the methods described above.

An embodiment of the present disclosure provides an AFE including a transceiver, a processor, and a memory. The memory is configured to store a computer program, and the processor is configured to call and run the computer program stored in the memory to cause the AFE to perform the methods described above.

An embodiment of the present disclosure provides a chip for implementing the above methods.

Specifically, the chip includes a processor for calling and running a computer program from a memory to cause a device on which the chip is mounted to perform the above methods.

An embodiment of the present disclosure provides a computer-readable storage medium for storing a computer program that causes a device to implement the above methods when the computer program is run by the device.

An embodiment of the present disclosure provides a computer program product including computer program instructions that cause a computer to perform the above methods.

An embodiment of the present disclosure provides a computer program that, when run on a computer, causes the computer to execute the above methods.

By adopting the authentication methods provided in the embodiments, the first device can achieve authentication only by sending the address of the certificate of the service node to which the first device belongs. In this way, it can be ensured that the first device implements authentication without requiring the first device to store excessive content; thus, the storage space of the first device can be saved, and the storage cost of the first device can be reduced.

### BRIEF DESCRIPTION OF THE DRAWINGS

FIG. 1 is a schematic diagram of an application scenario according to an embodiment of the present disclosure.
FIG. 2 is a schematic flowchart of an authentication method according to an embodiment of the present disclosure.
FIG. 3 is a schematic flowchart of an authentication method according to another embodiment of the present disclosure.
FIG. 4 is a schematic flowchart of an authentication method according to another embodiment of the present disclosure.
FIG. 5 is a schematic flowchart of an authentication method according to an embodiment of the present disclosure.
FIG. 6 is a schematic flowchart of an authentication method according to another embodiment of the present disclosure.
FIG. 7 is a schematic flowchart of an authentication method according to another embodiment of the present disclosure.
FIG. 8 is a schematic flowchart of an authentication method according to another embodiment of the present disclosure.
FIG. 9 is a schematic flowchart of an authentication method according to an embodiment of the present disclosure.
FIG. 10 is a schematic flowchart of an authentication method according to another embodiment of the present disclosure.
FIG. 11 is a schematic flowchart of an authentication method according to another embodiment of the present disclosure.
FIG. 12 is a schematic flowchart of an authentication method according to another embodiment of the present disclosure.
FIG. 13 is a schematic flowchart of an authentication method according to another embodiment of the present disclosure.
FIG. 14 is a schematic flowchart of an authentication method according to another embodiment of the present disclosure.
FIG. 15 is a schematic flowchart of an authentication method according to an embodiment of the present disclosure.
FIG. 16 is a schematic flowchart of an authentication method according to another embodiment of the present disclosure.
FIG. 17 is a schematic flowchart of an authentication method according to another embodiment of the present disclosure.
FIG. 18 is a schematic flowchart of an authentication method according to another embodiment of the present disclosure.
FIG. 19 is a schematic block diagram of a first device according to an embodiment of the present disclosure.
FIG. 20 is a schematic block diagram of an authentication functional entity according to an embodiment of the present disclosure.
FIG. 21 is a schematic block diagram of a second device according to an embodiment of the present disclosure.
FIG. 22 is a schematic block diagram of a third device according to an embodiment of the present disclosure.
FIG. 23 is a schematic block diagram of a communication device according to an embodiment of the present disclosure.
FIG. 24 is a schematic block diagram of a chip according to an embodiment of the present disclosure.
FIG. 25 is a schematic block diagram of a communication system according to an embodiment of the present disclosure.

### DETAILED DESCRIPTION

The technical solution of the embodiments of the present disclosure may be applied to various communication systems, such as LTE, LTE-A, NR, evolution of NR, WLAN, WiFi, or other communication systems.

Various embodiments are described here in conjunction with network devices and terminals. The terminals may be mobile or fixed, and the terminals may also be referred to as mobile stations, user units, or the like. The terminal may be a station in a Wireless Local Area Network (WLAN), and may be a smart terminal, a wireless modem, a notebook computer, a tablet computer, or the like. In the embodiments of the present disclosure, the terminal may be a Virtual Reality (VR) terminal/Augmented Reality (AR) terminal, an industrial control terminal, an autonomous driving terminal, a telemedicine terminal, a smart grid terminal, a transportation security terminal, a smart city terminal, a wireless terminal in a smart home, or the like. As an example and not limitation, in the embodiments of the present disclosure, the terminal may also be a wearable device.

In the embodiments of the present disclosure, the network device may be a device for communicating with a terminal. The network device may be an access point in a WLAN, an evolved base station in LTE, a relay station, a vehicle-mounted device, a wearable device, a network device (gNB) in an NR network, a network device in a future evolved Public Land Mobile Network (PLMN) network, a network device in a non-terrestrial network (NTN), or the like. By way of example and not limitation, in embodiments of the present disclosure, the network device may have mobility characteristics, for example, the network device may be a mobile device.

It should be understood that the terms "system" and "network" can often used interchangeably herein. The term "and/or" merely describes an association relationship associated objects, indicating that three relationships may exist. For example, A and/or B may indicate: a exists alone, A and B exist simultaneously, or B exists alone. In addition, the character "/" herein generally indicates that the associated objects before and after are in an "or" relationship. It should be understood that the "indication" mentioned in the embodiments of the present application may be direct indication, indirect indication, or indication of an association relationship. For example, "A indicates B" may mean that A directly indicates B (e.g., B may be obtained through A), or A indirectly indicates B (e.g., A indicates C, and B may be obtained through C), or there is an association relationship between A and B. In the description of the embodiments of the present application, the term "correspondence" may indicate a direct or indirect corresponding relationship between two parties, an association relationship between two parties, or a relationship such as indication and being indicated, configuration and being configured.

In order to facilitate understanding of the technical solution of the embodiments of the present disclosure, the related technologies of the embodiments of the present disclosure will be described below, and the related technologies below may be combined with the technical solutions of the embodiments of the present disclosure in any manner, and all fall within the scope of protection of the embodiments of the present disclosure.

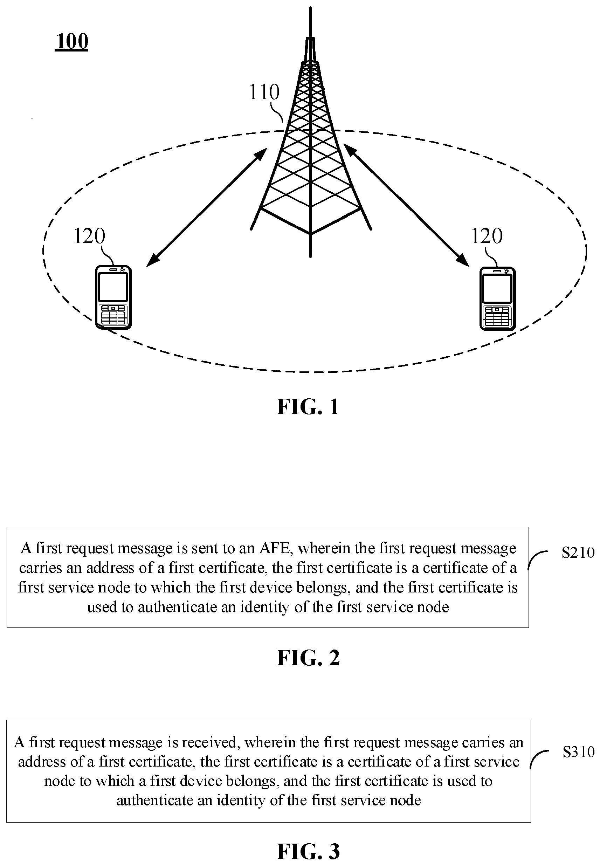

FIG. 1 exemplarily illustrates a communication system 100. The communication system 100 includes a network device 110 and two terminals 120. In a possible implementation, the communication system 100 may include a plurality of network devices 110, and the coverage range of each network device 110 may include other number of terminals 120 than two, which is not limited in the embodiments of the present disclosure. In a possible implementation, the communication system 100 may further include a mobility management entity, an access and mobility management function, and other network entities, which are not limited in the embodiments of the present disclosure. The network device may further include an access network device and a core network device. That is, the communication system may further include a plurality of core networks for communicating with access network devices. The access network device may be a base station in an LTE, LTE-A, or NR system. Taking the communication system illustrated in FIG. 1 as an example, a communication device may include a network device and a terminal having a communication function, and the communication device may further include other devices in the communication system, such as a network controller, a mobility management entity and other network entities, which is not restricted in the embodiments herein.

FIG. 2 is a schematic flowchart of an authentication method implemented by a first device according to an embodiment of the present disclosure. The method includes at least part of the following contents.

In S210, a first request message is sent to an AFE, wherein the first request message carries an address of a first certificate, the first certificate is a certificate of a first service node to which the first device belongs, and the first certificate is used to authenticate an identity of the first service node.

FIG. 3 is a schematic flowchart of an authentication method implemented by an AFE according to another embodiment of the present disclosure. The method includes at least part of the following contents.

In S310, a first request message is received, wherein the first request message carries an address of a first certificate, the first certificate is a certificate of a first service node to which a first device belongs, and the first certificate is used to authenticate an identity of the first service node.

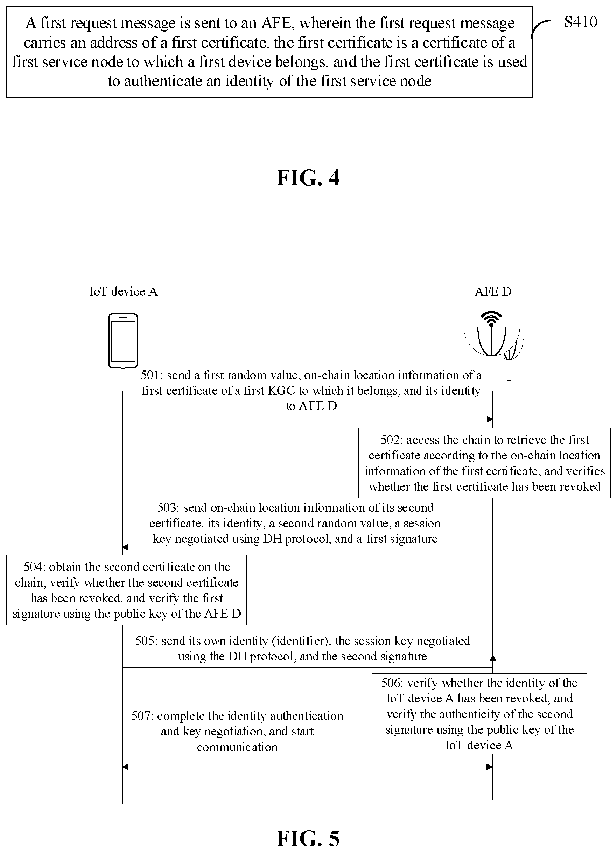

FIG. 4 is a schematic flowchart of an authentication method implemented by a second device according to another embodiment of the present disclosure. The method includes at least part of the following contents.

In S410, a first request message is sent to an AFE, wherein the first request message carries an address of a first certificate, the first certificate is a certificate of a first service node to which a first device belongs, and the first certificate is used to authenticate an identity of the first service node.

In the present disclosure, the first device is one of: a zero-power device and an Internet of Things (IoT) device. In some embodiments, the first device may be any one of: an Ambient Power-enabled IoT (AIoT) device, an active zero-power device, a passive zero-power device, a semi-passive zero-power device, and the like. In some embodiments, the first device may also be a terminal with low computing capability. In some possible implementations, the first device may be referred to as a Tag. All possible names or possible device types of the target devices are not exhausted here.

The second device may alternatively be referred to as a proxy device, a proxy node, etc., and the various possible names of the second device are not exhausted or limited herein. The second device is one of: a terminal and an access network device. The access network device may be any one of: a base station, a gNB, an eNB, an Integrated Access Backhaul (IAB) node, and the like.

In some embodiments, the second device is a terminal, and in such embodiments, the first device and the second device may communicate by transmitting a sidelink message. In some embodiments, the second device may be an access network device, and in such embodiments, the first device and the second device may communicate by transmitting an AS (Access Stratum) message.

The AFE may be deploy in at least one of: an Application Function (AF), an Access and Mobility Management Function (AMF), a Session Management Function (SMF), an Authentication Server Function (AUSF), a Unified Data Management function (UDM), a Unified Data Repository (UDR), a Home Subscriber System (HSS), an Authentication Credential Repository and Processing Function (ARPF), a Bootstrapping Server Function (BSF), a Security Anchor Function (SEAF), and a core network dedicated network element.

The AFE may refer to a network element having an authentication function (AF). The AF may include at least an AIOT group AF and/or a group AF. In some possible examples, A-NF (Network Function) may be employed to represent the A-IoT group AF and/or the group AF. In other possible examples, the AF may further include at least one of: an AF and/or group AF of a zero-power group, an AF and/or group AF of an IoT device group, and the like.

In an example, the AFE may be configured by adding an AF on the basis of the AF of an application server.

In an example, the AFE may be a newly added core network dedicated network element, and the core network dedicated network element has or is set or configured with an AF. In this example, the core network dedicated network element may be referred to as an AIOT AFE, a zero-power function dedicated AFE, a zero-power dedicated network element, a zero-power device dedicated network element, or the like, that is, the core network dedicated network element may refer to a network element having at least a zero-power related function (such as an AIOT AF), or a core network element capable of serving at least an AIOT (or a zero-power device). It should be understood that the core network dedicated network element may be independently deployed, or may be an existing core network element with added functions related to zero-power authentication (such as AFs for AIOT or tags). Not all possible scenarios are exhausted herein in this embodiment.

In an example, the AFE may be an existing core network element, and the core network element is newly added or equipped or newly configured with the AF. For example, the core network element may be added with the AF on the basis of at least one of functions: aMF, SMF, AUSF, UDM, UDR, HSS, ARPF, BSF, SEAF, etc.

In some possible implementations, the first device only needs to interact with the AFE to complete the authentication.

In an embodiment, the first request message may carry at least an address of a first certificate, the first certificate is a certificate of a first service node to which the first device belongs, and the first certificate is used to authenticate an identity of the first service node.

In the embodiment, the first device sends the first request message to the AFE, which may refer to that the first device directly sends the first request message to the AFE.

The first certificate is stored in the blockchain, and therefore, the address of the first certificate specifically refers to the address of the first certificate on the blockchain or the location information of the first certificate on the blockchain. That is, when the first device initiates the authentication, the first device carries the address of the first certificate to which the first device belongs in the first request message and sends it to the AFE.

The address of the first certificate may be obtained at the time of registration of the first device. The registration of the first device may include: the first device sends an identity certification material to the first service node (or called a first KGC), the identity certification material may include at least an identifier of the first device, and the identity certification material may be carried in a registration request; and the first device receives a private key corresponding to the first device from the first service node and the address of the first certificate of the first service node, so that the first device is successfully registered. Correspondingly, the processing of the first service node may include: when the first service node receives the identity certification material of the first device, the first service node verifies the identity certification material of the first device, and when the verification is successful, the first service node uses a key generation algorithm to generate a private key corresponding to the first device based on the master private key (for example, denoted as s) of the first service node; and the first service node sends the private key corresponding to the first device and an address of a third certificate of the first service node to the first device.

Correspondingly, receiving the first request message by the AFE may refer to receiving the first request message from the first device. Further, the processing after the AFE receives the first request message may further include: authenticating the identifier of the first service node based on the address of the first certificate.

Specifically, the action of authenticating the identifier of the first service node based on the address of the first certificate may include: the AFE searches for the first certificate on the blockchain based on the location information (or address) of the first certificate on the blockchain; when the first certificate is found and it is determined that the first certificate has not been revoked, it is determined that identity authentication of the first service node is successful. The action may further include: determining that identity authentication of the first service node fails in a case where the first certificate is not found and/or the first certificate is determined to have been revoked.

Here, the first request message may further carry auxiliary information related to the first certificate. Correspondingly, the manner of determining whether the first certificate has been revoked may include that the AFE verifies whether the first certificate has been revoked based on the auxiliary information related to the first certificate and the product of all revoked revocation factors maintained by the certificate issuance node corresponding to the first service node to which the first device belongs, and obtains a result of whether the first certificate has been revoked. The function of the auxiliary information related to the first certificate is to prove that the first certificate has not been revoked (or has been revoked), and the specific content of the auxiliary information related to the first certificate is not limited in the embodiment.

The identifier may be represented by an ID, and may include but is not limited to at least one of: a factory identifier, a factory unique identifier, an operator-issued identifier, a service provider-issued identifier, a Subscription Permanent Identifier (SUPI), a Subscription Concealed Identifier (SUCI), a Permanent Equipment Identifier (PEI), a 5G Globally Unique Temporary Identifier (5G-GUTI), an Internal-Group Identifier (IGI), a Generic Public Subscription Identifier (GPSI), a network identifier, and the like. The network identifier may include at least one of: an Internet Protocol Address (IP address), a Media Access Control (MAC) address, and the like.

In an embodiment, the first request message may be further used to trigger the AFE to perform authentication, that is, the authentication may be initiated by the first device. In yet another embodiment, authentication may be triggered by the AFE, for example, the AFE may send a message for triggering authentication to the first device before receiving the first request message from the first device, and then the first device sends the first request message.

In an embodiment, the AFE may perform authentication for the first certificate, that is, one-way authentication of the first device by the AFE. In the embodiment, when the AFE determines that the identity authentication of the first service node is successful, the AFE may start communication with the first device.

In an embodiment, when the AFE determines that the identity authentication of the first service node is successful, the AFE may further perform: sending a first response message, wherein the first response message carries information related to a second certificate, and the second certificate is used to authenticate the identifier of the AFE. The second certificate carries a public key of the AFE.

The action of sending the first response message includes: sending the first response message to the first device.

The information related to the second certificate includes one of the following: an address of the second certificate, and the second certificate.

The second certificate and the address of the second certificate may be obtained at the time of registration of the AFE. The registration process of the AFE may include: the AFE submits an identifier (such as ID), a public key (e.g., denoted as PK) and other public information of the AFE and a signature (e.g., denoted as *σ*) of the above information to the issuance node; and the AFE receives location information of the second certificate on the blockchain from the issuance node. Here, the AFE may also receive the second certificate from the issuance node. Correspondingly, the processing of the issuance node may include: after the issuance node verifies the identifier of the AFE (that is, the identifier and the public key of the AFE) and other information, the issuance node signs the AFE with the private key of the issuance node to complete the generation of the second certificate of the AFE; the issuance node uploads the generated second certificate to the blockchain, and obtains the location information of the second certificate on the blockchain; and the issuance node issues the second certificate to the AFE and sends the location information of the second certificate on the blockchain to the AFE.

Correspondingly, the processing of the first device may further include: receiving a first response message from the AFE, wherein the first response message carries information related to the second certificate, and the second certificate is used to authenticate the identifier of the AFE.

The method may further include one of: authenticating the identity of the AFE based on the address of the second certificate; and authenticating the identity of the AFE based on the second certificate.

Optionally, authenticating the identifier of the AFE based on the address of the second certificate may include: the first device searches for the second certificate on the blockchain based on the location information (or address) of the second certificate on the blockchain; when the second certificate is found and it is determined that the second certificate has not been revoked, the first device determines that the identity authentication of the AFE is successful. In addition, the first device may further perform: determining that the identity authentication of the AFE fails in a case of failing to find the second certificate and/or determining that the second certificate has been revoked.

Optionally, the action of authenticating the identifier of the AFE based on the second certificate may include: determining that the identity authentication of the AFE is successful when the first device determines that the second certificate has not been revoked. In addition, the first device may further peform: determining that the identity authentication of the AFE fails in a case where it is determined that the second certificate has been revoked.

Here, the first response message may further carry auxiliary information related to the second certificate, and the manner for the first device to determine whether the second certificate has been revoked may include: the first device verifies whether the second certificate has been revoked based on the auxiliary information related to the second certificate and the product of all revoked revocation factors maintained by the certificate issuance node corresponding to the AFE, and obtains a result of whether the second certificate has been revoked. The function of the auxiliary information related to the second certificate is to prove that the second certificate has not been revoked (or has been revoked), and the specific content of the auxiliary information related to the second certificate is not limited in this embodiment.

In an embodiment, the AFE may perform authentication for the first certificate and the first device may perform authentication for the second certificate of the AFE, that is, bidirectional certificate authentication between the AFE and the first device. In this case, after the AFE determines that the identity authentication of the first service node is successful, in a case where the first device determines that the identity authentication of the AFE is successful, the first device and the AFE may start communication.

In some possible implementations, signature-related authentication may also be added between the first device and the AFE.

In the embodiment, the first response message may further carry a first signature for authenticating the AFE. On the AFE side, the first signature is calculated based on a private key of the AFE. Correspondingly, the processing on the first device side may further include: authenticating the AFE based on the public key of the AFE and the first signature.

Here, the action of authenticating the AFE by the first device based on the public key of the AFE and the first signature may be performed after the first device determines that the identity authentication of the AFE is successful.

In an embodiment, the first signature may be calculated based on a first parameter and a private key of the AFE, wherein the first parameter includes at least one of: a security parameter of the AFE and an identifier of the AFE.

In this case, the first response message further carries at least one of: the security parameter of the AFE and the identifier of the AFE.

The content carried in the first response message may be completely or partially related to the first parameter. In an example, the content carried in the first response message may be all related to the first parameter, for example, the first parameter includes the identifier of the AFE and the security parameter of the AFE, and the first response message includes the identifier of the AFE and the security parameter of the AFE in addition to the first signature. In an example, the content carried in the first response message may be partially related to the first parameter, for example, the first parameter may include the identifier of the AFE and the security parameter of the AFE, but the first response message may only carry the security parameter of the AFE. For another example, the first parameter may include the security parameter of the AFE, but the first response message may carry the identifier of the AFE and the security parameter of the AFE. It should be understood that the above is merely an exemplary description, and in actual processing, as long as the first response message carries at least the security parameter of the AFE and the first parameter includes at least the security parameter of the AFE, it falls within the scope of protection of the embodiment, and not all possible situations are limited or exhausted here.

Here, the private key of the AFE may be pre-configured, and the acquisition method thereof is not limited in this embodiment.

In an example, the first parameter may include the security parameter of the AFE. The security parameter of the AFE is used to obtain a session key in combination with the security parameter of the first device, and the session key is used for communication between the first device and the AFE. The security parameter may also be referred to as a key generation parameter, or a security calculation parameter, etc., and in some possible examples, the security parameter may be represented as a Diffie-Hellman (DH) parameter.

The process of calculating the first signature by the AFE may include: the AFE obtains the first signature by using a signature algorithm to calculate the security parameter of the AFE based on the private key of the AFE. The signature algorithm may include at least one of: an RSA algorithm, an SM2 algorithm, a JSON Web Signatures (JWS) algorithm, an elliptic curve-based signature algorithm, and the like. The SM2 algorithm is a domestic algorithm promulgated by the State Cryptography Administration of China (SCA), and is an asymmetric algorithm based on elliptic curves. Signature algorithms are not exhausted or limited herein.

For example, calculating the first signature by the AFE may be expressed as *Sig(X_{D}* · *P*), where Sig () denotes the signature algorithm and *X_{D}* · *P* denotes the DH parameter of the AFE.

The action of the AFE obtaining the first signature by using a signature algorithm to calculate the security parameter of the AFE based on a private key of the AFE may include: the AFE adopts the signature algorithm, performs hash calculation on the security parameter of the AFE to obtain a first hash value, and encrypts the first hash value based on the private key of the AFE to obtain the first signature. For example, it can be expressed as *Sig(H(X_{D}* · *P)),* where H () represents the hash calculation, and other contents in the formula have the same meaning as those in the the above embodiments, and will not be repeated here. Here, the hash calculation may be a Secure Hash Algorithm (SHA), and more specifically, the SHA may be SHA-256. It should be understood that this is only an exemplary description, and as long as any hash calculation algorithm is adopted in actual processing, it falls within the scope of protection of this embodiment, and not all possible hash calculation algorithms are exhausted or limited here.

In an example, the first parameter may include the security parameter of the AFE and an identifier of the AFE.

The process of calculating the first signature by the AFE may include: using a signature algorithm to obtain the first signature by calculating the security parameter of the AFE and the identifier of the AFE on the basis of the private key of the AFE. For example, it may be expressed as *Sig*(*ID_{D}*, *X_{D}* · *P*), *ID_{D}* represents the identifier of the AFE, and other contents in the formula have the same meaning as those in the the above embodiments, and the description thereof will not be repeated.

The process of using a signature algorithm to obtain the first signature by calculating the security parameter of the AFE and the identifier of the AFE on the basis of the private key of the AFE may include: performing hash calculation on the security parameter of the AFE and the identifier of the AFE using the signature algorithm to obtain a first hash value, and encrypting the first hash value based on the private key of the AFE to obtain the first signature. For example, it may be denoted as *Sig*(*H*(*ID_{D}*, *X_{D}* · *P*)), the meaning of contents in the formula is the same as that in the above embodiment, and will not be repeated.

In an embodiment, the first parameter may include at least one of: an identifier of the first device, a first random value, and a second random value in addition to at least one of the security parameter of the AFE and the identifier of the AFE.

The first request message may further carry at least one of: the identifier of the first device, and the first random value. Here, the first random value may be generated by the first device, and the generation method thereof is not limited in the embodiment.

The first response message may also carry the second random value. The second random value may be generated by the AFE, and the generation method thereof is not limited in the embodiment.

Optionally, the first parameter may include the security parameter of the AFE and the identifier of the first device.

The process of calculating the first signature by the AFE may include: using a signature algorithm to obtain the first signature by calculating the security parameter of the AFE and the identifier of the first device on the basis of the private key of the AFE. For example, it may be expressed as *Sig*(*ID_{A}, X_{D}* · *P*), where *ID_{A}* represents the identifier of the first device, and other contents in the formula have the same meaning as those in the the above embodiments, and will not be repeated.

The process of using a signature algorithm to obtain the first signature by calculating the security parameter of the AFE and the identifier of the first device on the basis of the private key of the AFE may include that the AFE uses the signature algorithm to perform hash calculation on the security parameter of the AFE and the identifier of the first device to obtain a first hash value, and encrypts the first hash value based on the private key of the AFE to obtain the first signature. For example, it may be expressed as *Sig*(*H*(*ID_{A}*, *X_{D}* · *P*))*,* and the meaning of each content in the formula is the same as that in the the above embodiments, which will not be repeated here.

Optionally, the first parameter may include the security parameter of the AFE, the identifier of the AFE, the identifier of the first device, the second random value, and the first random value.

The process of calculating the first signature by the AFE may include: using a signature algorithm to obtain the first signature by calculating the security parameter of the AFE, the identifier of the AFE, the identifier of the first device, the second random value, and the first random value based on the private key of the AFE. For example, it may be expressed as *Sig*(*N _{A}, N _{D}*, *ID _{A}*, *ID_{D}, X _{D}* · *P*), where Sig () represents the signature algorithm, *N _{A}* represents the second random value, and *N _{D}* represents the first random value. Other contents in the formula have the same meaning as those in the the above embodiments, and will not be repeated.

The process of using a signature algorithm to obtain the first signature by calculating the security parameter of the AFE, the identifier of the AFE, the identifier of the first device, the second random value, and the first random value based on the private key of the AFE may include: using the signature algorithm to to perform hash calculation on the security parameter of the AFE, the identifier of the AFE, the identifier of the first device, the second random value, and the first random value to obtain a first hash value, and encypting the first hash value based on the private key of the AFE to obtain the first signature. For example, the calculation of the first signature may be expressed as *Sig*(*H*(*N _{A}*, *N _{D}, ID _{A}, ID_{D}, X_{D}* · *P*)), and the meaning of the contents in the formula is the same as that in the the above embodiments, and will not be repeatedly described.

It should be understood that the above description is an exemplary description of calculating the first signature. The calculation method of the first signature is not limited or exhausted herein, nor are all possible combinations of the contents of the first parameter involved in the calculation of the first signature. As long as at least one content of the aforementioned first parameter is used when actually calculating the first signature, it shall fall within the protection scope of this embodiment.

Correspondingly, the process of the first device authenticating the AFE based on the public key of the AFE and the first signature may include: authenticating the AFE based on the first parameter, the public key of the AFE, and the first signature, the first parameter including at least one of: the security parameter of the AFE, and the identifier of the AFE.

Here, the public key of the AFE is carried in the second certificate, and the manner of obtaining the second certificate has been described in detail in the the above embodiments, and will not be repeated here.

Optionally, the first device may determine the first parameter based on the first response message, and the first parameter may be fully or partially related to the first response message. The first response message further carries at least one of: the security parameter of the AFE and the identifier of the AFE.

In an example, the first response message carries the security parameter of the AFE only, in which case, the first device may use only the security parameter of the AFE as the first parameter. In an example, the first response message carries the security parameter of the AFE only, in which case, the first device may have obtained the identifier of the AFE in advance, and then may use both the identifier of the AFE and the security parameter of the AFE together as the first parameter. In an example, the first response message carries the identifier of the AFE and the security parameter of the AFE, and the first device may use only the security parameter of the AFE as the first parameter, or the first device may use both the identifier of the AFE and the security parameter of the AFE as the first parameter. It should be understood that the above is only an exemplary description, and in actual processing, as long as the first device and the AFE can use the same first parameter, it shall fall within the scope of protection of the present embodiment. Not all possible situations are limited or exhausted here.

Optionally, the first device may determine the first parameter based on the first response message and the first request message, and the first parameter may be fully or partially related to the first response message and the first request message. The first parameter may include at least one of the identifier of the first device, the first random value and the second random value in addition to at least one of the security parameter of the AFE and the identifier of the AFE. The identifier of the first device and the first random value may be carried in the first request message sent by the first device, and the second random value may be carried in the first response message.

In an embodiment, the action of authenticating the AFE based on the first parameter, the public key of the AFE and the first signature may include: the first device decrypts the first signature using a signature verification algorithm based on the public key of the AFE to obtain first decrypted information, and authenticates the AFE based on the first decrypted information and the first parameter.

Optionally, the first decrypted information may include a first parameter to be verified that is of the same type as each content in the first parameter. The action of authenticating the AFE based on the first decrypted information and the first parameter may include one of: determining that the authentication of the AFE is successful when the first parameter to be verified and the first parameter are the same; and when the first parameter to be verified and the first parameter are different, determining that the authentication of the AFE fails. In this embodiment, the composition contents of the first parameter have been described in detail in the above embodiments, and the will not be repeated.

Optionally, the first decrypted information may include a first decryption hash value. The action of authenticating the AFE based on the first decrypted information and the first parameter may include: performing hash calculation on the first parameter by the first device to obtain a first verification hash value; and authenticating the AFE based on the first decryption hash value and the first verification hash value.

The action of authenticating the AFE based on the first decryption hash value and the first verification hash value may include at least one of: determining that authentication of the AFE is successful when the first decryption hash value and the first verification hash value are the same; and when the first decryption hash value and the first verification hash value are different, determining that authentication of the AFE fails. In this embodiment, the composition content of the first parameter has been described in detail in the above embodiments, and will not be repeated.

Optionally, before the first device authenticates the AFE, the processing of the first device may further include: verifying whether the AFE has been revoked based on the identifier of the AFE carried in the first response message. Here, verifying whether the second device has been revoked may refer to that the first device searches for a state of the identifier of the AFE on the blockchain, and determines that the AFE has not been revoked when the state corresponding to the identifier of the AFE stored on the blockchain has not been revoked, and otherwise determines that the AFE has been revoked. Further, when it is determined that the AFE has not been revoked, the first device may continue the subsequent process of authenticating the AFE, and the description thereof will not be repeated here.

In some possible implementations, the processing of the first device may further include: sending a third request message to the AFE, wherein the third request message carries a second signature for authenticating the first device, the second signature being calculated based on a private key of the first device.

Specifically, sending the third request message to the AFE may refer to that the first device sends the third request message to the AFE when it is determined that the authentication of the AFE is successful.

Optionally, when the first device determines that the authentication of the AFE is failed, the processing of the first device may further include: the first device the processing is terminated, or sends an indication that the authentication of the AFE is failed to the AFE.

Optionally, in a case where the first device determines that the authentication of the AFE is successful, the processing of the first device may further include: the first device sends a third request message to the AFE. In an example, the first device may implicitly indicate to the AFE that the authentication of the AFE is successful by carrying the second signature in the third request message. In an example, the first device may carry an explicit indication to indicate to the AFE that the authentication for the AFE is successful in addition to carrying the second signature in the third request message.

In an embodiment, the second signature may be calculated based on a second parameter and the private key of the first device. The second parameter includes at least one of: the identifier of the first device and the security parameter of the first device. The third request message further carries at least one of: the identifier of the first device and the security parameter of the first device.

The content carried in the third request message may be completely or partially related to the second parameter. In an example, the content carried in the third request message may be all related to the second parameter, for example, the second parameter includes the identifier of the first device and the security parameter of the first device, and the third request message carries the identifier of the first device and the security parameter of the first device in addition to the first signature. In an example, the content carried in the third request message may be partially related to the second parameter, for example, the second parameter may include the identifier of the first device and the security parameter of the first device, while the third request message may only carry the security parameter of the first device. For another example, the second parameter may include the security parameter of the first device, while the third request message may carry the identifier of the first device and the security parameter of the first device. It should be understood that the above is only an exemplary description, and in actual processing, as long as the third request message carries at least the security parameter of the first device and the second parameter includes at least the security parameter of the first device, it shall fall within the scope of protection of the embodiment, and not all possible situations are limited or exhausted here.

Here, the private key of the first device may be obtained at the time of registration of the first device. The registration of the first device has been described in detail in the the above embodiments, and the will not be repeated.

The function of the security parameter of the first device may be for obtaining a session key in combination with the security parameter of the AFE, and the session key is used for communication between the first device and the AFE.

The manner of the first device calculating the second signature may be that the first device calculates the second signature using a signature algorithm based on the private key of the first device and the second parameter. Specifically, the first device may calculate the second parameter based on the private key of the first device to obtain the second signature.

For example, the second parameter may include the identifier of the first device and the DH parameter of the first device. The process of the first device calculating the second signature may be denoted as *Sig*(*ID _{A}, X_{A} · PID_{A}* represents the identifier of the first device, and *X _{A}* · *P* represents the DH parameter of the first device. In this case, the second signature is generated based on the identifier of the first device, and the function of the second signature may at least be to authenticate the first device; moreover, the second signature is generated based on the DH parameter of the first device, so that the second signature not only has the function of authenticating the first device, but also has the function of authenticating the validity, integrity and the like of the DH parameter of the first device.

The signature algorithm may include hash calculation and encryption calculation. Correspondingly, the process of the first device calculating the second parameter based on the private key of the first device to obtain the second signature may include: the first device performs hash calculation on the second parameter to obtain a second hash value, and encrypts the second hash value based on the private key of the first device to obtain the second signature. For example, the second parameter may include the identifier of the first device and the DH parameter of the first device. The process of the first device calculating the second signature may be expressed as *Sig*(*H*(*ID _{A}, X _{A}* · *P*)), where Sig () represents the signature algorithm, and other contents in the formula have the same meaning as those in the foregoing embodiments, and will not be repeated.

It should be pointed out that the above is merely an exemplary description, and in some other possible examples, the second parameter may only include the DH parameter of the first device as the actual requirement is adjusted.

In an embodiment, in addition to the identifier of the first device and/or the security parameter of the first device, the second parameter may further include at least one of the identifier of the AFE and the second random value. Here, both the identifier of the AFE and the second random value may be carried in the first response message.

For example, the second parameter may include the identifier of the first device, the DH parameter of the first device, the identifier of the AFE, and the second random value. The process of the first device calculating the second signature may be expressed as *Sig*(*N _{D}, ID_{D}, ID _{A}, X _{A}* · *P*), where *N _{D}* represents the second random value, *ID_{D}* represents the identifier of the AFE, and the remaining contents in the formula have the same meaning as those in the the above embodiments, and will not be repeated. Alternatively, the process of the first device calculating the second signature may be expressed as *Sig*(*H*(*N _{D}*, *ID_{D}, ID _{A}, X _{A}* · *P*)), where the meaning of each content in the formula is the same as that in the above embodiments, and will not be repeated.

In such an example, by signing the identifier *ID_{D}* of the AFE, it may enable the AFE to determine that the first device has received the first response message sent by the AFE. Signing the *ID_{A}* may cause the AFE not to consider the corresponding third request message to be a spam message, and cause the AFE to determine that such a message is sent to the AFE by the first device. When signing the second random value, the second random value may be a fresh value, and the function of the fresh value may be to determine that a corresponding message is not a replay message. Signing the security parameter of the first device is intended to prevent man-in-the-middle attacks inherent in the Diffie-Hellman key exchange protocol itself.

It should be understood that the above are all exemplary descriptions of calculating the second signature. Neither the calculation manner of the second signature nor all possible combinations of the contents of the second parameter involved in the calculation of the second signature are limited or enumerated herein. As long as at least one type of content among the aforementioned second parameter is used when actually calculating the second signature, it shall fall within the protection scope of this embodiment.

The processing of the AFE may include: receiving a third request message from the first device, wherein the third request message carries the second signature for authenticating the first device.

Further, the processing of the AFE may further include: authenticating the first device based on the public key of the first device and the second signature.

In an embodiment, the third request message may further carry at least one of: the identifier of the first device and the security parameter of the first device.

The process of authenticating the first device based on the public key of the first device and the second signature may include: authenticating the first device based on the second parameter, the public key of the first device and the second signature, wherein the second parameter includes at least one of the identifier of the first device and the security parameter of the first device.

In an example, the AFE may determine the second parameter based on the third request message, and the second parameter may be fully or partially related to the third request message. In an example, the third request message carries only the security parameter of the first device, and in this case, the AFE may only use the security parameter of the first device as the second parameter. In an example, the third request message carries only the security parameter of the first device, and in this case, the AFE may obtain the identifier of the first device in advance, and then may use the identifier of the first device and the security parameter of the first device together as the second parameter. In an example, the third request message carries the identifier of the first device and the security parameter of the first device, and the AFE may only use the security parameter of the first device as the second parameter, or may use both the identifier of the first device and the security parameter of the first device as the second parameter.

In an example, the AFE may determine the second parameter based on the first response message and the third request message, the second parameter being fully or partially related to the first response message and the second request message. That is, when the first response message carries at least one of the second random value and the identifier of the AFE, the AFE may add at least one of the second random value and the identifier of the AFE to the second parameter in addition to adding the identifier of the first device and/or the security parameter of the first device to the second parameter.

It should be understood that the above is only an exemplary description, and in actual processing, as long as the first device and the AFE use the same second parameter, it shall within the scope of protection of the embodiment, and no all possible situations are limited or exhausted here.

In an embodiment, the process of authenticating the first device based on the second parameter, the public key of the first device, and the second signature may include: decrypting the second signature using a signature verification algorithm based on the public key of the first device to obtain second decrypted information, and authenticating the first device based on the second decrypted information and the second parameter.

Here, the public key of the first device includes the identifier of the first device. Further, in the process of verifying the second signature, a master public key of the first service node to which the first device belongs may be used, and the master public key of the first service node is stored in the first certificate (or carried by the first certificate). That is, the process of decrypting the second signature using the signature verification algorithm based on the public key of the first device to obtain the second decrypted information may include: using the signature verification algorithm to decrypt the second signature based on the public key of the first device and the master public key of the first service node to obtain the second decrypted information. The manner of using the public key of the first device and the master public key of the first service node to verify the second signature is not limited in this embodiment.

Optionally, the second decrypted information may include a second parameter to be verified that is of the same type as each content type in the second parameter. The process of authenticating the first device based on the second decrypted information and the second parameter may include one of: determining that the authentication of the first device is successful when the second parameter to be verified and the second parameter are the same; and when the second parameter to be verified and the second parameter are different, determining that authentication of the first device is failed. In the embodiment, the composition of the second parameter has been detailed in the above embodiments, and will not be repeated.

Optionally, the second decrypted information may include a second decryption hash value. Authenticating the first device based on the second decrypted information and the second parameter may include: performing hash calculation on the second parameter to obtain a second verification hash value, and authenticating the first device based on thesecond decryption hash value and the second verification hash value.

The process of authenticating the first device based on the second decryption hash value and the second verification hash value may include at least one of: determining that authentication of the first device is successful when the second decryption hash value and the second verification hash value are the same; and determining that authentication of the first device is failed when the second decryption hash value and the second verification hash value are different. In the embodiment, the composition of the second parameter has been detailed in the above embodiments, and will not be repeated.

In some possible implementations, the first device and the AFE may complete negotiation for the first session key in the process of authentication.

In a case where the AFE determines that authentication of the first device is successful, the processing of the AFE may further include: calculating a first session key based on the security parameter of the AFE and the security parameter of the first device, wherein the first session key is used for communication between the first device and the AFE.

The processing of the first device may further include: calculating the first session key based on the security parameter of the AFE and the security parameter of the first device, wherein the first session key is used for communication between the first device and the AFE. It should also be pointed out that the first device may calculate the second signature after calculating the first session key; or, after the first device may calculate the first session key after successfully authenticating the AFE.

Here, the first session key is used for communication between the first device and the AFE, and may refer to at least one of: the first session key is used for the first device to encrypt a message sent to the AFE; the first session key is used for the AFE to decrypt a message sent by the first device; the first session key is used for an AFE to encrypt a message sent to the first device; the first session key is used by the first device to decrypt a message sent by the AFE; the first session key is used by the first device to provide integrity protection for a message sent to the AFE; the first session key is used for the AFE to perform integrity protection verification on a message sent by the first device; the first session key is used for the AFE to provide integrity protection for a message sent to the first device; the first session key is used for the first device to perform integrity protection verification on a message sent by the AFE; and the first session key is used to generate a derivative key between the AFE and the first device, wherein the derivative key may include an integrity-protection key and/or a security key, etc. All possible cases in which the first session key is used for communication between the first device and the AFE are not exhausted or limited herein.

FIG. 5 illustrates the above authentication method by denoting the first device as the IoT device A and denoting the AFE as the AFE D as an example. In the scenario shown in FIG. 5, assuming that the IoT device A has the capability of finding a certificate on the blockchain, the IoT device A may find the certificate of the AFE D on the blockchain; Since the AFE D typically is capable of being uploaded to the blockchain, the AFE D may accesses the blockchain to search for the first certificate of the KGC (that is, the first service node in the above embodiments) to which the IoT device A belongs, and perform on-chain verification to determine whether the identity of the IoT device A has been revoked. It is assumed that the IoT device A is directly connected to the network without a proxy. The IoT device A is by default in the Identity-Based Cryptograph (IBC) cryptography system, the network device is by default in the Public Key Infrastructure (PKI) system, and the AFE D acts as an IoT device in the two-tier architecture (the registration and credential verification processes are consistent with those of the KGC). During the mutual authentication, the IoT device needs to provide the certificate of the KGC to which it belongs to to the AFE D to prove the legitimacy of the identity of the IoT device. Similarly, the AFE D also needs to provide its own certificate to the IoT device A to prove the legitimacy of its identity. Since the certificate of the KGC is stored on the blockchain, the IoT device A itself only needs to store the address of the certificate of the KGC on the chain, and the verifier may search for the certificate at the corresponding location based on the address.

In the scenario shown in FIG. 5, it is further assumed that the IoT device A is to perform mutual authentication with the AFE D (direct authentication between A and D), and the IoT device A has the capability to search for certificates on the chain, which specifically includes the following processing flow.

Step 501 includes: the IoT device A sends a first random value *N _{A}*, on-chain location information add_{KGC} of a first certificate of a first KGC to which the IoT device A belongs, and an identity (i.e., identifier *ID _{A}*) to the AFE D. The content sent by the IoT device A to the AFE D in this step may be carried in the first request message in the the above embodiments, and may be expressed as " A→D:N_{A},ID_{A}, add_{KGC}".

Step 502 includes: after receiving the message from the IoT device A, the AFE D accesses the chain to retrieve the first certificate according to the on-chain location information add_{KGC} of the first certificate, and verifies whether the first certificate has been revoked; if the first certificate is found and has not been revoked, step 503 is executed; otherwise, the processing is terminated.

Step 503 includes: the AFE D sends on-chain location information add*_{D}* of a second certificate (or directly sends the second certificate) of the AFE D, an identity ID_{D} of the AFE D, a second random value *N _{D}*, a session key X_{D}•P negotiated using the DH protocol (that is, the security parameter of the AFE), and a first signature to the IoT device A.

The generation process of the first signature is as follows: the AFE D uses a signature algorithm to sign (N_{A}, N_{D}, ID_{A},ID_{D}, X_{D}•P) with a private key sk_{D}. The purpose of signing the fresh value *N _{A}* with the private key is to enable the IoT device A to authenticate that the message received by itself is not a replay but indeed a message from the AFE D, and signing *ID _{A}* with the private key indicates that the AFE D has received the message sent by the IoT device A. Signing of N_{A} and ID_{A} is optional.

In this step, the content sent by the AFE D to the IoT device A may be carried in the first response message in the foregoing embodiments, and may be expressed as " D→A:N_{D}, add_{D},ID_{D}, X_{D}•P,Sig(N_{A}, N_{D}, ID_{A},ID_{D}, X_{D}•P)".

Step 504 includes: after receiving the message from the AFE D, if the IoT device A receives the location information add*_{D}* of the second certificate on the chain, the IoT device A obtains the second certificate (if the second certificate is received, the second certificate is directly obtained) on the chain; the IoT device A verifies whether the second certificate has been revoked, and if not revoked, the IoT device A verifies the first signature using the public key of the AFE D; further, if the authentication of the first signature is successful (that is, the authentication of the AFE D is successful), step 505 is executed, otherwise, the processing ends.

The process of verifying the first signature is: the IoT device A uses the public key (pk_D) of the AFE D to verify the authenticity of the first signature of AFE D.

When the first signature is successfully verified (i.e., the authentication of the AFE is successful), the IoT device A completes the negotiation for the first session key, and the specific method thereof is to generate the first session key by using X_{D}•P, X_{A}•P negotiated by the DH protocol (i.e., security parameter of the IoT device).

Step 505 includes: the IoT device A sends its own identity (identifier ID_{A}), the session key X_{A}•P negotiated using the DH protocol (that is, the security parameter of the IoT device), and the second signature to the AFE D. The ID_{A} may be optionally sent, and the identity of the AFE may also be optionally sent (*ID_{D}*).

In this step, the generation process of the second signature is: the IoT device A uses a signature algorithm and its own private key (sk_{A}) to sign (N_{D}, ID_{A} , ID_{D} , X_{A} •P) (or expressed as Hash (N_{D}, ID_{A},ID_{D}, X_{A}•P)); the purpose of signing *N _{D}* is to enable the AFE D to authenticate that the message received by itself is not a replayed message but does come from the IoT device A, and signing the identifier *ID_{D}* of the AFE with the private key indicates that the IoT device A has received the message from the AFE D; signing of N_{D} and ID_{D} are optional.

In this step, the content sent by the IoT device A to the AFE D may be carried in the third request message in the the above embodiments, and may be expressed as, for example, " A→D:ID_{A},X_{A}•P,Sig(N_{D}, ID_{A},ID_{D},X_{A} • P)".

Step 506 includes: after the AFE D receives the message from the IoT device A, the AFE D may verify whether the identity of the IoT device A has been revoked, and if not yet revoked, the AFE D may verify the authenticity of the second signature using the public key pk_{A} (i.e. ID_{A}) of the IoT device A through an IBC algorithm.

Step 507 includes: communication is started after completing identity authentication and key negotiation. Specifically, when the authentication is successful (that is, the authentication of the IoT device A is successful), the negotiation for the first session key is completed, and the specific method of negotiation for the first session key is to generate the first session key using the session key X_{D}•P,X_{A}•P negotiated by the DH protocol.

In some possible examples, in conjunction with FIG. 5, only one-way certificate authentication may be performed between the IoT device A and the AFE D, that is, only steps 501 to 502 may be performed. The step 501 may be replaced with a process that the IoT device A sends the on-chain location information add_{KGC} of the first certificate of the first KGC to which it belongs, and the identity (i.e., identifier) (optionally) to the AFE D. The step 502 may be replaced with a process that after receiving the message from the IoT device A, the AFE D accesses the chain to retrieve the first certificate according to the location information add_{KGC} of the first certificate on the chain, and verifies whether the first certificate has been revoked, and if the first certificate is found and has not been revoked, the AFE D and the IoT device A may start communication. That is, the one-way authentication can be completed only if the AFE D completes the identity authentication of the IoT device A.

In some possible examples, in conjunction with FIG. 5, only mutual certificate authentication may be performed between the IoT device A and the AFE D, that is, only steps 501 to 504 may be performed. The step 501 may be replaced with a process that the IoT device A sends the on-chain location information add_{KGC} of the first certificate of the first KGC to which it belongs, and the identity (i.e., identifier) (optionally) to the AFE D. The step 502 may be replaced with a process that after receiving the message from the IoT device A, the AFE D accesses the chain to retrieve the first certificate according to the location information add_{KGC} of the first certificate on the chain, and verifies whether the first certificate has been revoked, and if the first certificate is found and has not been revoked, step 503 is executed. The step 503 may be replaced with a process that the AFE D sends the on-chain location information add*_{D}* of its second certificate (or directly sends the second certificate) to the IoT device A. Correspondingly, the step 504 may be replaced with a process that after receiving the message from the AFE D, if the IoT device A receives the on-chain location information add*_{D}* of the second certificate, the IoT device A obtains the second certificate (if the second certificate is received, the second certificate is directly obtained) on the chain, and verifies whether the second certificate has been revoked, and if not yet revoked, the IoT device A successfully authenticates the identity of the AFE D and may start communication. That is, it is only required to complete mutual identity authentication between the AFE D and the IoT device A.

In a possible example, before executing step 501 in FIG. 5, the process may further include: the AFE sends a message (or information) for triggering authentication to the IoT device A; correspondingly, the IoT device A executes step 501 after receiving the message for triggering authentication.

In some possible implementations, the first device does not have the capability of being uploaded to the blockchain, and in this case, the second device is required to act as a proxy to assist the first device in completing the authentication of the second certificate of the AFE.

In the embodiment, the first device still sends the first request message to the AFE, and the first request message may carry at least the address of the first certificate. The authentication of the first certificate by the AFE after receiving the first request message is the same as that in the above embodiments, and will not be repeated here.

In an embodiment, the first request message may be further used to trigger the AFE to perform authentication, that is, the authentication may be initiated by the first device. In another embodiment, the authentication may be triggered by the AFE, for example, the AFE may send a message for triggering authentication to the first device before receiving the first request message from the first device, and then the first device sends the first request message.

In an embodiment, the authentication performed by the AFE on the first certificate is one-way authentication performed by the AFE for the first device. In the embodiment, if the AFE determines that the identity authentication of the first service node is successful, the AFE may start communication with the first device.

In an embodiment, when the AFE determines that the identity authentication of the first service node is successful, the AFE sends a first response message carrying information related to the second certificate to the first device. Correspondingly, the first device receives the first response message from the AFE, and the first response message carries the information related to the second certificate. The process of the AFE carrying the information related to the second certificate in the first response message is the same as that in the above embodiments, and will not be repeated here.

Since the first device does not have the on-chain capbility, the processing after the first device receives the first response message from the AFE may further include: the first device sends a second request message to a second device, wherein the second request message carries the information related to the second certificate.

The processing of the second device may include: receiving a second request message from the first device, wherein the second request message carries the information related to the second certificate, and the second certificate is used to authenticate the identity of the AFE.

The information related to the second certificate includes one of the following: an address of the second certificate, and the second certificate.

The process of the second device further includes one of: authenticating the identity of the AFE based on the address of the second certificate; Authenticating the identity of the AFE based on the second certificate.

Optionally, the process of the second device authenticating the identity of the AFE based on the address of the second certificate may include: the second device searches for the second certificate on the blockchain based on location information (or address) of the second certificate on the blockchain; when the second certificate is found and it is determined that the second certificate has not been revoked, the second device determines that the identity authentication of the AFE is successful. In addition, the process may further include: the second device determines that the identity authentication of the AFE fails when the second certificate is not found and/or it is determined that the second certificate has been revoked.

Optionally, the process of the second device authenticating the identity of the AFE based on the second certificate may include: determining that the identity authentication of the AFE is successful when the second device determines that the second certificate has not been revoked. In addition, the process may further include: the second device determines that the identity authentication of the AFE fails when it is determined that the second certificate has been revoked.

Here, the first response message may further carry auxiliary information related to the second certificate, and the corresponding second request message may also carry the auxiliary information related to the second certificate. The method in which the second device determines whether the second certificate has been revoked may include: the second device verifies whether the second certificate has been revoked based on the auxiliary information related to the second certificate and the product of all revoked revocation factors maintained by the certificate issuance node corresponding to the AFE, and obtains a result of whether the second certificate has been revoked. The function of the auxiliary information related to the second certificate is to prove that the second certificate has not been revoked (or has been revoked), and the specific content of the auxiliary information related to the second certificate is not limited in this embodiment.

After the second device determines that the identity authentication of the AFE is successful, the processing of the second device may further include: sending a second response message to the first device, wherein the second response message carries a public key of the AFE, and the public key of the AFE is carried in the second certificate. Correspondingly, the processing of the first device may further include: receiving the second response message from the second device, wherein the second response message carries the public key of the AFE.

When it is determined that the identity authentication of the AFE is successful, the second device may extract the public key of the AFE from the second certificate, add the public key of the AFE to the second response message and send the public key of the AFE to the first device.

Optionally, the second device may implicitly indicate to the first device an authentication result of successful authentication of the identity of the AFE by carrying the public key of the AFE in the second response message.

Optionally, the second device may explicitly indicate an identity authentication result for the AFE to the first device. For example, the second device may carry, in addition to the public key of the AFE in the second response message, indication information for indicating an authentication result of successful authentication of the identity of the AFE.

In an embodiment, after the AFE determines that the identity authentication of the first service node is successful, if the first device receives a second response message from the second device and determines that the identity authentication of the AFE is successful based on the second response message, the first device and the AFE may start communication.

In an embodiment, after the first device receives the second response message from the second device, the first device may perform authentication related to the signature between the the AFE and itself. In this embodiment, the processes of calculating and sending the first signature by the AFE, receiving and verifying the first signature by the first device, calculating and sending the second signature by the first device, and receiving and verifying the second signature by the AFE are the same as those in the foregoing embodiments, and thus is repeated here.

In an embodiment, the first device and the AFE may complete the negotiation of the first session key during the authentication. In the embodiment, the processing related to the calculation of the first session key by the first device and the AFE is also the same as that in the foregoing embodiments, and is repeated here.

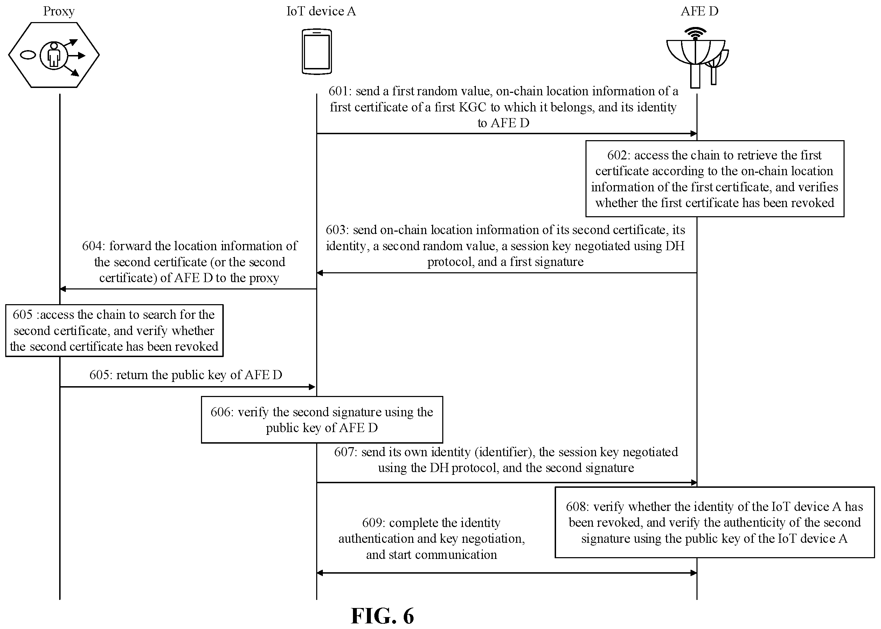

FIG. 6 illustrates the above authentication method by an example of denoting the first device as the IoT device A, denoting the AFE as the AFE D, and denoting the second device as the proxy. In the scheme of FIG. 6, it is assumed that the IoT device A does not have the on-chain capbility, and entrusts the proxy to help it to access the chain to search for a certificate and complete the certificate verification calculation. It is assumed that a trust relationship has been established between the proxy and the IoT device A, and a secure channel has been established between the proxy and the IoT device A. The flow shown in FIG. 6 specifically includes the contents below.

The detailed description of steps 601 to 603 is the same as that of steps 501 to 503 in the example of FIG. 5, and will not be repeated here.

Step 604 includes: after receiving a message from the AFE D, the IoT device A forwards the location information of the second certificate (or the second certificate) of the AFE D to the proxy. In this step, the content sent by the IoT device A to the proxy may be carried in the second request message in the the above embodiments, and may be expressed as, for example, "A → proxy: add_{D}".

Step 605 includes: after the proxy receives the message forwarded by the IoT device A, the proxy accesses the the chain to search for the second certificate, verifies whether the second certificate has been revoked, and if it is successfully verified that the second certificate has not been revoked, the proxy returns the public key (*PK_{D}*) of the AFE D in the second certificate *Cert_{D}*.

The process of the proxy accessing the chain to search for the second certificate and verifying whether the second certificate has been revoked may include: if the proxy receives the location information of the certificate of the AFE D, the proxy accesses the chain to search for the certificate and then verifies whether the second certificate has been revoked; and if the proxy receives the certificate of the AFE D, the proxy directly verifies whether the second certificate has been revoked.

In addition, if the second certificate is not successfully verified and/or the second certificate has been revoked, the proxy returns an authentication failure flag *NG*, and the process is aborted. Correspondingly, the IoT device A receives the NG to abort the process, and then may end the processing.

In this step, the proxy may return the public key (*PK_{D}*) of the AFE D in the second certificate *Cert_{D}* or the failure flag *NG* which may be carried in the second response message in the foregoing embodiment and may be expressed as proxy → A: pk_{D} or NG, for example.

Step 606 includes: after receiving the public key (*PK_{D}*) of the AFE D, the IoT device A verifies the second signature using the public key (*PK_{D}*) of the AFE D.

If the second signature is invalid (i.e., the authentication of the AFE fails), the authentication process is aborted. If the second signature is valid (i.e. the authentication of the AFE is successful), step 606 is performed.

Further, in this step, if it is verified that the second signature is valid, the negotiation of the first session key may be completed, and the specific method thereof is to generate the first session key by using X_D•P and X_A•P negotiated by the DH protocol.

The processing of steps 607 to 609 is the same as that of steps 505 to 507 in the example of FIG. 5, and will not be repeated.

In some possible examples, only steps 601-602 in FIG. 6 may be performed between the IoT device A and the AFE D. Specifically, the step 601 may be replaced with a process that the IoT device A sends the on-chain location information add_{KGC} of the first certificate of the first KGC to which the IoT device A belongs, and the identity (i.e., *ID _{A}*) (optionally) to the AFE D. The step 602 may be replaced with a process that after receiving a message from the IoT device A, the AFE D accesses the chain to retrieve the first certificate according to the location information add_{KGC} of the first certificate on the chain, and verifies whether the first certificate has been revoked; if the first certificate is found and has not been revoked, the AFE D and the IoT device A may start communication. That is, the one-way authentication can be completed only if the AFE D completes the identity authentication of the IoT device A.

In some possible examples, only steps 601-606 in FIG. 6 may be performed between the IoT device A, the proxy, and the AFE D. Specifically, the step 601 may be replaced with a process that the IoT device A sends the on-chain location information add_{KGC} of the first certificate of the first KGC to which the IoT device A belongs, and the identity (i.e., *ID _{A}*) (optionally) to the AFE D. The step 602 may be replaced with a process that after receiving a message from the IoT device A, the AFE D accesses the chain to retrieve the first certificate according to the location information add_{KGC} of the first certificate on the chain, and verifies whether the first certificate has been revoked, and if the first certificate is found and has not been revoked, step 603 is executed. The step 603 may be replaced with a process that the AFE D sends the on-chain location information add*_{D}* of its second certificate to the IoT device A (or directly sends the second certificate). The Step 604 is the same as the process described above. The step 605 may be replaced with a process that after the proxy receives the message forwarded by the IoT device A, the proxy accesses the chain to search for the second certificate, verifies whether the second certificate has been revoked, and if it is successfully verified that the second certificate has not been revoked, the proxy returns information that the identity authentication of the AFE D is successful to the IoT device A. Correspondingly, the step 606 may be replaced with a process that after the IoT device A receives the information that the identity authentication of the AFE D is successful, the IoT device A and the AFE D may start communication. That is, only the AFE D, the proxy and the IoT device A are required to complete mutual identity authentication.

In a possible example, before executing the step 601 in FIG. 6, the process may further include: the AFE D sends a message (or information) for triggering authentication to the IoT device A; correspondingly, after receiving the message for triggering authentication, the IoT device A executes the step 601.

In some possible implementations, the first device does not have the capability of being uploaded to the blockchain and has limited computing capability, and in such a case, the second device is required to act as a proxy to assist the first device in completing the process of authenticating the second certificate of the AFE and verifying the first signature of the AFE.

In the embodiment, sending the first request message by the first device to the AFE includes: sending the first request message to the AFE through the second device.

In an embodiment, the first request message may be further used to trigger the AFE to perform authentication, that is, the authentication may be initiated by the first device. In yet another embodiment, authentication may be triggered by the AFE, for example, the AFE may send a message for triggering authentication to the first device (or to the first device through the second device) before receiving the first request message from the first device, and then the first device sends the first request message to the AFE through the second device.

The processing of the second device includes: sending the first request message received from the first device to the AFE, wherein the first request message carries the address of the first certificate, the first certificate is the certificate of the first service node to which the first device belongs, and the first certificate is used to authenticate the identity of the first service node.

The process of the AFE receiving the first request message from the first device includes: receiving the first request message from the first device through the second device.

The process of the AFE authenticating the identity of the first service node based on the address of the first certificate carried in the first request message after receiving the first request message is the same as that in the above embodiments, and not be repeated here.

According to the above implementations, the AFE may perform authentication for the first certificate, that is, one-way authentication for the first device by the AFE, and in this case, if the AFE determines that the identity authentication of the first service node is successful, the AFE may start communication with the first device (or may start communication with the first device through a proxy).

Different from the foregoing embodiments, the process of the AFE sending the first response message includes: sending the first response message to the second device.

In an embodiment, the processing of the second device may include: receiving the first response message from the AFE, wherein the first response message carries information related to the second certificate, and the second certificate is used to authenticate the identity of the AFE.

The information related to the second certificate includes the address of the second certificate or the second certificate. The processing of the second device further includes: authenticating the identity of the AFE based on the address of the second certificate; or, authenticating the identity of the AFE based on the second certificate. The process of authenticating the identity of the AFE through the second device based on the address of the second certificate and the process of authenticating the identity of the AFE based on the second certificate are the same as those in the above embodiments, and are not repeated.

In an embodiment, when the second device successfully authenticates the identity of the AFE, the second device may send an identity authentication result of successful authentication of the identity of the AFE to the first device. And/or, in a case where the second device fails to authenticate the identity of the AFE, the authentication result of the failed authentication of the identity of the AFE may be sent to the first device.

The above process, in which the AFE performs the authentication for the first certificate, and the second device performs the authentication for the second certificate of the AFE and sends the authentication result to the first device, is mutual certificate authentication between the AFE and the first device. In this case, after the AFE determines that the identity authentication of the first service node is successful, if the first device receives from the second device the authentication result of successful authentication of the identity of the AFE, the first device and the AFE may start communication.

In an embodiment, the first response message may further carry the first signature. In this embodiment, the AFE calculates the first signature after successful authentication of the identity of the first service node. The process of calculating the first signature by the AFE is the same as that in the foregoing embodiments, and will not be repeated.

Different from the foregoing embodiments, in this embodiment, the second device repalces the first device to complete the verification of the first signature. Specifically, the processing of the second device may further include: the second device authenticates the AFE based on the public key of the AFE and the first signature, wherein the public key of the AFE is carried through the second certificate.

The process of authenticating the AFE based on the public key of the AFE and the first signature includes: authenticating the AFE based on the first parameter, the public key of the AFE and the first signature, wherein the first parameter includes at least one of: the security parameter of the AFE and the identifier of the AFE.

Optionally, the first response message may further carry at least one of: the security parameter of the AFE and the identifier of the AFE. The second device may determine the first parameter based on the first response message, and the first parameter may be fully or partially related to the first response message. The related description of the relationship between the first parameter and the first response message is the same as that in the foregoing embodiments, and will not be repeated.

Optionally, the first parameter may include at least one of the identifier of the first device, the first random value, and the second random value in addition to at least one of the security parameter of the AFE and the identifier of the AFE. The identifier of the first device and the first random value may be carried in the first request message sent by the first device, so both the first device and the second device may obtain the identifier of the first device and the first random value. The second random value is carried in the first response message.

The process of authenticating the AFE by the second device based on the first parameter, the public key of the AFE, and the first signature is the same as the description of authenticating the AFE by the first device based on the first parameter, the public key of the AFE and the first signature in the foregoing embodiments, except that the first device is replaced by the second device in the embodiment, and thus will not be repeated.

In an embodiment, the processing of the second device may further include: sending a third response message to the first device, wherein the third response message carries the security parameter of the AFE. Correspondingly, the process of the first device may further include: receiving the third response message from the second device, wherein the third response message carries the security parameter of the AFE.

Specifically, sending the third response message to the first device may include: when the second device determines that the authentication of the AFE is successful, the second device extracts the security parameter of the AFE from the first response message, carries the security parameter of the AFE in the third response message and sends the security parameter of the AFE to the first device.

Further, the third response message may further carry at least one of: the identifier of the AFE and the second random value. Sending the third response message to the first device may include: the second device extracts the security parameter of the AFE from the first response message, extracts at least one of the identifier of the AFE and the second random value from the first response message, carries the security parameter of the AFE in the third response message, carries at least one of the identifier of the AFE and the second random value in the third response message, and sends the third response message to the first device.

Optionally, in a case where the second device determines that the authentication of the AFE is failed, the processing of the second device may further include: the second device the processing is terminated, or the second device sends an indication that the authentication of the AFE is failed to the first device.

Optionally, in a case where the second device determines that the authentication of the AFE is successful, the processing of the second device may further include: the second device sends a third response message to the first device. In an example, the second device may implicitly indicate to the first device that the authentication of the AFE is successful by carrying the security parameter of the AFE in the third response message (or carrying at least one of the identifier of the AFE and the second random value in addition to the security parameter of the AFE). In an example, the second device may carry an explicit indication in addition to the security parameter of the AFE (or at least one of the identifier of the AFE and the second random value in addition to the security parameter of the AFE) in the third request message to indicate successful authentication of the AFE.

The processing after the first device receives the third response message may include: sending a third request message to the AFE, wherein the third request message carries the second signature for authenticating the first device, the second signature being calculated based on the private key of the first device.

The descriptions of the process of calculating the second signature by the first device, calculating the second signature using the second parameter, and the like are the same as the description related to the second signature in the above embodiments. The descriptions of the process of authenticating the first device based on the public key of the first device and the second signature after the AFE receives the third request message, the determination method of the second parameter used for verifying the second signature, and the like are the same as the description related to the second signature related to the AFE in the the above embodiments, and thus will not be repeated.

In an embodiment, the first device and the AFE may complete the negotiation of the first session key during the authentication process. In the embodiment, the processing related to the calculation of the first session key by the first device and the AFE is also the same as that in the the above embodiments, and the description thereof will not be repeated.

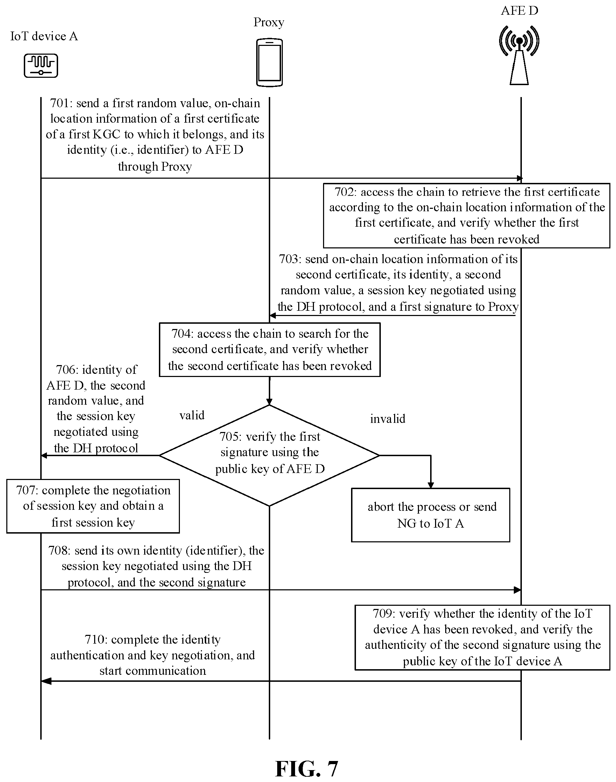

FIG. 7 illustrates an example by denoting the first device as the IoT device A, denoting the AFE as the AFE D, and denoting the second device as the proxy. It is assumed that the IoT device A is a zero-power device but can complete key negotiation, the IoT device A negotiates a key and signs it, which specifically includes the following operations.

Step 701 includes: the IoT device A sends a first random value *N A* , on-chain location information add_{KGC} of a first certificate of a first KGC to which it belongs, and its identity (i.e., identifier *ID _{A}*) to the AFE D through the proxy.

Step 702 is the same as step 502 in the the above embodiments, and will not be repeated.

Step 703 includes: the AFE D sends on-chain location information add*_{D}* of its second certificate, the identity ID_{D} of the AFE D, a second random value *N _{D}*, a session key X_{D}•P negotiated using the DH protocol (that is, the security parameter of the AFE), and a first signature to the proxy. The generation process of the first signature is the same as that in the above embodiments, and will not be repeated here. The content sent by the AFE D to the proxy in this step may be carried by the second request message in the foregoing embodiments.

Step 704 includes: after receiving the message from the AFE D, the proxy accesses the chain to search for the second certificate, verifies whether the second certificate has been revoked, and if it is successfully verified that the second certificate has not been revoked, executes step 705, otherwise, aborts the process or sends the failure identifier NG to the IoT device A.

Step 705 includes: the proxy verifies the first signature using the public key of the AFE D, and if the first signature is verified as valid (or the verification is successful or the authentication of the AFE D is successful), the proxy executes step 706, otherwise, aborts the process or sends the failure identifier NG to the IoT device A. Here, the process of verifying the first signature has been detailed above, and will not be repeated here.

Step 706 includes: the proxy forwards the identity ID_{D} of the AFE D, the second random value *N _{D}*, and the session key X_{D}•P negotiated using the DH protocol to the IoT device A. Here, the content sent by the proxy to the IoT device may be carried in the third response message in the foregoing embodiments.

Step 707 includes: after receiving N_{D},ID_{D}, X_{D}•P, the IoT device A completes the negotiation of the session key and obtains a first session key. The specific method is to generate the first session key using X_D•P,X_A•P negotiated by DH protocol.

Steps 708 to 710 are the same as steps 505 to 507 in the example of FIG. 5, and will not be described repeatedly.

In some possible examples, only steps 701-702 of FIG. 7 may be performed between the IoT device A and the AFE D. Step 701 may be replaced by a process that the IoT device A sends the on-chain location information add_{KGC} of the first certificate of the first KGC to which the IoT device A belongs and the identity (i.e. identifier *ID _{A}*) (optionally) of itself to the AFE D through a proxy. The step 702 may be replaced by a process that the AFE D checks the first certificate on the chain according to the location information add_{KGC} of the first certificate on the chain, and verifies whether the first certificate has been revoked; if the first certificate is found and has not been revoked, the AFE D and the IoT device A may start communication. That is, the one-way authentication can be completed only if the AFE D completes the identity authentication of the IoT device A.

In some possible examples, only steps 701-704 of FIG. 7 may be performed between the IoT device A, the proxy, and the AFE D. The step 701 may be replaced by a process that the IoT device A sends the on-chain location information add_{KGC} of the first certificate of the first KGC to which it belongs and identity (i.e. identifier 2) of the IoT device A (optionally) to the AFE D through a proxy. The step 702 may be replaced by a process that the AFE D checks the first certificate according to the location information add_{KGC} of the first certificate on the chain, and verifies whether the first certificate has been revoked, and if the first certificate is found and has not been revoked, executes step 703. The step 703 may be replaced by a process that the AFE D sends the location information add*_{D}* of its second certificate on the chain and the identity ID_{D} of the AFE D (optionally) to the proxy. Step 704 is the same as the process described above. After completing step 704, the proxy may send an indication that the authentication is successful to the IoT device A, and then the IoT device may start communication with the AFE D. That is, only the AFE D, the proxy and the IoT device A are needed to complete mutual identity authentication.

In a possible example, before performing step 701 of FIG. 7, the AFE D may send a message (or information) for triggering authentication to the IoT device A, and then the IoT device A performs step 701.

In some possible implementations, the first device does not have a capability of being uploaded to the blockchain and has limited computing capability, and in this case, the second device is required to act as a proxy to perform processes such as authenticating the second certificate of the AFE, verifying the first signature of the AFE, and generating a third signature to authenticate the second device by the AFE.

In an implemenation, sending the first request message by the first device to the AFE may include: sending the first request message to the AFE through the second device.

On the second device side, the process of sending the first request message to the AFE may include: sending the first request message from the first device to the AFE, wherein the first request message carries the address of the first certificate, the first certificate is the certificate of the first service node to which the first device belongs, and the first certificate is used to authenticate the identity of the first service node.

The process of the AFE receiving the first request message may include: receiving the first request message from the second device. Specifically, receiving the first request message from the second device may include: receiving the first request message from the first device forwarded by the second device.

After receiving the first request message, the AFE authenticates the identity of the first service node based on the address of the first certificate carried by the first request message. This is the same as that in the the above embodiments, and thus will not be repeated.

In an embodiment, the first request message may be further used to trigger the AFE to perform authentication, that is, the authentication may be initiated by the first device. In another embodiment, the authentication may be triggered by the AFE, for example, the AFE may send a message for triggering authentication to the first device before receiving the first request message from the first device, and then the first device sends the first request message to the AFE through the second device.

In another implementation, the process of the second device sending the first request message to the AFE may include: the second device directly sends the first request message to the AFE.

In this implementation, since the second device may be a proxy of the first device, the second device itself may trigger the authentication between the first device and the AFE. How the second device determines whether it is necessary to trigger the authentication may be based on a policy configured for the second device or be default, which is not limited in this embodiment.

Further, in the implementation, the second device acts as a proxy of the first device, and the second device may obtain information related to the first device in advance. The information related to the first device may include the address of the first certificate. In an example, the manner in which the second device obtains the address of the first certificate may include: establishing a communication connection between the second device and the first device in advance, and obtaining the address of the first certificate from the first device through the communication connection; or, the second device is pre-configured with or saves the address of the first certificate.

In the implementation, the process of the AFE receiving the first request message may include that the AFE receives the first request message from the second device. Further, after the AFE receives the first request message, the authentication for the first certificate is the same as that in the above embodiments, and the description thereof is omitted.

In an embodiment, the first request message may be further used to trigger the AFE to perform authentication, that is, the second device may initiate authentication. In yet another embodiment, authentication may be triggered by the AFE, for example, before receiving the first request message from the second device, the AFE may send a message for triggering authentication of the first device to the second device (for example, may carry the identifier of the first device), and then the second device sends the first request message to the AFE.

Through the various possible implementations described above, the AFE may perform authentication for the first certificate, that is, one-way authentication performed by the AFE for the first device, and in this case, if the AFE determines that the identity authentication of the first service node is successful, the AFE may start communication with the first device (or the AFE may start communication with the first device through the second device).

In an embodiment, the process of the AFE sending the first response message may include: sending the first response message to the second device.

The processing of the second device may include: receiving a first response message from the AFE, wherein the first response message carries information related to the second certificate used to authenticate the identity of the AFE. The process of authenticating the identity of the AFE by the second device based on the address of the second certificate and the process of authenticating the identity of the AFE based on the second certificate are also the same as those in the above embodiments, and the description thereof is omitted.

In an embodiment, when the second device successfully authenticates the identity of the AFE, the second device may send an identity authentication result of successful authentication of the identity of the AFE to the first device, or send a notification or an indication that communication between the first device and the AFE can (or may) be started to the first device. And/or, when the second device fails to authenticate the identity of the AFE, the second device may send an identity authentication result of failed authentication of the identity of the AFE to the first device, or send a notification or indication to the first device that communication between the first device and the AFE cannot be (or may not be) started, or directly end the processing.

The above process of the AFE authenticating the first certificate and the second device authenticating the second certificate of the AFE and sending the authentication result to the first device constitutes mutual certificate authentication between the AFE and the first device. In this case, after the AFE determines that the identity authentication of the first service node is successful, the first device (or through the second device) and the AFE may start communication, if the first device receives the authentication result that the identity authentication of the AFE is successful, or a notification or indication that the first device can (or can) start communication with the AFE.

In an embodiment, the first response message may further carry a first signature. In this embodiment, the AFE calculates the first signature after successful authentication of the identity of the first service node. The process of calculating the first signature by the AFE is the same as that in the above embodiments, and will not be repeated. In the embodiment, the description of verifying the first signature by the second device is the same as that in the above embodiments, and thus will not be repeated here.

In an embodiment, the processing of the second device may further include: sending a fourth request message to the AFE, wherein the fourth request message carries a third signature for authenticating the second device, and the third signature is calculated based on a private key of the second device.

Specifically, sending the fourth request message to the AFE may include: when the second device determines that the authentication of the AFE is successful, sends the fourth request message to the AFE.

Optionally, when the second device determines that the authentication of the AFE is failed, the processing of the second device may further include: the second device the processing is terminated, or the second device sends an indication that the authentication of the AFE is failed to the AFE and/or the first device.

Optionally, in a case where the second device determines that the authentication of the AFE is successful, the processing of the second device may further include: the second device sends the fourth request message to the AFE. In an example, the second device may implicitly indicate to the AFE that the authentication of the AFE is successful by carrying the third signature in the fourth request message. In an example, the second device may carry an explicit indication to indicate to the AFE that the authentication of the AFE is successful, in addition to carrying the third signature in the fourth request message.

In an embodiment, the third signature may be calculated based on the private key of the second device and a third parameter, wherein the third parameter includes at least one of: the identifier of the second device and the security parameter of the second device. The fourth request message may further carry at least one of: the identifier of the second device, and the security parameter of the second device.

The content in the fourth request message may be completely or partially related to the third parameter. In an example, the content in the fourth request message may be all related to the third parameter, for example, the third parameter includes the identifier of the second device and the security parameter of the second device, and the fourth request message carries the identifier of the second device and the security parameter of the second device in addition to the third signature. In an example, the content carried in the fourth request message may be partially related to the third parameter, for example, the third parameter may include the identifier of the second device and the security parameter of the second device, but the fourth request message may only carry the security parameter of the second device. For another example, the third parameter may include the security parameter of the second device, but the fourth request message may carry the identifier of the second device and the security parameter of the second device. It should be understood that the above is merely an exemplary description. In actual processing, as long as the fourth request message carries at least the security parameter of the second device and the third parameter carries at least the security parameter of the second device, it shall within the scope of protection of the embodiment, and no all possible situations are limited or exhausted here.

Here, the private key of the second device may be obtained at the time of registration of the second device, and the registration process of the second device is similar to that of the first device in the the above embodiments, and will not be repeated here.

The function of the security parameter of the second device may be obtaining a second session key in combination with the security parameter of the AFE, the second session key being used for communication between the second device and the AFE.

The manner of the second device calculating the third signature may be that the second device calculates the third signature using a signature algorithm based on the private key of the second device and the third parameter. Specifically, the second device may calculate the third parameter based on the private key of the second device to obtain the third signature.

For example, the third parameter may include the identifier of the second device and the DH parameter of the second device. The process of the second device calculating the third signature may be denoted as *Sig*(*ID _{proxy}, X_{proxy}* · *P*)*,* where Sig () represents the signature algorithm, *D*_{proxy} represents the identifier of the second device, and *X_{proxy}* · *P* represents the DH parameter of the second device. In this case, the identifier of the second device is signed, and the third signature here at least may be used to authenticate the second device; moreover, generation of the DH parameter of the second device enables the third signature to have both the function of authenticating the second device and the function of authenticating the validity, integrity and the like of the DH parameter of the second device.

The signature algorithm may include hash calculation and encryption calculation. Correspondingly, the process of the second device calculating the third parameter based on the private key of the second device to obtain the third signature may include: the second device performs hash calculation on the third parameter to obtain a third hash value, and encrypts the third hash value based on the private key of the second device to obtain the third signature. For example, the third parameter may include the identifier of the second device and the DH parameter of the second device. The process of the second device calculating the third signature by may be expressed as *Sig*(*H (ID _{proxy}, X _{proxy}* · *P*)), where the meaning of each content in the formula is the same as that in the above embodiments, and will not be repeated here here.

It should be pointed out that the above is merely an exemplary description, and in some other possible examples, the third parameter may only include the DH parameter of the second device as the actual requirement is adjusted.

In an embodiment, in addition to the identifier of the second device and/or the security parameter of the second device, the third parameter may further include at least one of the identifier of the AFE, the identifier of the first device, the first random value, and the second random value.

Here, the first request message further carries at least one of: the identifier of the first device and the first random value. Therefore, when forwarding the first request message, the second device may acquire the identifier of the first device and the first random value from the first request message, and then may sign the identifier of the first device and/or the first random value when generating the third signature.

The first response message may carry at least one of the identifier of the AFE, the security parameter of the AFE, and the second random value. Therefore, the second device may acquire the identifier of the AFE and the second random value from the first response message, and may sign the identifier of the AFE and/or the second random value when generating the third signature.

When forwarding the first request message, the second device may add the identifier of the second device to the first request message.

For example, the third parameter may include the identifier of the second device, the DH parameter of the second device, the identifier of the AFE, and the second random value. Calculating the third signature by the second device may be expressed as *Sig*(*N _{D}, ID _{D}, ID _{proxy}, X _{proxy}* · *P*), where *N _{D}* represents the second random value, *ID_{D}* represents the identifier of the AFE, and the remaining contents in the formula mean the same as those in the the above embodiments, and will not be repeated. Alternatively, it may be expressed as *Sig*(*H*(*N _{D}*,*ID_{D}*, *ID_{proxy}, X _{proxy}* · *P*)), where the meaning of each content in the formula is the same as that in the the above embodiments, and will not be repeated.

For example, the third parameter may include the identifier of the second device, the DH parameter of the second device, the identifier of the AFE, and the second random value, the first random value, and the identifier of the first device. Calculating the third signature by the second device may be expressed as *Sig* (*N _{D}, ID_{D}, N_{A}, ID*_{A}, *ID_{proxy}, X _{proxy}* · *P*), where *N_{D}* represents the second random value, *ID_{D}* represents the identifier of the AFE, *N*_{A} represents the first random value, and *ID*_{A} represents the identifier of the first device, and the rest of the formula means the same as that in the above embodiments, and will not be repeated. Or, it may be expressed as *Sig*(*H*(*N _{D}*, *ID_{D}*, *N* _{A}, *ID*_{A}, *ID*_{proxy}, *X*_{proxy} · *P*)), where the meaning of each content in the formula is the same as that in the the above embodiments, and will not be repeated.

It should be noted that the above is merely an exemplary description. The third parameter may include other parameters according to the changed actual requirements, and the combination mode of the third parameter may be different from that in the above example. All possible examples are not exhausted here, and as long as at least one type of contents of the third parameter is used when the third signature is calculated, it shall within the scope of protection of the embodiment.

The processing of the AFE may include: receiving a fourth request message from the second device, wherein the fourth request message carries a third signature for authenticating the second device.

Further, the processing of the AFE may further include: authenticating the second device based on the public key of the second device and the third signature.

In an embodiment, the fourth request message may further carry at least one of: the identifier of the second device and the security parameter of the second device.

Authenticating the second device based on the public key of the second device and the third signature includes: authenticating the second device based on a third parameter, the public key of the second device and the third signature, wherein the third parameter includes at least one of the identifier of the second device and the security parameter of the second device.

In an example, the AFE may determine the third parameter based on the fourth request message, and the third parameter may be fully or partially related to the fourth request message. In an example, the fourth request message carries only the security parameter of the second device, and in this case, the AFE may only use the security parameter of the second device as the third parameter. In an example, the fourth request message only carries the security parameter of the second device, and in this case, the AFE may have obtained the identifier of the second device in advance (for example, when the second device forwards the first request message, the identifier of the second device may be carried in the first request message and forwarded to the AFE), and then use the identifier of the second device and the security parameter of the second device together as the third parameter. In an example, the fourth request message carries the identifier of the second device and the security parameter of the second device, and the AFE may only use the security parameter of the second device as the third parameter, or use both the identifier of the second device and the security parameter of the second device as the third parameter.

In an example, the AFE may determine the third parameter based on the first response message and the fourth request message, the third parameter being fully or partially related to the first response message and the fourth request message. That is, when the first response message carries at least one of the second random value and the identifier of the AFE, the AFE may add at least one of the second random value and the identifier of the AFE to the third parameter in addition to adding the identifier of the second device and/or the security parameter of the second device to the third parameter.

In an example, the AFE may determine the third parameter based on the first response message, the fourth request message, the first request message, the first request message, and the first request message, wherein the third parameter is fully or partially related to the first response message, the first request message, and the fourth request message. That is, when the first response message carries at least one of the second random value and the identifier of the AFE, and the first request message carries the identifier of the first device and the first random value, the AFE may add at least one of the second random value, the identifier of the AFE, the first random value, and the identifier of the first device to the third parameter in addition to adding the identifier of the second device and/or the security parameter of the second device to the third parameter.

It should be understood that the above is only an exemplary description, and in actual processing, as long as the second device and the AFE use the same third parameter, it shall within the scope of protection of the embodiment, and no all possible situations are limited or exhausted here.

In an embodiment, the process of authenticating the second device based on the third parameter, the public key of the second device and the third signature may include: decrypting the third signature using a signature verification algorithm based on the public key of the second device to obtain third decrypted information, and authenticating the second device based on the third decrypted information and the third parameter. Here, the public key of the second device is the identifier of the second device.

Optionally, the third decrypted information may include a third parameter to be verified that is of the same type as each content type in the third parameter. Authenticating the second device based on the third decrypted information and the third parameter may include one of: determining that the authentication of the second device is successful when the third parameter to be verified and the third parameter are the same; and when the third parameter to be verified and the third parameter are different, determining that authentication of the second device is failed. In this embodiment, the composition of the third parameter has been detailed in the above embodiments, and will not be repeated.

Optionally, the third decrypted information may include a third decryption hash value. Authenticating the second device based on the third decrypted information and the third parameter may include: performing hash calculation on the third parameter to obtain a third verification hash value; and authenticating the second device based on the third decryption hash value and the third verification hash value.

Authenticating the second device based on the third decryption hash value and the third verification hash value may include at least one of: determining that authentication of the second device is successful when the third decryption hash value and the third verification hash value are the same; and when the third decryption hash value and the third verification hash value are different, determining that authentication of the second device is failed. In this embodiment, the composition of the third parameter has been described in detail in the above embodiments, and will not be repeated here.

In some possible implementations, during the authentication between the first device and the AFE through the second device, the negotiation of the second session key may also be completed simultaneously.

When the AFE determines that the authentication for the second device is successful, the processing of the AFE may further include: calculating the second session key based on the security parameter of the AFE and the security parameter of the second device, wherein the second session key is used for communication between the second device and the AFE.

When the second device successfully authenticates the AFE, the processing of the second device may further include: calculating the second session key based on the security parameter of the AFE and the security parameter of the second device, wherein the second session key is used for communication between the second device and the AFE. It should also be pointed out that the second device may calculate the third signature after calculating the second session key.

Here, the second session key is used for communication between the second device and the AFE, and specifically may refer to at least one of: the second session key is used for the second device to decrypt a message sent by the AFE to the first device and and send the decrypted message to the first device; the second session key is used for the second device to encrypt a message sent to the AFE by the first device and send the encrypted message to the AFE; the second session key is used for the AFE to decrypt a message forwarded by the second device from the first device; the second session key is used for the AFE to encrypt a message sent to the first device through the second device; the second session key is used for the second device to perform integrity protection on a message sent by the first device to the AFE; the second session key is used for the AFE to perform integrity protection verification on a message received by the second device from the first device; the second session key is used for the AFE to perform integrity protection on a message sent to the first device through the second device; the second session key is used for the second device to perform integrity protection verification on the message sent by the AFE to the first device; and the second session key is used to generate a derivative key between the AFE and the second device, and the derivative key may include an integrity protection key and/or a security key; etc. In addition, the second session key may also be used for processing such as encryption, decryption, integrity protection, and integrity protection verification of a message to be sent between the second device and the AFE. All possible cases in which the first session key is used for communication between the first device and the AFE are not exhausted or limited herein.

In an implementation, after sending the fourth request message to the AFE, the processing of the second device may further include: sending a third response message to the first device, wherein the third response message is used to indicate that the authentication is successful. Correspondingly, the processing of the first device may further include: receiving the third response message from the second device, wherein the third response message is used to indicate that the authentication is successful.

Optionally, the third response message is used to indicate that the authentication is successful, which may refer to that: the second device successfully authenticates the AFE; alternatively, the second device successfully authenticates the AFE, and the AFE successfully authenticates the first device.

Optionally, the third response message may be used to indicate the first device to start communication in addition to indicating success of authentication. In a possible example, the third response message may carry first indication information for explicitly indicating success of authentication and implicitly indicating the first device to start communication. In a possible example, the third response message may carry second indication information for explicitly indicating the first device to start communication and implicitly indicating success of authenticationn. In a possible example, the third response message may carry the first indication information for indicating success of authentication and the second indication information for indicating the first device to start communication.

After the first device receives the third response message indicating success of authentication, the first device may communicate with the AFE through the second device.

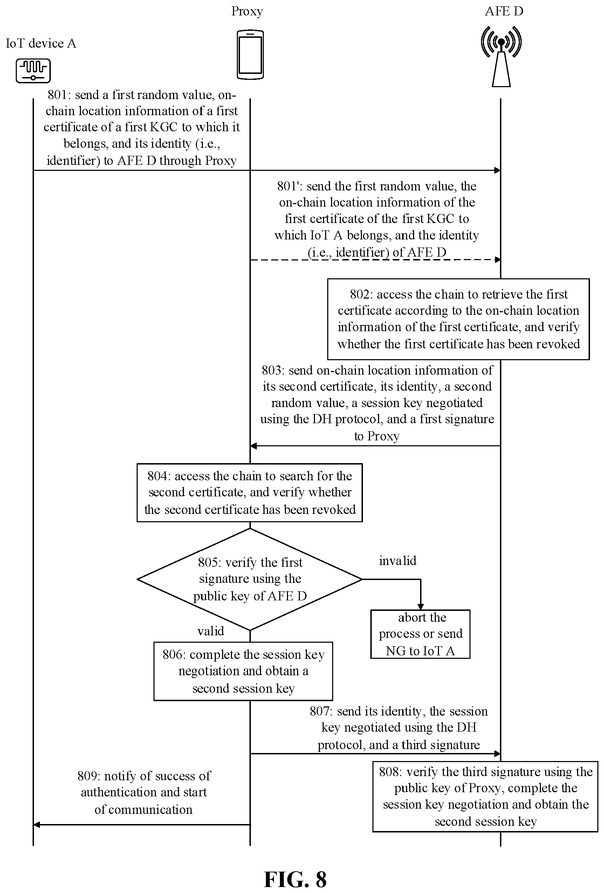

FIG. 8 illustraes an example by denoting the first device as the IoT device A, denoting the AFE as the AFE D, and denoting the second device as the proxy, in which it is assumed that the IoT device A is a zero-power device and cannot complete key negotiation, and the proxy negotiates for the key and signs it. The specific process is as follows.

Step 801 includes: the IoT device A sends the first random value *N A* , the on-chain location information add_{KGC} of the first certificate of the first KGC to which it belongs, and the identity (i.e., the identifier *ID_{A}*) to the AFE D through the proxy.

In a possible example, step 801 may also be replaced with step 801 ' which includes that the proxy sends the first random value *N A* , the on-chain location information add_{KGC} of the first certificate of the first KGC to which the IoT device A belongs, and the identity (i.e., identifier *ID_{A}*) of the IoT device A.

The processing of steps 802 to 805 is the same as that of steps 702 to 705 shown in FIG. 7, and will not be repeatedly described.

Step 806 includes: the proxy completes the negotiation of the second session key to obtain the second session key. The specific method is using the X_{D}•P and the X_{proxy}•P negotiated by the DH protocol to generate the second session key.

Step 807 includes: the proxy sends its own identity ID_{proxy}, ID_{A}, the session key X_{proxy}•P negotiated using the DH protocol, and a third signature to the AFE D. The *N _{D}* is used to enable the AFE D to authenticate that the received message is not a replayed one but does come from the proxy; and *ID_{D}* is signed with the private key to indicate that the message sent by the AFE D has been received; signing N_{D} and ID_{D} is optional, and ID_{A} is optionally sent.

Step 808 includes: after receiving the message from the proxy, the AFE D verifies the third signature using the public key of the proxy, and if the verification is successful, determins that the identity authentication is completed, and completes the session key negotiation to obtain the second session key. Here, the second session key may be generated using X_{D}•P and X_{proxy}•P.

Step 809 includes: the proxy sends a notification of successful authentication and start of communication to the IoT device A.

In some possible examples, only step 801 (or step 801') to step 802 of FIG. 8 are required to be performed between the IoT device A and the AFE D. Step 801 may be replaced by a step of sending the on-chain location information add_{KGC} of the first certificate of the first KGC to which the IoT device A belongs (optionally) and identity (i.e. identifier *ID_{A}*) to the AFE D through the proxy; or step 801' may be replaced by a step of sending the on-chain location information add_{KGC} of the first certificate of the first KGC to which the IoT device A belongs, and the identity (i.e. identifier *ID_{A}*) of the IoT device A to the AFE D by the proxy. The step 802 may be replaced with a step that the AFE D checks the first certificate on the chain according to the location information add_{KGC} of the first certificate on the chain, and verifies whether the first certificate has been revoked; and if the first certificate is found and has not been revoked, the AFE D and the IoT device A may start communication. That is, the one-way authentication can be completed only if the AFE D completes the identity authentication of the IoT device A.

In some possible examples, only steps 801 (or steps 801 ') to 804 of FIG. 8 are required to be performed between the IoT device A, the proxy, and the AFE D. The step 801 may be replaced with a step that the IoT device A sends the on-chain location information add_{KGC} of the first certificate of the first KGC to which it belongs and identity (i.e. identifier *ID_{A}*) (optionally) to the AFE D through the proxy; or step 801' may be replaced by a step that the proxy sends the on-chain location information add_{KGC} of the first certificate of the first KGC to which the IoT device A belongs, and the identity (i.e. identifier *ID_{A}*) of the IoT device A to the AFE D. The step 802 may be replaced by a step that the AFE D checks the first certificate according to the location information add_{KGC} of the first certificate on the chain, and verifies whether the first certificate has been revoked, and if the first certificate is found and has not been revoked, executes step 803. The step 803 may be replaced by a step that the AFE D sends the location information of its second certificate on the chain add*_{D}* and the identity ID_{D} of the AFE D (optionally) to the proxy. The step 804 is the same as the processing described above. After completing step 804, the proxy may send an indication of successful authentication to the IoT device A, and then the IoT device may begin communicating with the AFE D. That is, only the AFE D, the proxy and the IoT device A are required to complete mutual identity authentication.

In a possible example, before performing step 801 of FIG. 8, the AFE D sends a message (or information) for triggering authentication to the IoT device A, and then the IoT device A performs step 801.

In a possible example, before performing step 801' of FIG. 8, the AFE D sends a message (or information) (which may carry the identity (i.e. identifier) of the IoT device A) for triggering authentication to the proxy, and then the proxy performs step 801'.

By adopting the authentication method provided in the embodiment, the first device can achieve authentication only by sending the address of the certificate of the service node to which the first device belongs. In this way, the first device can achieve authentication without storing excessive content, thereby saving the storage space of the first device and reducing its storage cost.

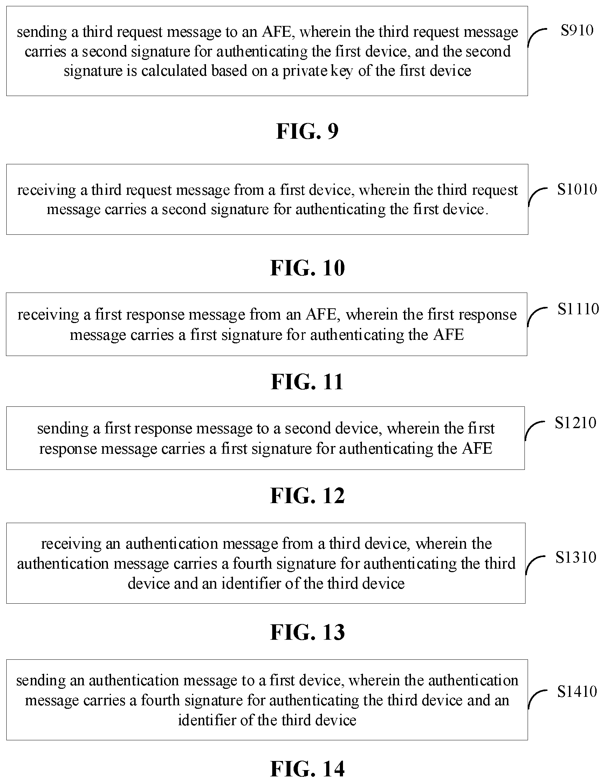

FIG. 9 is a schematic flowchart of an authentication method implemented by a first device according to an embodiment of the present disclosure. The method includes at least part of the following contents.

S910 includes: sending a third request message to an AFE, wherein the third request message carries a second signature for authenticating the first device, and the second signature is calculated based on a private key of the first device.

FIG. 10 is a schematic flowchart of an authentication method implemented by an AFE according to another embodiment of the present disclosure. The method includes at least part of the following contents.

S1010 includes: receiving a third request message from a first device, wherein the third request message carries a second signature for authenticating the first device.

FIG. 11 is a schematic flowchart of an authentication method implemented by a second device according to another embodiment of the present disclosure. The method includes at least part of the following contents.

S1110 includes: receiving a first response message from an AFE, wherein the first response message carries a first signature for authenticating the AFE.

FIG. 12 is a schematic flowchart of an authentication method implemented by an AFE according to another embodiment of the present disclosure. The method includes at least part of the following contents.

S1210 includes: sending a first response message to a second device, wherein the first response message carries a first signature for authenticating the AFE.

The description of the types of the first device, the second device, and the AFE is the same as that in the above embodiments, and will not be repeatedly described.

In some possible implementations, the first device only needs to interact with the AFE to complete the authentication.

In an embodiment, the processing of the first device may include: sending a first request message to the AFE, the first request message carrying at least one of: an identifier of the first device and a first random value; and receiving a first response message from the AFE, the first response message carrying a first signature for authenticating the AFE.

In an embodiment, the first request message may be further used to trigger the AFE to perform authentication, that is, the authentication may be initiated by the first device. In yet another embodiment, authentication may be triggered by the AFE, for example, the AFE may send a message for triggering authentication to the first device before receiving the first request message from the first device, and then the first device sends the first request message.

Here, the first device sends the first request message to the AFE, which may refer to that the first device directly sends the first request message to the AFE.

The processing of the AFE may include: receiving the first request message from the first device, the first request message carrying at least one of: the identifier of the first device, and the first random value; and sending the first response message to the first device, the first response message carrying the first signature for authenticating the AFE.

Optionally, the first signature may be calculated based on a first parameter and a private key of the AFE, wherein the first parameter includes at least one of: a security parameter of the AFE and an identifier of the AFE. The first response message further carries at least one of: the security parameter of the AFE and the identifier of the AFE.

Optionally, the first response message may further carry the second random value. The first parameter may further include at least one of: the identifier of the first device, the first random value, and the second random value.

In the implementation, since the process of calculating the first signature by the AFE, the first parameter, the first response message, and the like are the same as those in the the above embodiments, the description thereof will not be repeated.

The processing after the first device receives the first response message may further include: authenticating the AFE based on the public key of the AFE and the first signature. The first response message further carries at least one of: the security parameter of the AFE and the identifier of the AFE.

The process of authenticating the AFE based on the public key of the AFE and the first signature may include: authenticating the AFE based on the first parameter, the public key of the AFE and the first signature, wherein the first parameter includes at least one of: the security parameter of the AFE and the identifier of the AFE.

The first response message further carries a second random value. The first parameter further includes at least one of the identifier of the first device, the first random value, and the second random value.

In the implementation, since the processes of verifying the first signature by the first device, determining the first parameter by the first device, and the like are the same as those in the above embodiments, the description thereof will not be repeated.

In an embodiment, the processing of the first device may further include: sending a third request message to the AFE, wherein the third request message carries the second signature for authenticating the first device, and the second signature is calculated based on a private key of the first device. Specifically, sending the third request message to the AFE may include that the first device sends the third request message to the AFE when it is determined that the authentication of the AFE is successful.

The second signature is calculated based on a second parameter and the private key of the first device, wherein the second parameter includes at least one of the identifier of the first device and the security parameter of the first device.

The third request message further carries at least one of: the identifier of the first device, and the security parameter of the first device. The second parameter further includes at least one of: the identifier of the AFE, and the second random value.

In the implementation, since the process of calculating the second signature by the first device, the second parameter, the third request message, and the like are the same as those in the the above embodiments, the description thereof will not be repeated.

The processing of the AFE may include: receiving a third request message from the first device, wherein the third request message carries the second signature for authenticating the first device.

Further, the processing of the AFE may further include: authenticating the first device based on the public key of the first device and the second signature. The third request message further carries at least one of: the identifier of the first device and the security parameter of the first device.

The process of authenticating the first device based on the public key of the first device and the second signature may include: authenticating the first device based on a second parameter, the public key of the first device and the second signature, wherein the second parameter includes at least one of the identifier of the first device and the security parameter of the first device. The second parameter further includes at least one of: the identifier of the AFE, and the second random value.

In the implementation, the processes of verifying the second signature by the AFE, determining the second parameter, and the like are the same as those in the the above embodiments, and thus the description thereof will not be repeated.

In some possible implementations, the processing capability of the first device is low, and in this case, the second device is required as a proxy to assist the first device in completing the verification of the first signature of the AFE.

In the implementation, processing of the first device may include: sending a first request message to the AFE via the second device, the first request message carrying at least one of: the identifier of the first device, and a first random value; and receiving from the second device a third response message which carries a security parameter of the AFE.

In an embodiment, the first request message may be further used to trigger the AFE to perform authentication, that is, the authentication may be initiated by the first device. In yet another embodiment, authentication may be triggered by the AFE, for example, the AFE may send a message for triggering authentication to the first device (or to the first device through the second device) before receiving the first request message from the first device, and then the first device sends the first request message to the AFE through the second device.

The processing of the AFE may include: receiving, through the second device, the first request message from the first device, wherein the first request message carries at least one of: the identifier of the first device, and the first random value; and sending the first response message to the second device, wherein the first response message carries the first signature for authenticating the AFE.

The processing after the second device receives the first response message may further include that: the second device authenticates the AFE based on the public key of the AFE and the first signature.

The processing of the second device may further include: sending a third response message to the first device, wherein the third response message carries the security parameter of the AFE. Specifically, sending the third response message to the first device may include that, when determining that the authentication of the AFE is successful, the second device extracts the security parameter of the AFE from the first response message, carries the security parameter of the AFE in the third response message and sends the security parameter of the AFE to the first device.

Further, the third response message may further carry at least one of: the identifier of the AFE and the second random value.

The process of verifying the first signature by the second device has been described in detail in the the above embodiments, and will not be repeated here.

After receiving the third response message, the first device may calculate the second signature and send the third request message carrying the second signature. Correspondingly, after receiving the third request message, the AFE may verify the second signature. The above processing of the first device and the AFE is the same as that in the the above embodiments, and will not be repeated here.

In some possible implementations, the processing capability of the first device is low, and in this case, the second device is required as a proxy to assist the first device in completing the process of verifying the first signature of the AFE, and the second device is required as a proxy to calculate the process of verifying the signature by the AFE.

In the implementation, the processing of the second device includes: receiving the first response message from the AFE, wherein the first response message carries the first signature for authenticating the AFE.

In an embodiment, sending the first request message by the first device to the AFE may include: sending the first request message to the AFE through the second device, wherein the first request message is used to trigger the AFE to perform authentication. The processing of the second device may further include: sending the first request message received from the first device to the AFE. After the second device sends the first request message received from the first device to the AFE, the second device may perform a process of receiving the first response message from the AFE.

In another implementation, the second device directly sends the first request message to the AFE, wherein the first request message is used to trigger the AFE to perform authentication, and may further carry the identifier of the first device. After the second device sends the first request message to the AFE, the second device may perform a process of receiving the first response message from the AFE. In this implementation, since the second device may serve as a proxy of the first device, the second device itself may trigger the authentication between the first device and the AFE. How the second device determines whether it is necessary to trigger the the authentication may be based on a policy configured by the second device or be default, which is not limited in this embodiment.

In another embodiment, authentication may be triggered by the AFE, for example, the AFE may send a message for triggering authentication to the first device, and then the first device may send the first request message to the AFE through the second device. Correspondingly, the processing of the second device may further include: sending the first request message received from the first device to the AFE, the first request message being used to confirm the start of authentication or confirm the reception of an authentication indication; moreover, after the second device sends the first request message received from the first device to the AFE, the second device may perform a process of receiving the first response message from the AFE.

In another embodiment, the authentication may be triggered by the AFE, for example, the AFE may directly send a first response message to the second device. The first response message may be used to trigger authentication of the first device, for example, it may carry the first signature for authenticating the AFE, the identifier of the first device, and the like. In this case, the first response message may be called as an authentication request message.

The processing of the AFE includes: sending the first response message to the second device, the first response message carrying the first signature for authenticating the AFE.

In the embodiment, the process of calculating the first signature by the AFE and the related description of the contents that may be carried by the first response message are similar to those in the the above embodiments, and will not be repeatedly described.

In a case where the second device successfully authenticates the AFE, the second device may further perform: sending a fourth request message to the AFE, wherein the fourth request message carries a third signature for authenticating the second device. Correspondingly, the processing of the AFE may further include: receiving the fourth request message from the second device, wherein the fourth request message carries a third signature for authenticating the second device.

In the embodiment, the process of calculating the third signature by the second device and the related description of the contents that may be carried by the fourth request message are the same as those in the the above embodiments, and will not be repeated.

FIG. 13 is a schematic flowchart of an authentication method implemented by a first device according to an embodiment of the present disclosure. The method includes at least part of the following contents.

S1310 includes: receiving an authentication message from a third device, wherein the authentication message carries a fourth signature for authenticating the third device and an identifier of the third device.

FIG. 14 is a schematic flowchart of an authentication method implemented by a third device according to another embodiment of the present disclosure. The method includes at least part of the following contents.

S1410 includes: sending an authentication message to a first device, wherein the authentication message carries a fourth signature for authenticating the third device and an identifier of the third device.

In the implementation, the type of the first device is one of: an IoT device and a zero-power device; the type of the third device is one of: an IoT device and a zero-power device. That is, the first device and the second device may be the same or similar type of device. For example, the first device may be a first IoT device, and the second device may be a second IoT device. For example, the first device may be a first zero-power device, and the second device may be a second zero-power device. For another example, the first device may be an IoT device, and the second device may be a zero-power device. For another example, the first device may be a zero-power device, the second device may be an IoT device; and so on.

The related description of the IoT device and the zero-power device is the same as that in the above embodiments, and will not be repeated.

In this case, there may be two possible scenarios, one being that the first device and the third device belong to different trust domains, and another one being that the first device and the third device belong to the same trust domain. These two scenarios will be explained separately below.

In some embodiments, the first device and the third device belong to different trust domains. In the embodiment, the first device and the third device belong to different trust domains, which may refer to that the service node to which the first device belongs is the first service node, the service node to which the third device belongs may be the second service node, and the second service node is different from the first service node.

In the embodiment, the first device is still the device that initiates the authentication request, and the processing of the first device may include: sending a request message to the third device, wherein the request message carries at least one of: an identifier of the first device and a fourth random value. Correspondingly, the processing of the third device may include: receiving the request message from the first device, wherein the request message carries at least one of: the identifier of the first device and the fourth random value. Here, the fourth random value may be generated by the first device, and the generation method thereof is not limited in this embodiment.

In an embodiment, since the first device and the third device belong to different trust domains, certificate-related authentication may be performed between the first device and the third device.

The request message further carries an address of a first certificate, the first certificate is a certificate of a first service node to which the first device belongs, and the first certificate is used to authenticate an identity of the first service node. The first certificate is stored on the blockchain, and therefore, the address of the first certificate refers to the address of the first certificate on the blockchain or the location information of the first certificate on the blockchain. That is, when the first device initiates the authentication, the first device (i.e., any IoT device or zero-power device) carries the address of the first certificate of the first service node to which it belongs in the request message and sends it to the third device.

The address of the first certificate may be obtained when the first device is registered. The registration process of the first device has been detailed above and will not be repeated.

In an embodiment, the third device has a capability of being uploaded to the blockchain. The processing of the third device may further include: authenticating the identity of the first service node based on the address of the first certificate, and obtaining a master public key of the first service node.

Specifically, the process of authenticating the identity of the first service node based on the address of the first certificate may include: the third device searches for the first certificate on the blockchain based on location information (or address) of the first certificate on the blockchain; in a case of finding the first certificate and determining that the first certificate has not been revoked, determines that the identity authentication of the first service node is successful. The process may further include: determining that identity authentication of the first service node fails in a case where the first certificate is not found and/or the first certificate is determined to have been revoked. Here, the request message may further carry auxiliary information related to the first certificate, and the method of determining whether or not the first certificate has been revoked based on the auxiliary information related to the first certificate is the same as that in the above embodiments, and will not be repeated here here.

The process of obtaining the master public key of the first service node may include that the third device may extract the master public key of the first service node from the first certificate when the identity of the first service node is successfully authenticated.

Optionally, the process of sending the authentication message to the first device may be that the third device sends the authentication message to the first device when determining based on the address of the first certificate that the identity authentication of the first service node is successful.

Optionally, the process of sending the authentication message to the first device may be that, in a case of determining based on the address of the first certificate that the identity authentication of the first service node is successful, the third device verifies based on the identifier of the first device whether the first device has been revoked, and sends an authentication message to the first device in a case of determining that the first device has not been revoked.

Here, since the number of IoT devices in the same trust domain is small, the traditional revocation list may be used to revoke the identity of IoT devices. For example, a revocation list needs to be maintained at a first service node (such as a first Key generation center (KGC)) to which the first device belongs, and information such as the identity of a revoked device needs to be recorded to prevent the revoked identity from being illegally used. When the first service node receives an identity revocation request, the first service node may add information such as the identity of the IoT device to the revocation list, and upload the updated revocation list for verification. Correspondingly, the third device may verify on the chain whether the first device has been revoked based on the identifier of the first device, which may mean that the third device accesses the blockchain to search for a revocation list, obtains the status of the identifier of the first device from the revocation list, and determines that the first device has not been revoked when the status corresponding to the identifier of the first device is "not revoked", or otherwise determines that the first device has been revoked.

In an embodiment, the third device is not capable of being uploaded to the blockchain. In this case, the processing after the third device receives the request message may include: sending the address of the certificate of the first service node to the fourth device, and receiving the identity authentication result of the first service node from the fourth device.

The fourth device may be a proxy device (or a proxy node) capable of being uploaded to the blockchain, and is a proxy device for the third device. The description of the fourth device is similar to that of the second device in the above embodiments, and will not be repeated. The fourth device includes one of the following: a terminal and an access network device. The fourth device and the second device may be the same device or different devices, and the present embodiment is not limited thereto.

The processing of the fourth device may include: authenticating the identity of the first service node based on the address of the first certificate, and obtaining a master public key of the first service node. The process of authenticating the identity of the first service node by the fourth device is similar to that by the third device in the the above embodiments, except that the foregoing execution entity is replaced by the fourth device, and thus the description will not be repeated.

Optionally, the processing after the third device receives the request message may further include: sending the identifier of the first device to the fourth device. Correspondingly, the processing of the fourth device may include: in a case of determining that the identity authentication of the first service node is successful based on the address of the first certificate, verifying on the chain whether the first device has been revoked based on the identifier of the first device; and sending an identity authentication result of the first service node to the third device in a case of determining that the first device has not been revoked. Here, the process of verifying based on the identifier of the first device whether or not the first device has been revoked by the fourth device is the same as that by the third device in the the above embodiments, except that the foregoing execution entity is replaced by the fourth device, and thus will not be repeated here.

Further, the processing of the fourth device may further include: extracting the master public key of the first service node from the first certificate in a case of determining that the identity authentication of the first service node is successful; and may further include: sending the master public key of the first service node to the third device. Correspondingly, the processing of the third device may further include: receiving the master public key of the first service node from the fourth device.

Optionally, the process of sending the authentication message to the first device may be that the third device sends the authentication message to the first device in a case where the third device receives the identity authentication result of the first service node from the fourth device and determines that the identity authentication of the first service node is successful.

In an embodiment, the authentication message may further carry an address of a third certificate, the third certificate is a certificate of a second service node to which the third device belongs, the third certificate is used to authenticate an identity of the second service node, and the second service node is different from the first service node.

Since the third certificate is stored in the blockchain, the address of the third certificate refers to the address of the third certificate on the blockchain or the location information of the third certificate on the blockchain. The address of the third certificate may be obtained at the time of registration of the third device. The registration process of the third device is the same as that of the first device in the the above embodiments, and will not be repeated.

In an embodiment, the first device is capable of being uploaded to the blockchain. The processing after the first device receives the authentication message may further include: authenticating the identifier of the second service node based on the address of the third certificate, and obtaining the master public key of the second service node.

The process of authenticating the identity of the second service node based on the address of the third certificate and obtaining the master public key of the second service node by the first device is similar to the process of authenticating the identity of the first service node based on the address of the first certificate and obtaining the master public key of the first service node by the third device in the the above embodiments, except that the foregoing execution entity is replaced by the first device and the content of the certificate is different. The detailed processing of the first device is not described here.

Further, the first device also needs to perform a process of verifying on the chain whether the third device has been revoked based on the identifier of the third device. The specific process of the first device verifying on the chain whether the third device has been revoked is similar to the process of the third device verifying on the chain whether the first device has been revoked, and no repeated description will be made.

In an embodiment, since the first device is not capable of being uploaded to the blockchain, the processing after the first device receives the authentication message may further include: sending the address of the third certificate to the second device, and receiving the identity authentication result of the second service node from the second device.

In the embodiment, the detailed process of authenticating the second service node by the second device based on the address of the third certificate is similar to the process of authenticating the first service node by the second device based on the address of the first certificate in the the above embodiments, and thus repeated description will not be made.

Optionally, the processing after the first device receives the authentication message may further include: sending the identifier of the third device to the second device. Correspondingly, the processing of the second device may include: in a case of determining based on the address of the third certificate that the identity authentication of the second service node is successful, verifying on the chain whether the third device has been revoked based on the identifier of the third device; and sending an identity authentication result of the second service node to the first device in a case of determining that the third device has not been revoked. Here, the process of the second device verifying on chain whether the third device has been revoked based on the identifier of the third device is similar to the process of the third device verifying on the chain whether the first device has been revoked in the the above embodiments, and will not be repeated.

Further, the processing of the second device may further include: extracting the master public key of the second service node from the third certificate in a case of determining that the identity authentication of the second service node is successful; and may further include: sending the master public key of the second service node to the first device. Correspondingly, the processing of the first device may further include: receiving the master public key of the second service node from the second device.

In some possible implementations, signature-related authentication needs to be performed between the first device and the third device, and negotiation of security parameters needs to be completed simultaneously.

In the implementation, the authentication message carries a fourth signature for authenticating the third device. The fourth signature is calculated based on the private key of the third device. Here, the private key of the third device may be obtained in the registration process of the third device. The registration process of the third device is similar to that of the first device in the the above embodiments, and will not be repeated.

In an embodiment, the fourth signature may be calculated based on the private key of the third device, an identifier of the third device, and a fourth parameter. The fourth parameter includes at least one of a security parameter of the third device and the identifier of the third device.

Optionally, the authentication message may further carry the security parameter of the third device. That is, in addition to the fourth signature and the identifier of the third device, the authentication message may also carry the security parameter of the third device. The fourth parameter may include the security parameter of the third device.

The contents in the authentication message may be completely or partially related to the fourth parameter. As long as both the authentication message and the fourth parameter include the security parameter of the third device, it shall fall within the protection scope of the embodiment, and all possible combinations are not limited or exhausted here.

The process of calculating the fourth signature by the third device may include: using a signature algorithm to calculate the security parameter of the third device based on the private key of the third device to obtain the fourth signature. For example, it may be expressed as *Sig*(*X*_{C} · *P*), where *X_{C}* · *P* represents the security parameter of the third device, and will not be repeated here.

The process of using the signature algorithm to calculate the security parameter of the third device based on the private key of the third device to obtain the fourth signature may include: performing hash calculation on the security parameter of the third device using the signature algorithm to obtain a fourth hash value, and encrypting the fourth hash value based on the private key of the third device to obtain the fourth signature. For example, the preocess may be expressed as *Sig*(*H*(*X_{C}* · *P*)), and the meaning of each content in the formula is the same as that in the the above embodiments, and will not be repeated.

Optionally, the authentication message may further carry the security parameter of the third device and the identifier of the third device. The fourth parameter may include the security parameter of the third device and the identifier of the third device. The content carried in the authentication message may be completely or partially related to the fourth parameter, but as long as both the authentication message and the fourth parameter include the security parameter of the third device, it shall fall within the protection scope of the embodiment, and all possible combinations are not limited or exhausted here.

The process of calculating the fourth signature by the third device may include: using a signature algorithm to calculate the security parameter of the third device based on the private key of the third device and the identifier of the third device to obtain the fourth signature. For example, the process may be denoted as *Sig*(ID_{C}, *X*_{C} *· P*), where ID_{C} represents the identifier of the third device, and will not be repeated here.

The process of by using the signature algorithm to calculate the security parameter of the third device based on the private key of the third device to obtain the fourth signature may include: performing hash calculation on the security parameter of the third device and the identifier of the third device using the signature algorithm to obtain a fourth hash value, and encrypting the fourth hash value based on the private key of the third device to obtain the fourth signature. For example, the process may be expressed as *Sig*(*H*(*ID*_{C}, *X_{C}* · *P)),* and the meaning of each content in the formula is the same as that in the the above embodiments, and will not be repeated here.

In an embodiment, the request message may carry a fourth random value. The authentication message further carries a third random value. The third random value may be generated before the third device sends the authentication message, and the method of generating the third random value is not limited in the embodiment. In such an embodiment, in addition to the security parameter of the third device, the fourth parameter may further include at least one of the third random value, the identifier of the first device, and the fourth random value.

The process of calculating the fourth signature by the third device may include: using a signature algorithm to calculate the third random value, the identifier of the first device, the fourth random value, the security parameter of the third device, and the identifier of the third device based on the private key of the third device to obtain the fourth signature. For example, the process may be expressed as *Sig*(*N _{A}*, *N*_{C}, *ID_{A}*, *ID*_{C}, *X*_{C} · *P*), where Sig () represents the signature algorithm, *N _{A}* represents the fourth random value, *N _{C}* represents the third random value, and ID_{A} represents the identifier of the first device. The meanings of other contents in the formula are the same as those in the the above embodiments, and will not be repeated here.

The process of using the signature algorithm to calculate the third random value, the identifier of the first device, the fourth random value, the security parameter of the third device, and the identifier of the third device based on the private key of the third device to obtain the fourth signature may include: using a signature algorithm to perform hash calculation on the third random value, the identifier of the first device, the fourth random value, the security parameter of the third device, and the identifier of the third device to obtain a fourth hash value, and encrypting the fourth hash value based on the private key of the third device to obtain the fourth signature. For example, the process may be expressed as *Sig*(*H*(*N _{A}, N_{C}, ID_{A}*, *ID_{C}*, *X_{C}* · P)), where the meaning of each content in the formula is the same as that in the the above embodiments, and will not be repeated here.

It should be understood that the above are all exemplary descriptions of the calculation of the fourth signature. Neither the calculation method of the fourth signature nor all possible combinations of the complete possible contents of the fourth parameter involved in the calculation of the fourth signature are limited or exhaustively enumerated herein. As long as at least one content in the fourth parameter is used in the actual calculation of the fourth signature, it shall fall within the protection scope of the present embodiment.

In an embodiment, after the first device receives the authentication message carrying the fourth signature for authenticating the third device, the processing of the first device may further include: authenticating the third device based on a public key associated with the third device, an identifier of the third device, and the fourth signature.

In the implementation, since the first device and the third device have different trust domains, the service node to which the first device belongs is the first service node, and the service node to which the third device belongs is the second service node. The public key associated with the third device includes the identifier of the third device and the master public key of the second service node. Specifically, the public key associated with the third device includes: the public key of the third device and the master public key of the second service node. The public key of the third device may be the identifier of the third device. Here, the method of acquiring the master public key of the second service node has been detailed in the the above embodiments, and will not be repeated here.

Authenticating the third device based on the public key associated with the third device, the identifier of the third device and the fourth signature includes: authenticating the third device based on the public key associated with the third device, the fourth signature, the identifier of the third device, and a fourth parameter, the fourth parameter including at least one of: the security parameter of the third device, and the identifier of the third device.

Optionally, the first device may determine the fourth parameter based on the authentication message, and the fourth parameter may be fully or partially related to the authentication message, which is not exhausted here. It should be understood that in actual processing, as long as the first device and the third device use the same fourth parameter, it shall within the scope of protection of the embodiment, and no all possible situations are limited or exhausted here.

For example, the authentication message carries a fourth signature for authenticating the third device and the identifier of the third device, and further carries the security parameter of the third device. The fourth parameter includes at least one of: the security parameter of the third device, and the identifier of the third device.

Optionally, the first device may determine the fourth parameter based on the authentication message and the request message, and the fourth parameter may be fully or partially related to the authentication message and the request message, which is not exhausted here. It should be understood that in actual processing, as long as the first device and the third device use the same fourth parameter, it shall within the scope of protection of the embodiment, and no all possible situations are limited or exhausted here. For example, the authentication message further carries a third random value; and the fourth parameter further includes at least one of the third random value, the identifier of the first device, and a fourth random value. Here, the fourth random value and the identifier of the first device are carried in the request message, and the third random value is carried in the authentication message.

In an embodiment, the process of authenticating the third device based on the public key associated with the third device, the fourth signature, the identifier of the third device, and the fourth parameter may include: the first device decrypts the fourth signature using a signature verification algorithm based on the public key associated with the third device to obtain fourth decrypted information, and authenticates the third device based on the fourth decrypted information and the fourth parameter.

Optionally, the fourth decrypted information may include a fourth parameter to be verified that is of the same type as each content type in the fourth parameter. The process of authenticating the third device based on the fourth decrypted information and the fourth parameter may include one of: determining that the authentication of the third device is successful when the fourth parameter to be verified and the fourth parameter are the same; and when the fourth parameter to be verified and the fourth parameter are different, determining that authentication of the third device fails. The composition of the fourth parameter has been in detailed in the above embodiments, and will not be repeated.

Optionally, the fourth decrypted information may include a fourth decryption hash value. The process of authenticating the third device based on the fourth decrypted information and the fourth parameter may include: the first device performs hash calculation on the fourth parameter to obtain a fourth verification hash value; and authenticating the third device based on the fourth decryption hash value and the fourth verification hash value.

The process of authenticating the third device based on the fourth decryption hash value and the fourth verification hash value may include at least one of: determining that authentication of the third device is successful when the fourth decryption hash value and the fourth verification hash value are the same; and when the fourth decryption hash value and the fourth verification hash value are different, determining that authentication of the third device fails. The composition of the fourth parameter has been described in detail in the above embodiments, and will not be repeated here.

In some possible implementations, in a case of the first device successfully authenticating the third device, the processing of the first device may further include: sending a response message to the third device, wherein the response message carries a fifth signature for authenticating the first device.

The fifth signature may be calculated based on the private key of the first device and a fifth parameter, wherein the fifth parameter includes at least one of: the identifier of the first device and the security parameter of the first device.

In this embodiment, the response message further carries at least one of: the identifier of the first device and the security parameter of the first device.

Here, the method of obtaining the private key of the first device has been described in detail in the the above embodiments, and the description thereof will not be repeated.

The method in which the first device calculates the fifth signature may be that the first device calculates the fifth signature using a signature algorithm based on the private key of the first device and the second parameter.

In an embodiment, the content carried in the response message and the fifth parameter may be completely or partially related, and in actual processing, as long as the response message carries at least the security parameter of the first device and the fifth parameter includes at least the security parameter of the first device, it shall within the scope of protection of the embodiment, and no all possible situations are limited or exhausted here.

For example, the fifth parameter may include the identifier of the first device and the DH parameter of the first device. The fifth signature calculated by the first device may be denoted as *Sig(ID_{A}*, *X_{A} · P,* where Sig () represents the signature algorithm, *ID_{A}* represents the identifier of the first device, and *X_{A}* ·*P* represents the DH parameter of the first device.

The signature algorithm may include hash calculation and encryption calculation. Correspondingly, the first device calculates the fifth parameter to obtain the fifth signature based on the private key of the first device, which may include: the first device performs hash calculation on the fifth parameter to obtain a fifth hash value, and encrypts the fifth hash value based on the private key of the first device to obtain the fifth signature. For example, it can be expressed as *Sig*(*H(ID_{A}, X_{A} · P,* the signature algorithm, and other contents in the formula have the same meaning as those in the foregoing embodiments, and will not be repeated.

In an embodiment, in addition to the identifier of the first device and/or the security parameter of the first device, the fifth parameter may further include at least one of the identifier of the third device and the third random value.

For example, the fifth parameter may include the identifier of the first device, the DH parameter of the first device, the identifier of the third device, and the third random value. The process of calculating the fifth signature by the first device may be expressed as *Sig(N_{C}, ID_{C}, ID_{A}, X, · PN_{C}* represents the third random value, and *ID_{C}* represents the identifier of the third device, and the meaning of the rest of the formula is the same as that in the above embodiments, and will not be repeated. Alternatively, the process may be expressed as *Sig*(*H*(*N_{C},ID_{C},ID_{A},X_{A} ·P* each content in the formula is the same as that in the above embodiments, and will not be repeated.

It should be understood that the above is an exemplary description of calculating the fifth signature. Neither the calculation method of the fifth signature nor all possible combinations of the complete possible contents of the fifth parameter involved in the calculation of the fifth signature are limited or exhaustively enumerated herein. As long as at least one type of contents of the fifth parameter is used when the fifth signature is actually calculated, it shall within the scope of protection of the embodiment.

In some embodiments, the processing of the third device may include: receiving a response message from the first device, wherein the response message carries a fifth signature for authenticating the first device.

Further, the processing of the third device may further include: authenticating the first device based on the public key associated with the first device and the fifth signature.

In the implementation, the public key associated with the first device includes the identifier of the first device and the master public key of the first service node. Specifically, the public key associated with the first device includes: the public key of the first device and the master public key of the first service node. The public key of the first device may be the identifier of the first device. Here, the method of acquiring the master public key of the first service node has been detailed above, and will not be repeated here.

In an embodiment, the response message may further carry at least one of: the identifier of the first device and the security parameter of the first device.

Authenticating the first device based on the public key associated with the first device and the fifth signature includes: authenticating the first device based on the public key associated with the first device, the fifth signature and a fifth parameter, wherein the fifth parameter includes at least one of the identifier of the first device and the security parameter of the first device.

In an example, the third device may determine the fifth parameter based on the response message, and the fifth parameter may be fully or partially related to the response message. In an example, the third device may determine the fifth parameter based on the response message and the authentication message, the fifth parameter being completely or partially related to the response message and the authentication message. It should be understood that the above is only an exemplary description, and in actual processing, as long as the first device and the third device use the same fifth parameter, it shall within the scope of protection of the embodiment, and no all possible situations are limited or exhausted here.

In an embodiment, the process of authenticating the first device based on the public key associated with the first device, the fifth signature and the fifth parameter may include: decrypting the fifth signature using a signature verification algorithm based on the public key associated with the first device to obtain fifth decrypted information, and authenticating the first device based on the fifth decrypted information and the fifth parameter.

Optionally, the fifth decrypted information may include a fifth parameter to be verified that is of the same type as each content type in the fifth parameter. The process of authenticating the first device based on the fifth decrypted information and the fifth parameter may include one of the following: determining that the authentication of the first device is successful when the fifth parameter to be verified and the fifth parameter are the same; and, when the fifth parameter to be verified and the fifth parameter are different, determining that authentication of the first device is failed. The composition of the fifth parameter has been detailed in the above embodiments, and will not be repeated.

Optionally, the fifth decrypted information may include a fifth decryption hash value. Authenticating the first device based on the fifth decrypted information and the fifth parameter may include: performing hash calculation on the fifth parameter to obtain a fifth verification hash value; and authenticating the first device based on the fifth decryption hash value and the fifth verification hash value.

Authenticating the first device based on the fifth decryption hash value and the fifth verification hash value may include at least one of: determining that authentication of the first device is successful when the fifth decryption hash value and the fifth verification hash value are the same; and when the fifth decryption hash value and the fifth verification hash value are different, determining that authentication of the first device failed. The composition of the fifth parameter has been detailed in the above embodiments, and will not be repeated.

In some possible implementations, the first device and the third device may complete the negotiation of the third session key in the process of authentication.

In a case where the third device determines that the authentication of the first device is successful, the processing of the third device may further include: calculating a third session key based on the security parameter of the third device and the security parameter of the first device, wherein the third session key is used for communication between the first device and the third device.

In a case where the first device determines that the authentication of the third device is successful, the processing of the first device may further include: calculating a third session key based on the security parameter of the third device and the security parameter of the first device, wherein the third session key is used for communication between the first device and the third device. It should be noted that the first device may calculate the fifth signature after calculating the third session key.

Here, the description of the third session key used for communication between the first device and the third device is similar to those of the first session key and the second session key, and thus will not be repeated here.

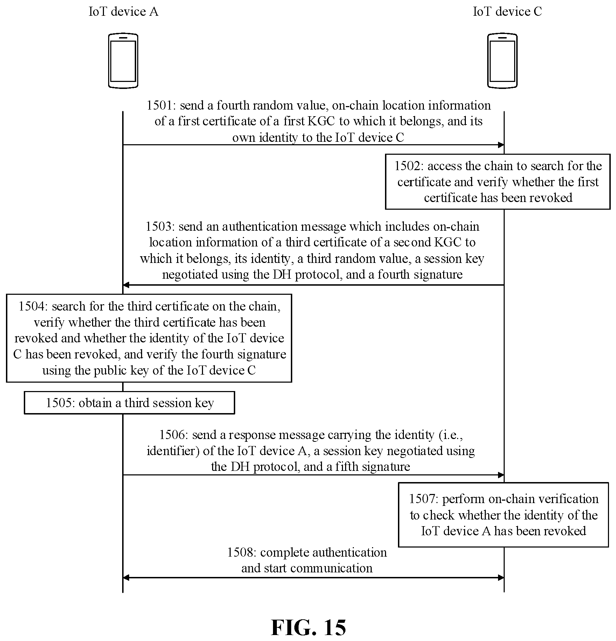

FIG. 15 illustrates an example in which the first device is denoted by the IoT device A and the third device is denoted by the IoT device C, and inter-domain authentication between IoT devices refers to identity authentication between IoT devices belonging to different trust domains. When authentication is performed between IoT devices in different domains, an IoT device is required to send the certificate of the KGC to which the IoT device belongs to explain its identity and prove the legality of its identity. Since the certificate of the KGC is generated by the issuance node and is saved on the chain after being approved by the on-chain node, if the certificate can be found on the chain according to the address, the authenticity and validity of the certificate can be guaranteed. The legitimacy of the identity of the IoT device can be guaranteed by a signature. If the public key of the IoT device and the system public key (including the master public key of the KGC to which it belongs) can be successfully verified, the IoT device belongs to the trust domain of the KGC it claims, which means that the identity of the IoT device is legal. The inter-domain authentication process includes a three-way handshake. For example, IoT device A and IoT device C belong to different trust domains, and they need to perform identity authentication. In the scenario of FIG. 15, it is assumed that both A and C have the ability to download certificates from the chain, which specifically includes the following processing.

Step 1501 includes: the IoT device A sends a fourth random value *N_{A},* information (*add*_{KGC-A}) of a first certificate of a first KGC to which it belongs, and its own identity *ID_{A}* to the IoT device C. In this step, the message sent by the IoT device A to the IoT device C may be the aforementioned request message, such as *A* → *C: add*_{KGC-A}, *ID_{A}*, *N_{A}.*

Step 1502 includes: after receiving the message from the IoT device A, the IoT device C accesses the chain to search for the certificate and verifies whether the first certificate has been revoked; and if the first certificate is found and has not been revoked, step 1503 is executed, otherwise, the processing ends.

Step 1503 includes: the IoT device C sends an authentication message to the IoT device A, and the authentication message includes location information on the chain (*add*_{KGC-C}) of a third certificate of a second KGC to which it belongs, the identity of the IoT device C (*ID_{c}*), a third random value *N_{c}*, a session key negotiated using the DH protocol, and a fourth signature.

In this step, the sending direction of the authentication message and the content carried by the authentication message may be expressed as: *C* → *A* : *add*_{KGC-C},*ID_{C},N_{C},X_{C} · P,SigHN_{A},N_{C},ID_{A},ID_{C},X_{C}* ·*P*))*.*

Here, the purpose of signing the fresh value *N_{A}* with the private key is to enable the IoT device A to authenticate that the received message is not a replay one but indeed from the IoT device C, and signing *ID_{A}* with the private key indicates that the IoT device C has received the message from the IoT device A; the purpose of using the private key to sign *N_{c}* is to enable the IoT device C to authenticate that the received message is not a replayed one but does come from the IoT device A; and signing *ID_{c}* with the private key indicates that the IoT device A has received the message from the IoT device C.

Step 1504 includes: after receiving the authentication message from the IoT device C, the IoT device A searches for the third certificate on the chain, verifies whether the third certificate has been revoked, and verifies whether the identity of the IoT device C has been revoked; and if neither the third certificate nor the identity of the IoT device C has been revoked, verifies the fourth signature using the public key *ID_{c}* of the IoT device C.

Step 1505 includes: the IoT device A and the IoT device C complete the negotiation of the session key to obtain a third session key.

Step 1506 includes: the IoT device A sends a response message to the IoT device C, the response message carrying the identity (i.e., identifier) of the IoT device A, a session key negotiated using the DH protocol, and a fifth signature.

In this step, the sending direction of the response message and the content carried by the response message may be expressed as: *A* → *C* : *ID_{A}*, *X_{A} ·P, SigHN_{C},ID_{A},ID_{C},X_{A} · P.*

Here, the purpose of signing *N_{c}* with the private key is to enable the IoT device C to authenticate that the received message is not a replayed one but indeed from the IoT device A. Signing *ID_{c}* with the private key indicates that the IoT device A has received the message from the IoT device C.

Step 1507 includes: after receiving the response message of the IoT device A, the IoT device C performs on-chain verification to check whether the identity of the IoT device A has been revoked; if not yet revoked, verifies the fifth signature using the public key *ID_{A}* of the IoT device A, and obtains the third session key after the verification is successful, and then step 1508 is executed; if the identity of the IoT device A has been revoked and/or the verification of the fifth signature fails, the processing is ended.

Step 1508 includes: the IoT device A and the IoT device C complete authentication and start communication.

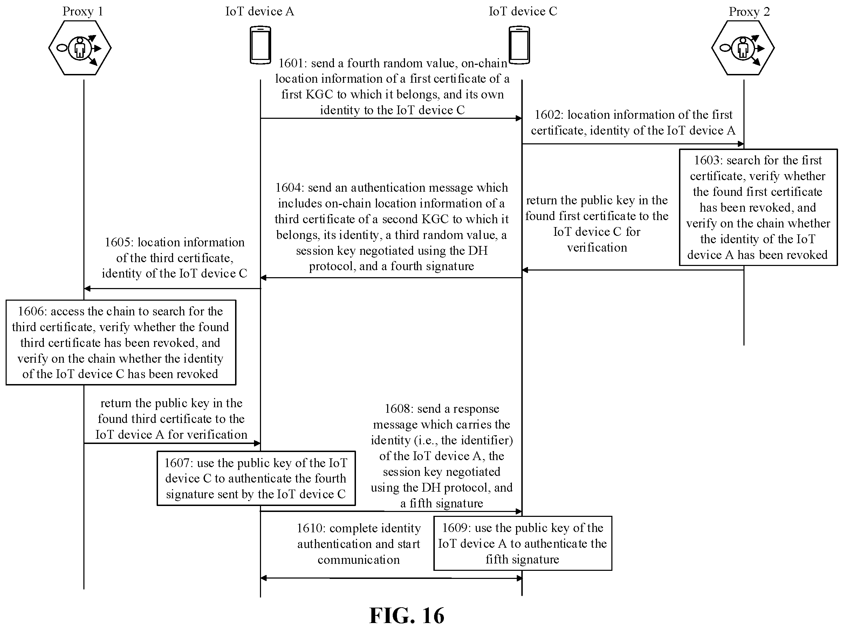

FIG. 16 illustrates an example in which the first device is IoT device A, the third device is IoT device C, the second device and the fourth device as proxies (in FIG. 16, the proxy on the left side corresponding to IoT device A may be proxy 1 (that is, the second device), the proxy on the right side corresponding to IoT device C may be proxy 2 (that is, the fourth device), and proxy 1 and proxy 2 may be the same or different). It is assumed that neither A nor C has the ability to download certificates from the chain, the proxy may be entrusted to help them download certificates from the chain. When A needs to perform on-chain operations (e.g., downloading a certificate from the chain and verifying on the chain whether the other party's identity has been revoked), A may find a proxy to help it complete the on-chain operation to complete the authentication operation. Similarly, when C needs to perform on-chain operations, C also needs to find a proxy to help it complete the authentication operation. Assuming that a secure channel has been established between the proxy and the IoT device, and that the IoT device A and the IoT device C use the same proxy, the process may include following steps.

Step 1601 is the same as step 1501, and will not be repeatedly described.

Step 1602 includes: after receiving a message from the IoT device A, the IoT device C sends the location information (*add*_{KGC*-*A}) of the first certificate and the identity *ID_{A}* of the IoT device A to the proxy 2. For example, it may be denoted as: *C* → *proxy* : *add*_{KGC-A}, *ID_{A}.*

Step 1603: the proxy 2 searches for the first certificate on the chain, verifies whether the found first certificate has been revoked, and verifies on the chain whether the identity of the IoT device A has been revoked; if the verification is successful (including finding the first certificate, confirming that the found first certificate has not been revoked, and confirming that the identifier of the IoT device A has not been revoked), returns the public key in the found first certificate to the IoT device C for verification, otherwise, returns the authentication failure flag *NG.* For example, this step may be represented as *proxy* → *C* : *PK*_{*KGC*-A} or *NG.*

Step 1604 is the same as step 1503 shown in FIG. 15, and the description thereof will not be repeated.

Step 1605: after receiving the message sent by the IoT device C, the IoT device A sends the location information *add*_{*KGC*-C} of the third certificate and the identity *ID_{c}* of the IoT device C to the proxy 1. For example, this step may be represented as *A* → *agency : add*_{KGC-C},*ID_{C}.*

Step 1606: the proxy 1 access the chain to search for the third certificate, verifies whether the found third certificate has been revoked, and verifies whether the identity of the IoT device C on the chain has been revoked; if the verification is successful (including finding the third certificate, confirming that the found third certificate has not been revoked, and confirming that the identity of the IoT device C has not been revoked), returns the public key in the found third certificate to the IoT device A for verification, otherwise, returns the authentication failure flag. For example, this step may be represented as *proxy* → *A: PK*_{*KGC*-C}or *NG.*

Step 1607 includes: after receiving the message from the proxy 1, the IoT device A verifies the fourth signature sent by the IoT device C by using the public key *ID_{c}* of the IoT device C; if the signature verification is successful, the identity of the IoT device C may be proved legal, the IoT device A and the IoT device C complete the negotiation of the third session key, and simultaneously generate the fifth signature by using the private key.

Step 1608 includes: the IoT device A sends, to the IoT device C, a response message which carries the identity (i.e., the identifier) of the IoT device A, the session key negotiated using the DH protocol, and the fifth signature. For example, it may be expressed as *A* → *C*: *ID_{A}, X_{A} · P, Sig(H(N_{C}, ID_{A}, ID_{C}, X_{A} · P*

Step 1609 includes: after receiving the response message from the IoT device A, the IoT device C verifies the fifth signature using the public key *ID_{A}* of the IoT device A, obtains the third session key after the verification is successful, and executes step 1610; if the identity of the IoT device A has been revoked and/or the verification of the fifth signature fails, the processing ends.

Step 1610 includes: the IoT device A and the IoT device C complete authentication and start communication.

In some embodiments, the first device and the third device belong to the same trust domain. In the embodiment, the first device and the third device belong to the same trust domain, which may refer to that the first device and the third device belong to the same service node which is the first service node.

In the embodiment, the first device is still the device that initiates the authentication request. The processing of the first device may include: sending a request message to the third device, wherein the request message carries at least one of: the identifier of the first device, and a fourth random value. Correspondingly, the processing of the third device may include: receiving the request message from the first device, wherein the request message carries at least one of: the identifier of the first device and the fourth random value. Here, the fourth random value may be generated by the first device, and the specific generation method of the fourth random value is not limited in this embodiment.

In the embodiment, since the first device and the third device belong to the same trust domain, certificate-related authentication may not be performed between the first device and the third device.

Optionally, the third device is capable of being uploaded to the blockchain. The third device still needs to perform a process of authenticating whether the first device has been revoked. The process of the third device verifying on the chain whether the first device has been revoked is the same as that in the the above embodiments, and will not be repeated.

Optionally, the third device is not capable of being uploaded to the blockchain. In this case, the processing after the third device receives the request message may include: sending the identifier of the first device to the fourth device. Correspondingly, the processing of the fourth device may include: verifying on the chain whether the first device has been revoked based on the identifier of the first device; in a case of determining that the first device has not been revoked, sending a result that the first device has not been revoked to the third device. Here, the process of verifying whether or not the first device has been revoked by the fourth device based on the identifier of the first device is the same as the process of verifying whether or not the first device has been revoked by the third device in the the above embodiments, except that the execution entity is replaced by the fourth device, so it is not described in detail here. The description of the fourth device is the same as that in the above embodiments, and will not be repeated.

Further, the processing of the third device may further include: sending an authentication message to the first device in a case of determining that the first device has not been revoked.

In the implementation, the authentication message carries an identifier of the third device.

After receiving the authentication message of the third device, the first device may first verify the identifier of the third device.

In an embodiment, if the first device is capable of being uploaded to the chain, the first device needs to verify on the chain whether the third device has been revoked based on the identifier of the third device. The process of the first device verifying on the chain whether the third device has been revoked is similar to the process of the third device verifying on the chain whether the first device has been revoke, and the description will not be repeated.

In an embodiment, the first device is incapable of being uploaded to the chain, and therefore, the processing after the first device receives the authentication message may further include: sending the identifier of the third device to the second device. Correspondingly, the processing of the second device may include: verifying on the chain whether the third device has been revoked based on the identifier of the third device; in a case of determining that the third device has not been revoked, sending a result that the third device has not been revoked to the first device. Here, the process of verifying whether the third device has been revoked by the second device based on the identifier of the third device is similar to the process of verifying whether the first device has been revoked by the third device in the the above embodiments, and thus will not be repeated.

In the implementation, the first device and the third device need to perform signature-related authentication and simultaneously complete negotiation of security parameters.

The authentication message may carry a fourth signature for authenticating the third device. The processing related to calculation of the fourth signature by the third device is the same as that in the above embodiments, and thus will not be repeated.

After the first device receives the authentication message carrying the fourth signature for authenticating the third device, the processing of the first device may further include: authenticating the third device based on the public key associated with the third device, the identifier of the third device, and the fourth signature.

Here, a service node to which the first device and the third device belong is a first service node; the public key associated with the third device includes the identifier of the third device and a master public key of the first service node, the master public key of the first service node being a preconfigured one.

Based on the public key associated with the third device, the identifier of the third device and the fourth signature, the processing related to the authentication of the third device by the first device is the same as that in the above embodiments, with the difference being only that the composition of the public key associated with the third device in the embodiment is different, and thus the description thereof will not be repeated.

When the first device successfully authenticates the third device, the processing of the first device may further include: sending a response message to the third device, wherein the response message carries a fifth signature for authenticating the first device. The processing related to the calculation of the fifth signature by the first device is the same as that in the above embodiments, and will not be repeated here.

The processing of the third device may include: receiving a response message from the first device, wherein the response message carries a fifth signature for authenticating the first device. The processing of the third device may further include: authenticating the first device based on the public key associated with the first device and the fifth signature.

In the embodiment, a service node to which the first device and the third device belong is a first service node. The public key associated with the first device includes the identifier of the first device and a master public key of the first service node, the master public key of the first service node being a preconfigured one

The detailed description of authenticating the first device by the third device based on the public key associated with the first device and the fifth signature is the same as that in the above embodiments, except that the composition of the public key associated with the first device in the embodiment is different, and thus repeated description will not be made.

In the above authentication process, the first device and the third device may complete the negotiation of security parameters to obtain the third session key, and specific processing for the first device and the third device to obtain their respective third session keys is also the same as that of the above embodiments, and will not be repeated here.

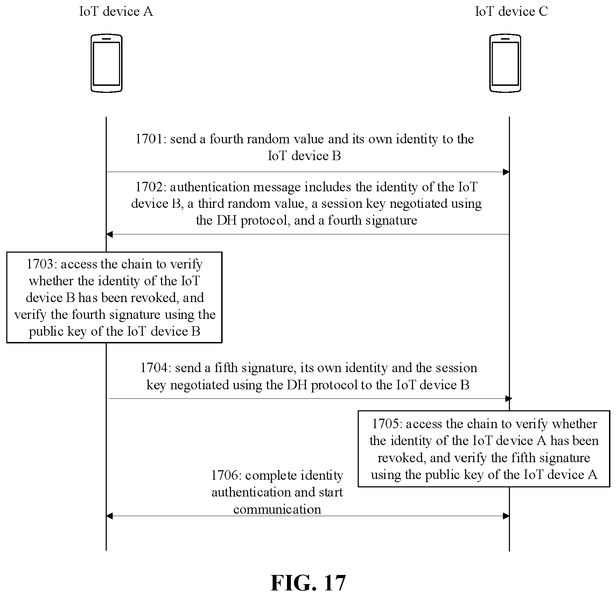

FIG. 17 illustrates an example in which the first device is the IoT device A and the third device is the IoT device B, and intra-domain authentication between IoT devices refers to identity authentication between IoT devices in the same trust domain. Intra-domain authentication requires a three-way handshake. Assuming that IoT device A and IoT device B belong to the same trust domain, and need to perform identity authentication. Assuming that both A and B have the capability of being uploaded to the chain, A and B may verify whether the other party's identity has been revoked by themselves. The specific process includes following steps.

Step 1701 includes: the IoT device A sends the fourth random value *N_{A}* and its own identity *ID_{A}* to the IoT device B. For example, it may be expressed as *A* → *B* : *ID_{A}, N_{A}.*

Step 1702 includes: the authentication message sent by the IoT device B to the IoT device A includes the identity of the IoT device B, a third random value *N_{B}*, a session key negotiated using the DH protocol, and a fourth signature. Here, the preceding calculation method of the fourth signature is the same as that of the aforementioned embodiments, and the description thereof will not be repeated. For example, it may be expressed as *B* → *A*: *ID_{B} , N_{B}, X_{B} · P, SigHN_{A}*, *N_{B},ID_{A},ID*_{B}, *X*_{B} *· P*)).

Step 1703 includes: after receiving the authentication message from the IoT device B, the IoT device A verifies on the chain whether the identity of the IoT device B has been revoked, and verifies the fourth signature by using the public key *ID_{B}* of the IoT device B; if the verification is successful, the step 1704 is executed, otherwise, the processing is terminated.

Step 1704 includes: the IoT device A completes session-key negotiation with the IoT device B to obtain a third session key; calculates the fifth signature with the private key, and sends the fifth signature, the identity of the self, and the session key negotiated using the DH protocol to the IoT device B. For example, it is expressed as *A* → *B*: *ID*_{A}*, X*_{A} *· P, Sig*(*H(N*_{B}, *ID*_{A},*ID*_{B},*X*_{A} *· P*)).

Step 1705 includes: after receiving the message from the IoT device A, the IoT device B verifies on the chain whether the identity of the IoT device A has been revoked, and verifies the fifth signature using the public key *ID_{A}* of the IoT device A; if the verification is successful, step 1706 is executed, otherwise, the processing is terminated. In this step, the IoT device B further calculates and obtains the third session key.

Step 1706 includes: the IoT device A and the IoT device B complete identity authentication and start communication.

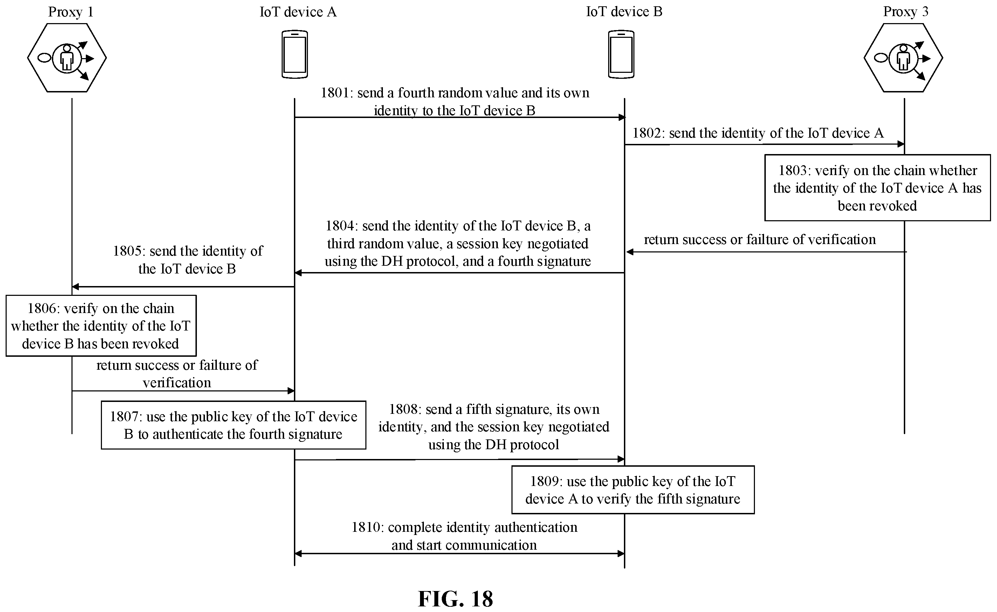

FIG. 18 illustrates an example in which the first device is IoT device A and the third device is IoT device B, and intra-domain authentication between IoT devices refers to identity authentication between IoT devices within the same trust domain. Assuming that both IoT device A and IoT device B do not have the capability of being uploaded to the chain, a proxy may be entrusted (in FIG. 18, the proxy on the left side corresponding to IoT device A may be proxy 1 (i.e. the second device), the proxy on the right side corresponding to IoT device B may be proxy 3 (i.e. the fourth device), and proxy 1 and proxy 3 may be the same or different) to help them verify on the chain whether their corresponding identity has been revoked. If the proxy verifies that the identity has been revoked, it returns the authentication failure flag *NG*; and if the verification is successful, it returns flag *OK* indicating successful verification. This process may include following steps.

Step 1801 is the same as step 1701 and will not be repeated.

Step 1802 includes: the IoT device B sends the identity of IoT device A to proxy 3.

Step 1803: the Proxy 3 verifies on chain whether the identity of IoT device A has been revoked; if not yet revoked, returns a result indicating that the verification is correct to IoT device B; otherwise, determines that the verification is failed and ends the process.

Step 1804 includes: the authentication message sent by the IoT device B to the IoT device A includes an identity of the IoT device B, a third random value *N_{B}*, a session key negotiated using the DH protocol, and a fourth signature. Here, the fourth preceding calculation method is the same as that of the aforementioned embodiment, and the description thereof will not be repeated.

Step 1805: after receiving the authentication message from the IoT device B, the IoT device A sends the identity of the IoT device B to the proxy 1.

Step 1806 includes: proxy 1 verifies on the chain whether the identity of IoT device B has been revoked; if not revoked, returns a result indicating that the verification is correct to IoT device A, otherwise, determines that the verification fails, and the processing is terminated.

Step 1807 includes: the IoT device A verifies the fourth signature using the public key *ID_{B}* of the IoT device B, and step 1808 is executed if the verification is successful, otherwise, the processing is terminated.

Step 1808 includes: the IoT device A completes the session-key negotiation with the IoT device B to obtain a third session key; calculates the fifth signature using the private key, and sends the fifth signature, the identity of the IoT device A, and the session key negotiated using the DH protocol to the IoT device B.

Step 1809 includes: after receiving the message from the IoT device A, the IoT device B verifies the fifth signature using the public key *ID_{A}* of the IoT device A; if the verification is successful, step 1810 is executed; otherwise, the processing is terminated. In this step, the IoT device B calculates the third session key.

Step 1810 includes: the IoT device A and the IoT device B complete identity authentication and start communication.

By adopting the authentication method provided in the embodiment, the first device and the third device can achieve authentication only by exchanging the signatures calculated using their own private keys during the authentication process, so that the first device and the third device do not need to store excessive content in the entire authentication process, and thus the storage space of the first device and the third device can be saved, and the storage cost of the first device and the third device can be reduced.

The basic principle of the Public Key Infrastructure (PKI) in the above embodiments is: a third-party authority, namely Certificate Authority (CA), combines a public key held by a user with the identity information (such as name, telephone number, etc.) of the user. Before the two are combined, the authenticity of the user's identity is verified by the CA, and then the CA signs the certificate that binds the user and the public key.

Identity Based Cryptography (IBC) is another branch of public key cryptography, which directly takes the unique characteristic information of a user as the user's public key (i.e. user identifier), such as a mail address, a mobile phone number, etc. The user does not need to apply for and exchange certificates, thus greatly simplifying the complexity of certificate management in the cryptosystem. The user's private key is calculated and generated using a private key generation algorithm by a trusted key generation center (KGC) in the system. The private key generation algorithm may be the national cryptographic algorithm SM9, which may specifically include the SM9 digital signature algorithm, the SM9 identity-based encryption (SM9-IBE) algorithm, and SM9 key agreement (SM9-KA) protocol

Two-layer identity architecture based on blockchain: the identity management architecture for integrated sensing and communication (ISAC) scenarios and zero-power consumption scenarios is designed as a two-layer architecture. The entire protocol framework consists of two parts: the CA model (with the committee jointly acting as a trusted center) is adopted between committee nodes and issuance nodes, while the blockchain model is used between issuance nodes and their corresponding IoT devices (i.e., light nodes). Since the number of issuance nodes is relatively small, the CA model facilitates authorization and management. The volume of IoT device data authorized by issuance nodes is enormous, making the blockchain model a more suitable solution. Combining these two models enables the system to better align with current mainstream market practices and render the overall system structure more cohesive and hierarchical.

Blockchain mode: the blockchain model is adopted between issuance nodes and their corresponding IoT devices. Specifically, the certificates of IoT devices are stored on the blockchain; when a certificate is required, it is retrieved from the corresponding location on the blockchain. After an IoT device's certificate is issued by the issuance node, an application for on-chain storage is submitted. Once verified and approved by multiple on-chain nodes, the certificate is added to the blockchain through a consensus algorithm. On-chain nodes first verify the issuance node's certificate using the joint committee's public key, and upon successful verification, then verify the IoT device's certificate using the corresponding issuance node's public key. After passing both verifications, the IoT device's certificate is stored on the blockchain, and the certificate's location information is returned to the issuance node, which subsequently forwards this location information to the IoT device. In this scenario, the IoT device itself only needs to store the certificate's on-chain location information instead of the certificate itself. Verifiers also only need to retrieve the certificate from the corresponding on-chain location based on the location information sent by the sender. If the certificate is found at the specified location, its authenticity and validity are guaranteed, eliminating the need for verifiers to re-verify them. This significantly reduces communication traffic and computational overhead.

However, in the above processing, a user (i.e., any device) must carry its own certificate at all times to prove its identity. However, the certificate, which contains various types of public information such as identity, is excessively long, making it inconvenient to carry. Especially for the massive IoT, if each device stores a separate certificate, it will impose a heavy burden on storage servers.

The construction idea of the solution provided by the embodiments of the present disclosure may be that: under the IBC system, after a business party purchases devices and servers from manufacturers, it can establish its own KGC. The business party may independently manage and serve IoT devices under the same trust domain through the KGC. The KGC is required to be registered into the two-layer architecture and act as an IoT device in the two-layer architecture (such as the two-layer architecture shown in FIG. 8), that is, the KGC needs to submit public materials such as identity and public key to the issuance node to obtain a certificate issued by the issuance node. In the IoT, two types of devices need to be considered: one is devices with computing capabilities, and the other is zero-power consumption devices.

The possible definitions of each device in the solution provided in the embodiments of the present disclosure are as follows: the issuance node may be a business party, that is, a vertical industry or a small and medium-sized manufacturer with many devices, such as logistics enterprises, manufacturing industries, breeding industries, etc.; each target device among the multiple target devices may be any IoT device (or any zero-power device) of the business party, and the multiple target devices belong to the same KGC (i.e., the same service node); the second device may be an IoT device, that is, any IoT device of the business party, which may belong to a different KGC or the same KGC as the multiple target devices; alternatively, the second device may also be an AFE (i.e., a network device), which may be deployed on an operator's device (such as a base station, AMF, SEAF, NWDF, PCF, NEF, etc.) or an authentication server of a third-party security service provider. In this case, the AFE and the multiple target devices belong to different trust domains. The first device may be a proxy device, which is a device of the business party with computing capabilities and permission to access the blockchain, and is fully responsible for the identity authentication of zero-power devices. The first device belongs to the same trust domain as the multiple target devices. For example, the type of the proxy device may be any one of UE, IAB, relay, repeater, etc.

The national cryptographic SM9 algorithm can implement an identity-based cryptosystem, involving key encapsulation, signature, security parameters, public key encryption algorithms, etc. The solution provided in the embodiments of the present disclosure uses the key generation algorithm, signature algorithm, and verification algorithm in the signature scheme thereof.

The solution provided in this embodiment uses IBC to implement secure credential management for zero-power IoT terminal devices or AIoT devices, where the identity of each IoT terminal device serves as its own public key. Thus, the advantages of the solution provided in this embodiment are as follows: simplifying secure credential management. Specifically, since the identity of each IoT terminal device is its own public key, the terminal device does not need to store an additional public key or a certificate recording its own public key information. For the certificate management server, the adoption of IBC technology simplifies the certificate issuance mechanism-only private keys need to be generated, and there is no longer a need to generate certificates for a large number of IoT devices, thereby saving terminal storage space. Specifically, since the identity of each IoT terminal device is required to be stored, the use of the identity-based cryptosystem only requires storing its own identity without additional storage of a public key, and with the blockchain architecture, KGC certificates are stored on the blockchain, without need of storing certificates recording public key information. This fully leverages the value of information and reduces storage costs for zero-power IoT terminals or AIoT terminals.

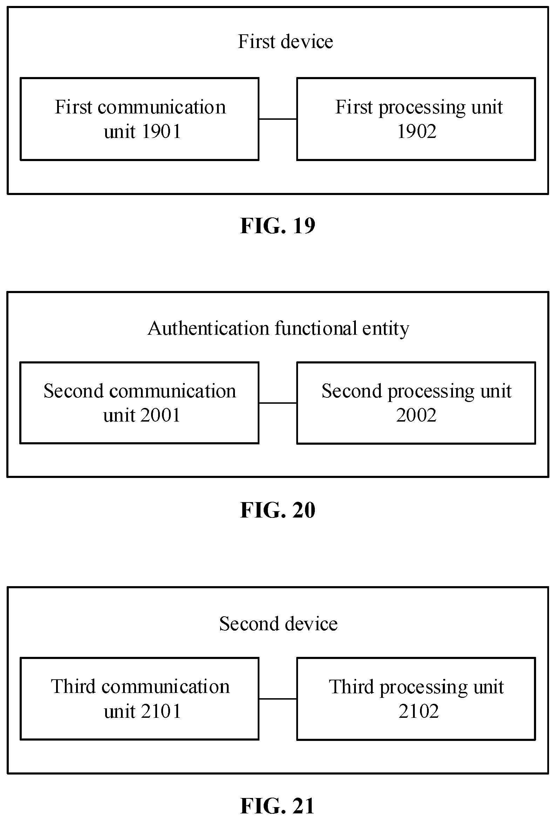

FIG. 19 is a schematic diagram of a composition and structure of a first device according to an embodiment of the present disclosure, including units below.

A first communication unit 1901 is configured to send a first request message to an AFE, wherein the first request message carries an address of a first certificate, the first certificate is a certificate of a first service node to which the first device belongs, and the first certificate is used to authenticate an identity of the first service node.

The first communication unit is configured to receive a first response message from the AFE, wherein the first response message carries information related to a second certificate, and the second certificate is used to authenticate an identity of the AFE.

The information related to the second certificate includes one of: the second certificate, and an address of the second certificate.

As shown in FIG. 19, the first device further includes a first processing unit 1902.

The first processing unit is configured to perform one of: authenticating the identity of the AFE based on the address of the second certificate; and authenticating the identity of the AFE based on the second certificate.

The second certificate carries a public key of the AFE.

The first communication unit is configured to send a second request message to the second device, wherein the second request message carries the information related to the second certificate.

The first communication unit is configured to receive a second response message from the second device, wherein the second response message carries a public key of the AFE.

The first response message further carries a first signature for authenticating the AFE.

The first processing unit is configured to authenticate the AFE based on the public key of the AFE and the first signature.

The first response message further carries at least one of: a security parameter of the AFE and an identifier of the AFE.

The first processing unit is configured to authenticate the AFE based on a first parameter, the public key of the AFE and the first signature, wherein the first parameter includes at least one of the security parameter of the AFE and the identifier of the AFE.

The first response message further carries a second random value.

The first parameter further includes at least one of: an identifier of the first device, a first random value, and the second random value.

The first communication unit is configured to send the first request message to the AFE through a second device.

The first communication unit is configured to receive a third response message from the second device, wherein the third response message carries a security parameter of the AFE.

The third response message further carries at least one of: an identifier of the AFE, and a second random value.

The first communication unit is configured to send a third request message to the AFE, wherein the third request message carries a second signature for authenticating the first device, and the second signature is calculated based on a private key of the first device.

The second signature may be calculated based on a second parameter and the private key of the first device, wherein the second parameter includes at least one of an identifier of the first device and a security parameter of the first device.

The third request message further carries at least one of: the identifier of the first device, the security parameter of the first device.

The second parameter further includes at least one of: the identifier of the AFE, and the second random value.

The first processing unit is configured to calculate a first session key based on the security parameter of the AFE and the security parameter of the first device, wherein the first session key is used for communication between the first device and the AFE.

The first communication unit is configured to receive a third response message from the second device, wherein the third response message is configured to indicate that the authentication is successful.

The first request message further carries at least one of: an identifier of the first device, and a first random value.

The second device may include one of: a terminal and an access network device.

The first device may include one of: an IoT device, and a zero-power device. The AFE may be deployed in at least one of: an AF, an AMF, a SMF, an AUSF, a UDM, a UDR, a HSS, an ARPF, a BSF, a SEAF, and a core network dedicated network element.

FIG. 20 is a schematic diagram of a composition structure of an AFE according to an embodiment of the present disclosure, including the following contents.

A second communication unit 2001 is configured to receive a first request message, wherein the first request message carries an address of a first certificate, the first certificate is a certificate of a first service node to which a first device belongs, and the first certificate is used to authenticate an identity of the first service node.

As shown in FIG. 20, the AFE further includes a second processing unit 2002.

The second processing unit is configured to authenticate the identity of the first service node based on the address of the first certificate.

The second communication unit is configured to send a first response message, wherein the first response message carries information related to a second certificate, and the second certificate is used to authenticate the identity of the AFE.

The information related to the second certificate includes one of the second certificate and an address of the second certificate.

The first response message further carries a first signature for authenticating the AFE, and the first signature is calculated based on a private key of the AFE.

The first signature may be calculated based on a first parameter and the private key of the AFE, wherein the first parameter includes at least one of: the security parameter of the AFE and an identifier of the AFE.

The first response message further carries at least one of: the security parameter of the AFE and the identifier of the AFE.

The first response message further carries a second random value.

The first parameter further includes at least one of: an identifier of the first device, a first random value, and the second random value.

The second communication unit is configured to receive a third request message from the first device, wherein the third request message carries the second signature for authenticating the first device.

The second processing unit is configured to authenticate the first device based on the public key of the first device and the second signature.

The third request message further carries at least one of: the identifier of the first device, and a security parameter of the first device.

The second processing unit is configured to authenticate the first device based on a second parameter, the public key of the first device and the second signature, wherein the second parameter includes at least one of: the identifier of the first device, and the security parameter of the first device.

The second parameter further includes at least one of: the identifier of the AFE, and the second random value.

The second processing unit is configured to calculate a first session key based on the security parameter of the AFE and the security parameter of the first device, wherein the first session key is used for communication between the first device and the AFE.

The second communication unit is configured to receive a first request message from the first device, and send the first response message to the first device.

The second communication unit is configured to receive a fourth request message from a second device, wherein the fourth request message carries a third signature for authenticating the second device.

The second processing unit is configured to authenticate the second device based on a public key of the second device and the third signature.

The fourth request message further carries at least one of: an identifier of the second device, and a security parameter of the second device.

The second processing unit is configured to authenticate the second device based on a third parameter, the public key of the second device and the third signature, wherein the third parameter includes at least one of: the identifier of the second device, and the security parameter of the second device.

The third parameter further includes at least one of the identifier of the AFE, the identifier of the first device, a first random value, and the second random value.

The second processing unit is configured to calculate a second session key based on the security parameter of the AFE and the security parameter of the second device, wherein the second session key is used for communication between the second device and the AFE.

The second communication unit is configured to receive the first request message from a second device, and send the first response message to the second device.

The first request message further carries at least one of: the identifier of the first device, and the first random value.

The second device may include one of: a terminal and an access network device.

The first device mayincludes one of: an IoT device, and a zero-power device. The AFE may be deployed in at least one of an AF, an AMF, a SMF, an AUSF, a UDM, a UDR, a HSS, an ARPF, a BSF, a SEAF, and a core network dedicated network element.

FIG. 21 is a schematic diagram of a composition and structure of a second device according to an embodiment of the present disclosure, including following contents.

A third communication unit 2101 is configured to send a first request message to an AFE, wherein the first request message carries an address of a first certificate, the first certificate is a certificate of a first service node to which a first device belongs, and the first certificate is used to authenticate an identity of the first service node.

The third communication unit is configured to receive a first response message from the AFE, wherein the first response message carries information related to a second certificate, and the second certificate is used to authenticate an identity of the AFE.

The information related to the second certificate includes one of the second certificate and an address of the second certificate.

As shown in FIG. 21, the second device further includes a third processing unit 2102.

The third processing unit is configured to: authenticae the identity of the AFE based on the address of the second certificate; or authenticate the identity of the AFE based on the second certificate.

The first response message further carries a first signature.

The third processing unit is configured to authenticate the AFE based on a public key of the AFE and the first signature, wherein the public key of the AFE is carried through the second certificate .

The first response message further carries at least one of: a security parameter of the AFE and an identifier of the AFE.

The third processing unit is configured to authenticate the AFE based on a first parameter, the public key of the AFE, and the first signature, wherein the first parameter includes at least one of the security parameter of the AFE and the identifier of the AFE.

The first response message further carries a second random value. The first parameter further includes at least one of: an identifier of the first device, a first random value, and the second random value.

The third communication unit is configured to send the first request message received from the first device to the AFE, and send a third response message to the first device, wherein the third response message carries the security parameter of the AFE.

The third response message further carries at least one of: the identifier of the AFE, and the second random value.

The third communication unit is configured to send a fourth request message to the AFE, wherein the fourth request message carries a third signature for authenticating the second device, and the third signature is calculated based on a private key of the second device.

The third signature may be calculated based on the private key of the second device and a third parameter, wherein the third parameter includes at least one of an identifier of the second device and a security parameter of the second device.

The fourth request message further carries at least one of: the identifier of the second device, and the security parameter of the second device.

The third parameter further includes at least one of the identifier of the AFE, the identifier of the first device, the first random value, and the second random value.

The third processing unit is configured to calculate a second session key based on the security parameter of the AFE and the security parameter of the second device, wherein the second session key is used for communication between the second device and the AFE.

The third communication unit is configured to send a third response message to the first device, the third response message being configured to indicate success of authentication.

The first request message further carries at least one of: the identifier of the first device, and the first random value.

The first device may include one of anIoT device and a zero-power device. The second device may include one of a terminal, and an access network device. The AFE may include at least one of an AF, an AMF, a SMF, an AUSF, a UDM, a UDR, a HSS, an ARPF, a BSF, a SEAF, and a core network dedicated network element.

An embodiment of the present disclosure further provides a first device, including:
a first communication unit, configured to send a third request message to an AFE, wherein the third request message carries a second signature for authenticating the first device, the second signature being calculated based on a private key of the first device.

The second signature may be calculated based on a second parameter and the private key of the first device, wherein the second parameter includes at least one of an identifier of the first device and a security parameter of the first device.

The third request message further carries at least one of: the identifier of the first device, and the security parameter of the first device.

The second parameter further includes at least one of: an identifier of the AFE, and a second random value.

The first communication unit is configured to send a first request message to the AFE, wherein the first request message carries at least one of the identifier of the first device and a first random value; and receive a first response message from the AFE, wherein the first response message carries a first signature for authenticating the AFE.

The first device may further include a first processing unit configured to authenticate the AFE based on a public key of the AFE and the first signature.

The first response message further carries at least one of: a security parameter of the AFE and the identifier of the AFE.

The first processing unit is configured to authenticate the AFE based on a first parameter, the public key of the AFE, and the first signature, wherein the first parameter includes at least one of the security parameter of the AFE and the identifier of the AFE.

The first response message further carries the second random value.

The first parameter further includes at least one of the identifier of the first device, the first random value, and the second random value.

The first communication unit is configured to send a first request message to the AFE through a second device, wherein the first request message carries at least one of: the identifier of the first device and the first random value; and receive a third response message from the second device, wherein the third response message carries a security parameter of the AFE.

The third response message further carries at least one of: the identifier of the AFE, and the second random value.

An embodiment of the present disclosure further provides an AFE, including:
a second communication unit, configured to receive a third request message from a first device, wherein the third request message carries a second signature for authenticating the first device.

The AFE may further include a second processing unit configured to authenticate the first device based on a public key of the first device and the second signature.

The third request message further carries at least one of: an identifier of the first device, and a security parameter of the first device.

The second processing unit is configured to authenticate the first device based on a second parameter, the public key of the first device and the second signature, wherein the second parameter includes at least one of: the identifier of the first device, and the security parameter of the first device.

The second parameter further includes at least one of: an identifier of the AFE, and a second random value.

The second communication unit is configured to: receive a first request message from the first device, wherein the first request message carries at least one of: the identifier of the first device and a first random value; and sending a first response message to the first device, the first response message carrying a first signature for authenticating the AFE.

The second communication unit is configured to: receive, through a second device, a first request message from the first device, the first request message carrying at least one of the identifier of the first device and the first random value; and send a first response message to the second device, the first response message carrying the first signature for authenticating the AFE.

The first signature may be calculated based on a first parameter and the private key of the AFE, wherein the first parameter includes at least one of a security parameter of the AFE and the identifier of the AFE.

The first response message further carries at least one of the security parameter of the AFE and the identifier of the AFE.

The first response message further carries the second random value.

The first parameter further includes at least one of the identifier of the first device, the first random value, and the second random value.

An embodiment of the present disclosure further provides a second device, including:
a third communication unit, configured to receive a first response message from an AFE, wherein the first response message carries a first signature for authenticating the AFE.

The second device may further include a third processing unit configured to authenticate the AFE based on a public key of the AFE and the first signature.

The third communication unit is configured to send a fourth request message to the AFE, the fourth request message carrying a third signature for authenticating a second device.

An embodiment of the present disclosure further provides an AFE, including:
a second communication unit, configured to send a first response message to a second device, the first response message carrying a first signature for authenticating the AFE.

The second communication unit is configured to receive a fourth request message from the second device, wherein the fourth request message carries a third signature for authenticating the second device.

An embodiment of the present disclosure further provides a first device, including:
a first communication unit, configured to receive an authentication message from a third device, wherein the authentication message carries a fourth signature for authenticating the third device and an identifier of the third device.

The first device may further include a first processing unit configured to authenticate the third device based on a public key associated with the third device, the identifier of the third device, and the fourth signature.

The authentication message further carries a security parameter of the third device.

The first processing unit is configured to authenticate the third device based on the public key associated with the third device, the fourth signature, the identifier of the third device, and the fourth parameter, wherein the fourth parameter includes at least one of the security parameter of the third device and the identifier of the third device.

The authentication message further carries a third random value. The fourth parameter further includes at least one of the third random value, an identifier of the first device, and a fourth random value.

The first communication unit is configured to send a request message to the third device, wherein the request message carries at least one of: the identifier of the first device and the fourth random value.

The first communication unit is configured to send a response message to the third device, wherein the response message carries a fifth signature for authenticating the first device.

The fifth signature may be calculated based on a private key of the first device and a fifth parameter, wherein the fifth parameter includes at least one of: the identifier of the first device and a security parameter of the first device.

The response message further carries at least one of: the identifier of the first device, and the security parameter of the first device.

The fifth parameter further includes at least one of: the identifier of the third device, and a third random value.

The first processing unit is configured to calculate a third session key based on the security parameter of the third device and the security parameter of the first device, the third session key being for communication between the first device and the third device.

A service node to which the first device and the third device belong is a first service node. The public key associated with the third device includes the identifier of the third device and a master public key of the first service node, the master public key of the first service node being a preconfigured one.

The request message further carries an address of a first certificate, the first certificate is a certificate of a first service node to which the first device belongs, and the first certificate is used to authenticate an identity of the first service node.

The authentication message further carries an address of a third certificate, the third certificate is a certificate of a second service node to which the third device belongs, the third certificate is used to authenticate an identity of the second service node, and the second service node is different from the first service node.

The first processing unit is configured to authenticate the identity of the second service node and obtain a master public key of the second service node based on the address of the third certificate.

The first communication unit is configured to send the address of the third certificate to a second device and receive an identity authentication result of the second service node from the second device.

The first communication unit is configured to receive a master public key of the second service node from the second device.

A service node to which the first device belongs is a first service node, and a service node to which the third device belongs is a second service node. The public key associated with the third device includes the identifier of the third device and a master public key of the second service node.

The second device includes one a terminal and an access network device.

The type of the first device is one of: an IoT device and a zero-power device. The type of the third device is one of an IoT device and a zero-power device.

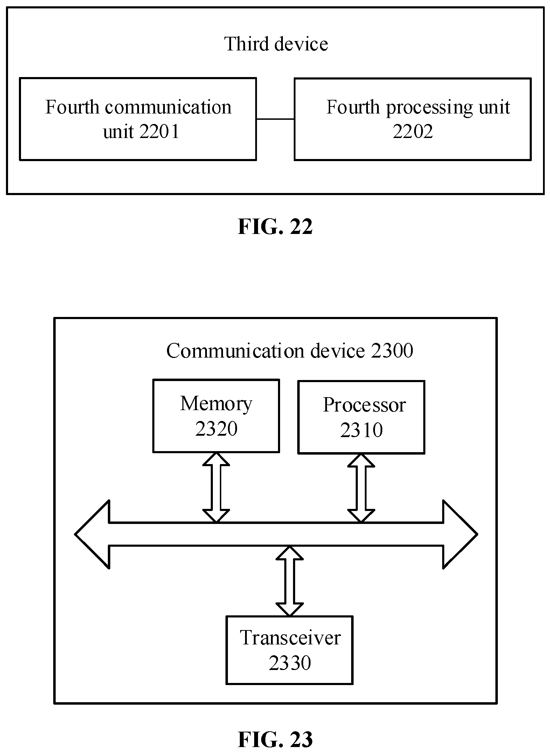

FIG. 22 is a schematic diagram of a composition and structure of a third device according to an embodiment of the present disclosure, including contents below.

A fourth communication unit 2201 is configured to send an authentication message to a first device, wherein the authentication message carries a fourth signature for authenticating the third device and an identifier of the third device.

The authentication message further carries a security parameter of the third device.

The fourth signature may be calculated based on a private key of the third device, the identifier of the third device, and a fourth parameter, the fourth parameter including at least one of the security parameter of the third device and the identifier of the third device.

The authentication message further carries a third random value.

The fourth parameter further includes at least one of the third random value, an identifier of the first device, and a fourth random value.

The fourth communication unit is configured to receive a request message from the first device, wherein the request message carries at least one of: the identifier of the first device and the fourth random value.

The fourth communication unit is configured to receive a response message from the first device, wherein the response message carries a fifth signature for authenticating the first device.

As shown in FIG. 22, the third device further includes a fourth processing unit 2202.

The fourth processing unit is configured to authenticate the first device based on a public key associated with the first device and the fifth signature.

The response message further carries at least one of: the identifier of the first device, and a security parameter of the first device.

The fourth processing unit is configured to authenticate the first device based on the public key associated with the first device, the fifth signature, and a fifth parameter, wherein the fifth parameter includes at least one of the identifier of the first device and the security parameter of the first device.

The fifth parameter further includes at least one of: the identifier of the third device, and the third random value.

The fourth processing unit is configured to calculate a third session key based on the security parameter of the third device and the security parameter of the first device, the third session key being for communication between the first device and the third device.

A service node to which the first device and the third device belong is a first service node. The public key associated with the first device includes an identifier of the first device and a master public key of the first service node, the master public key of the first service node being a preconfigured one.

The request message further carries an address of a first certificate, the first certificate is a certificate of a first service node to which the first device belongs, and the first certificate is used to authenticate an identity of the first service node.

The fourth processing unit is configured to authenticate the identity of the first service node and obtain a master public key of the first service node based on the address of the first certificate.

The fourth communication unit is configured to send the address of the certificate of the first service node to a fourth device, and receive an identity authentication result of the first service node from the fourth device.

The fourth communication unit is configured to receive a master public key of the first service node from the fourth device.

The public key associated with the first device includes the identifier of the first device and the master public key of the first service node.

The authentication message further carries an address of a third certificate, the third certificate is a certificate of a second service node to which the third device belongs, the third certificate is used to authenticate an identity of the second service node, and the second service node is different from the first service node.

The fourth device may include one of a terminal and an access network device.

The type of the first device may be one of: an IoT device and a zero-power device. The type of the third device may be one of an IoT device and a zero-power device.

The devices according to the embodiments of the present disclosure can realize the corresponding function of each device in the above embodiments of the authentication methods. The descriptions of the corresponding processes, functions, implementation methods, and beneficial effects of each module (sub-module, unit, component, etc.) in the devices may refer to those in the above method embodiments, and will not be repeated here. The functions of each module (sub-module, unit, component, etc.) in the devices of the embodiments may be implemented by a different or same module (sub-module, unit, component, etc.).

FIG. 23 is a schematic structural diagram of a communication device 2300 according to an embodiment of the present disclosure. The communication device 2300 includes a processor 2310 that may call and run a computer program from a memory to cause the communication device 2300 to implement the methods in the embodiments of the present disclosure.

In a possible implementation, the communication device 2300 may further include a memory 2320. The processor 2310 may call and run a computer program from the memory 2320 to cause the communication device 2300 to implement the methods in the embodiments of the present disclosure. The memory 2320 may be a device independent of the processor 2310 or may be integrated in the processor 2310.

In a possible implementation, the communication device 2300 may further include a transceiver 2330 that the processor 2310 may control to communicate with other devices, in particular, may send information or data to or receive information or data from other devices. Here, the transceiver 2330 may include a transmitter and a receiver. The transceiver 2330 may further include antennas, and the number of antennas may be one or more.

An embodiment of the present disclosure provides a first device, including a processor, a memory communicating with the processor, wherein the memory is used for storing instructions that, when executed by the processor, cause the first device to perform: sending a first request message to an AFE, the first request message carrying an address of a first certificate, the first certificate being a certificate of a first service node to which the first device belongs, and the first certificate being used for authenticating the identity of the first service node.

The instructions may further cause the first device to perform: receiving a first response message from the AFE, wherein the first response message carries information related to a second certificate, the second certificate being used to authenticate an identity of the AFE.

The information related to the second certificate includes one of the second certificate and an address of the second certificate.

The instructions may further cause the first device to perform one of: authenticating the identity of the AFE based on the address of the second certificate; and authenticating the identity of the AFE based on the second certificate.

The second certificate carries a public key of the AFE.

The instructions may further cause the first device to perform: sending a second request message to a second device, wherein the second request message carries the information related to the second certificate.

The instructions may further cause the first device to perform: receiving a second response message from the second device, wherein the second response message carries a public key of the AFE.

The first response message further carries a first signature for authenticating the AFE.

The instructions may further cause the first device to perform: authenticating the AFE based on the public key of the AFE and the first signature.

The first response message further carries at least one of: a security parameter of the AFE and an identifier of the AFE.

The instructions further cause the first device to perform: authenticating the AFE based on a first parameter, the public key of the AFE, and the first signature, wherein the first parameter includes at least one of the security parameter of the AFE and the identifier of the AFE.

The first response message further carries a second random value.

The first parameter further includes at least one of: an identifier of the first device, a first random value, and the second random value.

The instructions may further cause the first device to perform: sending the first request message to the AFE through a second device.

The instructions may further cause the first device to perform: receiving a third response message from the second device, wherein the third response message carries a security parameter of the AFE.

The third response message further carries at least one of: an identifier of the AFE, and a second random value.

The instructions may further cause the first device to perform: sending a third request message to the AFE, wherein the third request message carries the second signature for authenticating the first device, the second signature being calculated based on a private key of the first device.

The second signature may be calculated based on a second parameter and the private key of the first device, wherein the second parameter includes at least one of an identifier of the first device and a security parameter of the first device.

The third request message further carries at least one of: the identifier of the first device, and the security parameter of the first device.

The second parameter further includes at least one of: the identifier of the AFE, and the second random value.

The instructions may further cause the first device to perform: calculating a first session key based on the security parameter of the AFE and the security parameter of the first device, wherein the first session key is used for communication between the first device and the AFE.

The instructions may further cause the first device to perform: receiving a third response message from the second device, wherein the third response message is configured to indicate success of authentication.

The first request message further carries at least one of: an identifier of the first device, and a first random value.

The second device may include one of a terminal and an access network device.

The first device may include one of an IoT device, and a zero-power device. The AFE may be deployed in at least one of an AF, an AMF, a session management function SMF, an AUSF, a UDM, a unified data storage UDR, a HSS, an ARPF, a BSF, a SEAF, and a core network dedicated network element.

An embodiment of the present disclosure provides an AFE, including a processor, a memory communicating with the processor, wherein the memory is used for storing instructions that, when executed by the processor, cause the AFE to perform: receiving a first request message, wherein the first request message carries an address of a first certificate, the first certificate is a certificate of a first service node to which a first device belongs, and the first certificate is used for authenticating the identity of the first service node.

The instructions may further cause the AFE to perform: authenticating the identity of the first service node based on the address of the first certificate.

The instructions may further cause the AFE to send a first response message, wherein the first response message carries information related to a second certificate, and the second certificate is used to authenticate an identity of the AFE.

The information related to the second certificate includes one of the second certificate and an address of the second certificate.

The first response message further carries a first signature for authenticating the AFE, and the first signature is calculated based on a private key of the AFE.

The first signature may be calculated based on a first parameter and the private key of the AFE, wherein the first parameter includes at least one of: a security parameter of the AFE and an identifier of the AFE.

The first response message further carries at least one of: the security parameter of the AFE and the identifier of the AFE.

The first response message further carries a second random value.

The first parameter further includes at least one of: an identifier of the first device, a first random value, and the second random value.

The instructions may further cause the AFE to perform: receiving a third request message from the first device, wherein the third request message carries the second signature for authenticating the first device.

The instructions may further cause the AFE to perform: authenticating the first device based on the public key of the first device and the second signature.

The third request message further carries at least one of: the identifier of the first device, and a security parameter of the first device.

The instructions may further cause the AFE to perform: authenticating the first device based on a second parameter, the public key of the first device and the second signature, wherein the second parameter includes at least one of: the identifier of the first device, and the security parameter of the first device.

The second parameter further includes at least one of: the identifier of the AFE, and the second random value.

The instructions may further cause the AFE to perform: calculating a first session key based on the security parameter of the AFE and the security parameter of the first device, wherein the first session key is used for communication between the first device and the AFE.

The instructions may further cause the AFE to perform: receiving the first request message from the first device, and sending the first response message to the first device.

The instructions may further cause the AFE to perform: receiving a fourth request message from a second device, wherein the fourth request message carries a third signature for authenticating the second device.

The instructions may further cause the AFE to perform: authenticating the second device based on a public key of the second device, the third signature.

The fourth request message further carries at least one of: an identifier of the second device, and a security parameter of the second device.

The instructions may further cause the AFE to perform: authenticating the second device based on a third parameter, the public key of the second device and the third signature, wherein the third parameter includes at least one of: the identifier of the second device, and the security parameter of the second device.

The third parameter further includes at least one of the identifier of the AFE, an identifier of the first device, a first random value, and the second random value.

The instructions may further cause the AFE to perform: calculating a second session key based on the security parameter of the AFE and the security parameter of the second device, wherein the second session key is used for communication between the second device and the AFE.

The instructions may further cause the AFE to perform: receiving the first request message from a second device, and sending the first response message to the second device.

The first request message further carries at least one of: an identifier of the first device, and a first random value.

The second device may include one of a terminal and an access network device.

The first device may include one of: an IoT device and a zero-power device. The AFE may be deployed in at least one of an AF, an AMF, a SMF, an AUSF, a UDM, a UDR, a HSS, an ARPF, a BSF, a SEAF, and a core network dedicated network element.

An embodiment of the present disclosure provides a second device, including a processor, a memory communicating with the processor, wherein the memory is used for storing instructions that, when executed by the processor, cause the second device to perform: sending a first request message to an AFE, wherein the first request message carries an address of a first certificate, the first certificate is a certificate of a first service node to which the first device belongs, and the first certificate is used for authenticating an identity of the first service node.

The instructions may further cause the second device to perform: receiving a first response message from an AFE, wherein the first response message carries information related to a second certificate, the second certificate being used to authenticate an identity of the AFE.

The information related to the second certificate includes one of the second certificate and an address of the second certificate.

The instructions may further cause the second device to perform one of: authenticating the identity of the AFE based on the address of the second certificate; and authenticating the identity of the AFE based on the second certificate.

The first response message further carries a first signature.

The instructions may further cause the second device to perform: authenticating the AFE based on a public key of the AFE and the first signature, wherein the public key of the AFE is carried through the second certificate .

The first response message further carries at least one of: a security parameter of the AFE and an identifier of the AFE.

The instructions may further cause the second device to perform: authenticating the AFE based on a first parameter, the public key of the AFE, and the first signature, wherein the first parameter includes at least one of the security parameter of the AFE, and the identifier of the AFE.

The first response message further carries a second random value. The first parameter further includes at least one of an identifier of the first device, a first random value, and the second random value.

The instructions may further cause the second device to perform: sending the first request message received from the first device to the AFE, and sending a third response message to the first device, wherein the third response message carries a security parameter of the AFE.

The third response message further carries at least one of: the identifier of the AFE, and the second random value.

The instructions may further cause the second device to perform: sending a fourth request message to the AFE, wherein the fourth request message carries a third signature for authenticating the second device, the third signature being calculated based on a private key of the second device.

The third signature may be calculated based on the private key of the second device and a third parameter, wherein the third parameter includes at least one of an identifier of the second device and a security parameter of the second device.

The fourth request message further carries at least one of: the identifier of the second device, and the security parameter of the second device.

The third parameter further includes at least one of the identifier of the AFE, the identifier of the first device, the first random value, and the second random value.

The instructions may further cause the second device to perform: calculating a second session key based on the security parameter of the AFE and the security parameter of the second device, wherein the second session key is used for communication between the second device and the AFE.

The instructions may further cause the second device to perform: sending a third response message to the first device, wherein the third response message is configured to indicate success of authentication.

The first request message further carries at least one of: an identifier of the first device, and a first random value.

The first device may include one of: an IoT device and a zero-power device. The second device may include one of: a terminal, and an access network device. The AFE may include at least one of an AF, an AMF, a SMF, an AUSF, a UDM, a UDR, a HSS, an ARPF, a BSF, a SEAF, and a core network dedicated network element.

An embodiment of the present disclosure provides a first device, including a processor, a memory in communication with the processor, wherein the memory is configured to store instructions that, when executed by the processor, cause the first device to perform: sending a third request message to an AFE, wherein the third request message carries a second signature for authenticating the first device, and the second signature is calculated based on a private key of the first device.

The second signature may be calculated based on a second parameter and the private key of the first device, wherein the second parameter includes at least one of an identifier of the first device and a security parameter of the first device.

The third request message further carries at least one of: the identifier of the first device, and the security parameter of the first device.

The second parameter further includes at least one of: an identifier of the AFE, and a second random value.

The instructions may further cause the first device to perform: sending a first request message to the AFE, wherein the first request message carries at least one of: the identifier of the first device and a first random value; and receiving a first response message from the AFE, the first response message carrying a first signature for authenticating the AFE.

The instructions may further cause the first device to perform: authenticating the AFE based on a public key of the AFE and the first signature.

The first response message further carries at least one of: a security parameter of the AFE and the identifier of the AFE.

The instructions may further cause the first device to perform: authenticating the AFE based on a first parameter, the public key of the AFE, and the first signature, wherein the first parameter includes at least one of: the security parameter of the AFE, and the identifier of the AFE.

The first response message further carries the second random value.

The first parameter further includes at least one of the identifier of the first device, the first random value, and the second random value.

The instructions may further cause the first device to perform: sending, through a second device, a first request message to the AFE, wherein the first request message carries at least one of: the identifier of the first device and a first random value; and receiving a third response message from the second device, wherein the third response message carries a security parameter of the AFE.

The third response message further carries at least one of: the identifier of the AFE, and the second random value.

An embodiment of the present disclosure provides an AFE, including a processor, a memory in communication with the processor, wherein the memory is configured to store instructions that, when executed by the processor, cause the AFE to perform: receiving a third request message from a first device, wherein the third request message carries a second signature for authenticating the first device.

The instructions may further cause the AFE to perform: authenticating the first device based on a public key of the first device and the second signature.

The third request message further carries at least one of: an identifier of the first device, and a security parameter of the first device.

The instructions may further cause the AFE to perform: authenticating the first device based on a second parameter, the public key of the first device and the second signature, wherein the second parameter includes at least one of: the identifier of the first device, and the security parameter of the first device.

The second parameter further includes at least one of: an identifier of the AFE, and a second random value.

The instructions may further cause the AFE to perform: receiving a first request message from the first device, wherein the first request message carries at least one of: the identifier of the first device, and a first random value; and sending a first response message to the first device, wherein the first response message carries the first signature for authenticating the AFE.

The instructions may further cause the AFE to perform: receiving, through a second device, a first request message from the first device, wherein the first request message carries at least one of: an identifier of the first device, and a first random value; and sending the first response message to the second device, wherein the first response message carries a first signature for authenticating the AFE.

The first signature may be calculated based on a first parameter and the private key of the AFE, wherein the first parameter includes at least one of: a security parameter of the AFE and the identifier of the AFE.

The first response message further carries at least one of: the security parameter of the AFE and the identifier of the AFE.

The first response message further carries the second random value.

The first parameter further includes at least one of the identifier of the first device, the first random value, and the second random value.

An embodiment of the present disclosure provides a second device, including a processor, a memory in communication with the processor, wherein the memory is configured to store instructions that, when executed by the processor, cause the second device to perform: receiving a first response message from an AFE, wherein the first response message carries a first signature for authenticating the AFE.

The instructions may further cause the second device to authenticate the AFE based on a public key and the first signature of the AFE.

The instructions may further cause the second device to perform: sending a fourth request message to the AFE, wherein the fourth request message carries a third signature for authenticating a second device.

An embodiment of the present disclosure provides an AFE, including a processor, a memory in communication with the processor, wherein the memory is configured to store instructions that, when executed by the processor, cause the AFE to perform: sending a first response message to a second device, wherein the first response message carries a first signature for authenticating the AFE.

The instructions may further cause the AFE to perform: receiving a fourth request message from the second device, wherein the fourth request message carries a third signature for authenticating the second device.

An embodiment of the present disclosure provides a first device, including a processor, a memory in communication with the processor, and the memory is used for storing instructions that, when executed by the processor, cause the first device to perform: receiving an authentication message from a third device, wherein the authentication message carries a fourth signature for authenticating the third device and an identifier of the third device.

The instructions may further cause the first device to perform: authenticating the third device based on a public key associated with the third device, the identifier of the third device, and the fourth signature.

The authentication message further carries a security parameter of the third device.

The instructions may further cause the first device to perform: authenticating the third device based on the public key associated with the third device, the fourth signature, the identifier of the third device, and the fourth parameter, wherein the fourth parameter includes at least one of the security parameter of the third device, and the identifier of the third device.

The authentication message further carries a third random value. The fourth parameter further includes at least one of the third random value, an identifier of the first device, and a fourth random value.

The instructions may further cause the first device to perform: sending a request message to the third device, wherein the request message carries at least one of: the identifier of the first device, the fourth random value.

The instructions may further cause the first device to perform: sending a response message to the third device, wherein the response message carries a fifth signature for authenticating the first device.

The fifth signature may be calculated based on a private key of the first device and a fifth parameter, wherein the fifth parameter includes at least one of an identifier of the first device and a security parameter of the first device.

The response message further carries at least one of the identifier of the first device and the security parameter of the first device.

The fifth parameter further includes at least one of: the identifier of the third device and a third random value.

The instructions may further cause the first device to perform calculating a third session key based on the security parameter of the third device and the security parameter of the first device, wherein the third session key is used for communication between the first device and the third device.

A service node to which the first device and the third device belong is a first service node. The public key associated with the third device includes the identifier of the third device and a master public key of the first service node, the master public key of the first service node being a preconfigured one.

The request message further carries an address of a first certificate, the first certificate is a certificate of a first service node to which the first device belongs, and the first certificate is used to authenticate an identity of the first service node.

The authentication message further carries an address of a third certificate, the third certificate is a certificate of a second service node to which the third device belongs, the third certificate is used to authenticate an identity of the second service node, and the second service node is different from the first service node.

The instructions may further cause the first device to authenticate the identity of the second service node and obtain a master public key of the second service node based on the address of the third certificate.

The instructions may further cause the first device to perform: sending the address of the third certificate to a second device, receiving an identity authentication result of the second service node from the second device.

The instructions may further cause the first device to perform: receiving a master public key of the second service node from the second device.

A service node to which the first device belongs is a first service node, and a service node to which the third device belongs is a second service node. The public key associated with the third device includes the identifier of the third device and a master public key of the second service node.

The second device may include one of a terminal and an access network device.

The type of the first device may be one of: an IoT device and a zero-power device. The type of the third device may be one of an IoT device and a zero-power device.

An embodiment of the present disclosure provides a third device, including a processor, a memory in communication with the processor, wherein the memory is configured to store instructions that, when executed by the processor, cause the third device to: send an authentication message to a first device, wherein the authentication message carries a fourth signature for authenticating the third device and an identifier of the third device.

The authentication message further carries a security parameter of the third device.

The fourth signature may be calculated based on a private key of the third device, the identifier of the third device and a fourth parameter, the fourth parameter including at least one of the security parameter of the third device and the identifier of the third device.

The authentication message further carries a third random value.

The fourth parameter further includes at least one of the third random value, an identifier of the first device, and a fourth random value.

The instructions may further cause the third device to perform: receiving a request message from the first device, wherein the request message carries at least one of: the identity of the first device, and the fourth random value.

The instructions may further cause the third device to perform: receiving a response message from the first device, wherein the response message carries a fifth signature for authenticating the first device.

The instructions may further cause the third device to perform: authenticating the first device based on a public key associated with the first device and the fifth signature.

The response message further carries at least one of: the identifier of the first device, and a security parameter of the first device.

The instructions may further cause the third device to perform: authenticating the first device based on the public key associated with the first device, the fifth signature, a fifth parameter, wherein the fifth parameter includes at least one of: the identifier of the first device, and the security parameter of the first device.

The fifth parameter further includes at least one of: the identifier of the third device, and the third random value.

The instructions may further cause the third device to perform: calculating a third session key based on the security parameter of the third device and the security parameter of the first device, wherein the third session key is used for communication between the first device and the third device.

A service node to which the first device and the third device belong is a first service node. The public key associated with the first device includes an identifier of the first device and a master public key of the first service node, the master public key of the first service node being a preconfigured one.

The request message further carries an address of a first certificate, the first certificate is a certificate of a first service node to which the first device belongs, and the first certificate is used to authenticate an identity of the first service node.

The instructions may further cause the third device to authenticate the identity of the first service node and obtain a master public key of the first service node based on the address of the first certificate.

The instructions may further cause the third device to perform: sending the address of a certificate of the first service node to a fourth device, and receiving an identity authentication result of the first service node from the fourth device.

The instructions may further cause the third device to perform: receiving a master public key of the first service node from the fourth device.

The public key associated with the first device includes the identifier of the first device and the master public key of the first service node.

The authentication message further carries an address of a third certificate, the third certificate is a certificate of a second service node to which the third device belongs, the third certificate is used to authenticate an identity of the second service node, and the second service node is different from the first service node.

The fourth device may include one of a terminal and an access network device.

The type of the first device may be one of an IoT device and a zero-power device. The type of the third device may be one of an IoT device and a zero-power device.

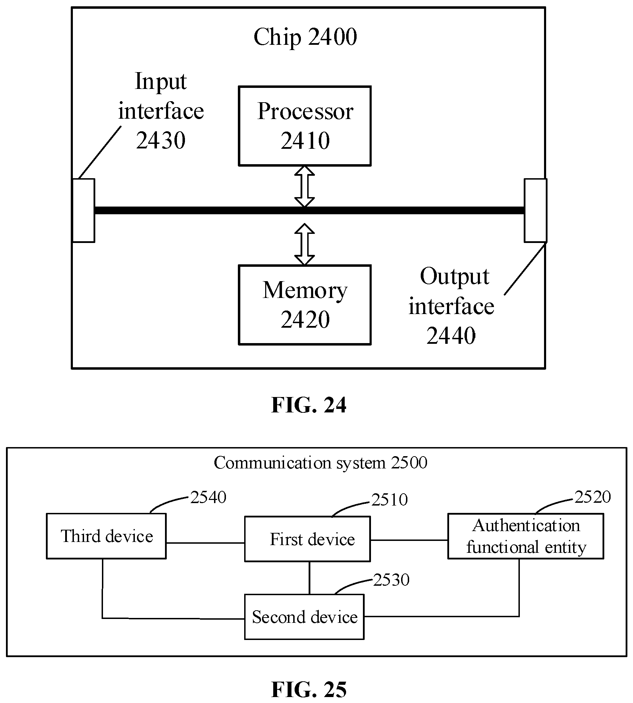

FIG. 24 is a schematic structural diagram of a chip 2400 according to an embodiment of the present disclosure. The chip 2400 includes a processor 2410, which may call and run a computer program from a memory to implement the methods in the embodiments of the present disclosure. In a possible implementation, the chip 2400 may further include a memory 2420. Here, the processor 2410 may call and run a computer program from the memory 2420 to implement the methods implemented by an access network device or a core network side device in the embodiments of the present disclosure. The memory 2420 may be a device independent of the processor 2410 or may be integrated in the processor 2410. In a possible implementation, the chip 2400 may further include an input interface 2430. The processor 2410 may control the input interface 2430 to communicate with other devices or chips, specifically, may acquire information or data from other devices or chips. In a possible implementation, the chip 2400 may further include an output interface 2440. Among them, the processor 2410 may control the output interface 2440 to communicate with other devices or chips, specifically, may output information or data to other devices or chips. In a possible implementation mode, the chip may be applied to each device in the embodiments of the present disclosure, and may implement corresponding processes implemented by each device in each method of the embodiments of the present disclosure, and will not be repeated here for simplicity. It should be understood that the chip mentioned in the embodiments of the present disclosure may also be referred to as a system-on-chip (SoC), system chip, chip system, or on-chip system chip, etc.

The aforementioned processor may be a general-purpose processor, digital signal processor (DSP), field-programmable gate array (FPGA), application-specific integrated circuit (ASIC), or other programmable logic devices, transistor logic devices, discrete hardware components, etc. Among them, the aforementioned general-purpose processor may be a microprocessor or any conventional processor, etc. The aforementioned memory may be volatile memory or non-volatile memory, or may include both volatile and non-volatile memory. The non-volatile memory may be read-only memory (ROM), programmable read-only memory (PROM), erasable programmable read-only memory (EPROM), electrically erasable programmable read-only memory (EEPROM), or flash memory. The volatile memory may be random access memory (RAM).

It should be understood that the aforementioned memory is illustrative but not restrictive. For example, the memory in the embodiments of the present disclosure may be static random access memory (SRAM), dynamic random access memory (DRAM), etc. That is to say, the memory in the embodiments of the present disclosure is intended to include, but is not limited to, these and any other suitable types of memory.

FIG. 25 is a schematic block diagram of a communication system 2500 according to an embodiment of the present disclosure. The communication system 2500 includes a first device 2510, an AFE 2520, a second device 2530, and a third device 2540. In the embodiments described above, implementations may be achieved in whole or in part through software, hardware, firmware, or any combination thereof. When using software, it may be implemented in whole or in part in the form of a computer program product. The computer program product includes one or more computer instructions. When the computer program instructions are loaded and executed on a computer, the processes or functions described in the embodiments of the present disclosure are generated in whole or in part. The computer may be a general-purpose computer, a special-purpose computer, a computer network, or any other programmable device. The computer instructions may be stored in a computer-readable storage medium or transmitted from one computer-readable storage medium to another. For example, the computer instructions may be transmitted from one website, computer, server, or data center to another via wired (e.g., coaxial cable, optical fiber, digital subscriber line) or wireless (e.g., infrared, wireless, microwave, etc.) means. The computer-readable storage medium may be any available medium that can be accessed by a computer, or a data storage device such as a server or data center integrating one or more available media. The available medium may be a magnetic medium (e.g., a hard disk), a semiconductor medium (e.g., a solid-state drive), or the like.

It should be understood that in the various embodiments of the present disclosure, the sequence numbers of the aforementioned processes do not imply the order of execution. The execution order of each process shall be determined by its function and inherent logic, and shall not constitute any limitation on the implementation process of the embodiments of the present disclosure .

Those skilled in the art may clearly understand that for convenience and conciseness of description, the specific working processes of the systems, devices, and units described above may refer to the corresponding processes in the aforementioned method embodiments, and will not be repeated herein.

The above are merely specific implementations, but the protection scope of the present disclosure is not limited thereto. Any person skilled in the art can easily conceive of changes or substitutions within the technical scope of the present disclosure, which shall all be covered by the protection scope of the present disclosure. Therefore, the protection scope of the present disclosure shall be subject to the protection scope of the claims.

## Claims

1. An authentication method, implemented by a first device, comprising:
sending a first request message to an authentication functional entity (AFE), wherein the first request message carries an address of a first certificate, the first certificate is a certificate of a first service node to which the first device belongs, and the first certificate is used to authenticate an identity of the first service node.

2. The authentication method of claim 1, further comprising:
receiving a first response message from the AFE, wherein the first response message carries information related to a second certificate, and the second certificate is used to authenticate an identity of the AFE.

3. The authentication method of claim 2, wherein the information related to the second certificate comprises one of: an address of the second certificate, and the second certificate.

4. The authentication method of claim 3, further comprising one of:
authenticating the identity of the AFE based on the address of the second certificate; and
authenticating the identity of the AFE based on the second certificate.

5. The authentication method of any one of claims 2-4, wherein the second certificate carries a public key of the AFE.

6. The authentication method of claim 3, further comprising:
sending a second request message to a second device, wherein the second request message carries the information related to the second certificate.

7. The authentication method of claim 6, further comprising:
receiving a second response message from the second device, wherein the second response message carries a public key of the AFE.

8. The authentication method of claim 5 or 7, wherein the first response message further carries a first signature for authenticating the AFE.

9. The authentication method of claim 8, further comprising:
authenticating the AFE based on the public key of the AFE and the first signature.

10. The authentication method of claim 9, wherein the first response message further carries at least one of: a security parameter of the AFE, and an identifier of the AFE.

11. The authentication method of claim 10, wherein authenticating the AFE based on the public key of the AFE and the first signature comprises:
authenticating the AFE based on a first parameter, the public key of the AFE and the first signature, wherein the first parameter comprises at least one of: the security parameter of the AFE, and the identifier of the AFE.

12. The authentication method of claim 11, wherein the first response message further carries a second random value.

13. The authentication method of claim 12, wherein the first parameter further comprises at least one of: an identifier of the first device, a first random value, and the second random value.

14. The authentication method of claim 1, wherein sending the first request message to the AFE comprises:
sending the first request message to the AFE through a second device.

15. The authentication method of claim 14, further comprising:
receiving a third response message from the second device, wherein the third response message carries a security parameter of the AFE.

16. The authentication method of claim 15, wherein the third response message further carries at least one of: an identifier of the AFE, and a second random value.

17. The authentication method of any one of claims 12, 13 and 16, further comprising:
sending a third request message to the AFE, wherein the third request message carries a second signature for authenticating the first device, the second signature being calculated based on a private key of the first device.

18. The authentication method of claim 17, wherein the second signature is calculated based on a second parameter and the private key of the first device, wherein the second parameter comprises at least one of: an identifier of the first device, and a security parameter of the first device.

19. The authentication method of claim 18, wherein the third request message further carries at least one of: the identifier of the first device, and the security parameter of the first device.

20. The authentication method of claim 19, wherein the second parameter further comprises at least one of: the identifier of the AFE, and the second random value.

21. The authentication method of any one of claims 11-13 and 18-20, further comprising:
calculating a first session key based on the security parameter of the AFE and a security parameter of the first device, wherein the first session key is used for communication between the first device and the AFE.

22. The authentication method of claim 14, further comprising:
receiving a third response message from the second device, wherein the third response message is configured to indicate success of authentication.

23. The authentication method of any one of claims 1-22, wherein the first request message further carries at least one of: an identifier of the first device, and a first random value.

24. The authentication method of any one of claims 6, 7 and 14-16, wherein the second device comprises one of: a terminal, and an access network device.

25. The authentication method of any one of claims 1-24, wherein the first device comprises one of: an Internet of Things (IoT) device, and a zero-power device; and
the AFE is deployed in at least one of: application Function (AF), Access and Mobility Management Function (AMF), Session Management Function (SMF), Authentication Server Function (AUSF), Unified Data Management (UDM), Unified Data Repository (UDR), Home Subscriber System (HSS), Authentication Credential Repository and Processing Function (ARPF), Bootstrapping Server Function (BSF), Security Anchor Function (SEAF), and a core network dedicated network element.

26. An authentication method, implemented by an authentication functional entity (AFE), comprising:
receiving a first request message, wherein the first request message carries an address of a first certificate, the first certificate is a certificate of a first service node to which a first device belongs, and the first certificate is used to authenticate an identity of the first service node.

27. The authentication method of claim 26, further comprising:
authenticating the identity of the first service node based on the address of the first certificate.

28. The authentication method of claim 26 or 27, further comprising:
sending a first response message, wherein the first response message carries information related to a second certificate, and the second certificate is used to authenticate an identity of the AFE.

29. The authentication method of claim 28, wherein the information related to the second certificate comprises one of: an address of the second certificate, and the second certificate.

30. The authentication method of claim 28 or 29, wherein the first response message further carries a first signature for authenticating the AFE, the first signature being calculated based on a private key of the AFE.

31. The authentication method of claim 30, wherein the first signature is calculated based on a first parameter and the private key of the AFE, wherein the first parameter comprises at least one of: a security parameter of the AFE, and an identifier of the AFE.

32. The authentication method of claim 31, wherein the first response message further carries at least one of: the security parameter of the AFE, and the identifier of the AFE.

33. The authentication method of claim 32, wherein the first response message further carries a second random value.

34. The authentication method of claim 33, wherein the first parameter further comprises at least one of: an identifier of the first device, a first random value, and the second random value.

35. The authentication method of claim 33 or 34, further comprising:
receiving a third request message from the first device, wherein the third request message carries a second signature for authenticating the first device.

36. The authentication method of claim 35, further comprising:
authenticating the first device based on the public key of the first device and the second signature.

37. The authentication method of claim 36, wherein the third request message further carries at least one of: the identifier of the first device, and a security parameter of the first device.

38. The authentication method of claim 37, wherein authenticating the first device based on the public key of the first device and the second signature comprises:
authenticating the first device based on a second parameter, the public key of the first device and the second signature, wherein the second parameter comprises at least one of: the identifier of the first device, and the security parameter of the first device.

39. The authentication method of claim 38, wherein the second parameter further comprises at least one of: the identifier of the AFE, and the second random value.

40. The authentication method of any one of claims 37-39, further comprising:
calculating a first session key based on the security parameter of the AFE and the security parameter of the first device, wherein the first session key is used for communication between the first device and the AFE.

41. The authentication method of any one of claims 28-40, wherein receiving the first request message comprises:
receiving the first request message from the first device; and sending the first response message comprises: sending the first response message to the first device.

42. The authentication method of claim 33 or 34, further comprising:
receiving a fourth request message from a second device, wherein the fourth request message carries a third signature for authenticating the second device.

43. The authentication method of claim 42, further comprising:
authenticating the second device based on a public key of the second device and the third signature.

44. The authentication method of claim 43, wherein the fourth request message further carries at least one of:
an identifier of the second device, and a security parameter of the second device.

45. The authentication method of claim 44, wherein authenticating the second device based on the public key of the second device and the third signature comprises:
authenticating the second device based on a third parameter, the public key of the second device and the third signature, wherein the third parameter comprises at least one of: the identifier of the second device, and the security parameter of the second device.

46. The authentication method of claim 45, wherein the third parameter further comprises at least one of: the identifier of the AFE, an identifier of the first device, a first random value, and the second random value.

47. The authentication method of any one of claims 44-46, further comprising:
calculating a second session key based on the security parameter of the AFE and the security parameter of the second device, wherein the second session key is used for communication between the second device and the AFE.

48. The authentication method of any one of claims 28-34 and 42-47, wherein receiving the first request message comprises:
receiving the first request message from a second device; and sending the first response message comprises: sending the first response message to the second device.

49. The authentication method of any one of claims 26-48, wherein the first request message further carries at least one of: an identifier of the first device, and a first random value.

50. The authentication method of any one of claims 42-48, wherein the second device comprises one of: a terminal, and an access network device.

51. The authentication method of any one of claims 26-50, wherein the first device comprises of: an Internet of Things (IoT) device, and a zero-power device; and
the AFE is deployed in at least one of: application Function (AF), Access and Mobility Management Function (AMF), Session Management Function (SMF), Authentication Server Function (AUSF), Unified Data Management (UDM), Unified Data Repository (UDR), Home Subscriber System (HSS), Authentication Credential Repository and Processing Function (ARPF), Bootstrapping Server Function (BSF), Security Anchor Function (SEAF), and A core network dedicated network element.

52. An authentication method, implemented by a second device, comprising:
sending a first request message to an authentication functional entity (AFE), wherein the first request message carries an address of a first certificate, the first certificate is a certificate of a first service node to which a first device belongs, and the first certificate is used to authenticate an identity of the first service node.

53. The authentication method of claim 52, further comprising:
receiving a first response message from the AFE, wherein the first response message carries information related to a second certificate, and the second certificate is used to authenticate an identity of the AFE.

54. The authentication method of claim 53, wherein the information related to the second certificate comprises one of: an address of the second certificate, and the second certificate.

55. The authentication method of claim 54, further comprising one of:
authenticating the identity of the AFE based on the address of the second certificate; and
authenticating the identity of the AFE based on the second certificate.

56. The authentication method of any one of claims 53-55, wherein the first response message further carries a first signature.

57. The authentication method of claim 56, further comprising:
authenticating the AFE based on a public key of the AFE and the first signature, wherein the public key of the AFE is carried through the second certificate .

58. The authentication method of claim 57, wherein the first response message further carries at least one of: a security parameter of the AFE, and an identifier of the AFE.

59. The authentication method of claim 58, wherein authenticating the AFE based on the public key of the AFE and the first signature comprises:
authenticating the AFE based on a first parameter, the public key of the AFE and the first signature, wherein the first parameter comprises at least one of: the security parameter of the AFE, and the identifier of the AFE.

60. The authentication method of claim 59, wherein the first response message further carries a second random value; and the first parameter further comprises at least one of: an identifier of the first device, a first random value, and the second random value.

61. The authentication method of claim 60, wherein sending the first request message to the AFE comprises: sending the first request message received from the first device to the AFE;
the method further comprises: sending a third response message to the first device, wherein the third response message carries the security parameter of the AFE.

62. The authentication method of claim 61, wherein the third response message further carries at least one of: the identifier of the AFE, and the second random value.

63. The authentication method of claim 60, further comprising:
sending a fourth request message to the AFE, wherein the fourth request message carries a third signature for authenticating the second device, the third signature being calculated based on a private key of the second device.

64. The authentication method of claim 63, wherein the third signature is calculated based on the private key of the second device and a third parameter, wherein the third parameter comprises at least one of: an identifier of the second device, and a security parameter of the second device.

65. The authentication method of claim 64, wherein the fourth request message further carries at least one of: the identifier of the second device, and the security parameter of the second device.

66. The authentication method of claim 65, wherein the third parameter further comprises at least one of: the identifier of the AFE, the identifier of the first device, the first random value, and the second random value.

67. The authentication method of any one of claims 64-66, further comprising:
calculating a second session key based on the security parameter of the AFE and the security parameter of the second device, wherein the second session key is used for communication between the second device and the AFE.

68. The authentication method of any one of claims 63-67, further comprising:
sending a third response message to the first device, wherein the third response message is configured to indicate success of authentication.

69. The authentication method of any one of claims 52-68, wherein the first request message further carries at least one of: an identifier of the first device, and a first random value.

70. The authentication method of any one of claims 52-69, wherein the first device comprises one of: an Internet of Things (IoT) device, and a zero-power device;
the second device comprises one of: a terminal,and an access network device; and
the AFE comprises at least one of: application Function (AF), Access and Mobility Management Function (AMF), Session Management Function (SMF), Authentication Server Function (AUSF), Unified Data Management (UDM), Unified Data Repository (UDR), Home Subscriber System (HSS), Authentication Credential Repository and Processing Function (ARPF), Bootstrapping Server Function (BSF), Security Anchor Function (SEAF), and A core network dedicated network element.

71. An authentication method, implemented by a first device, comprising:
sending a third request message to an authentication functional entity (AFE), wherein the third request message carries a second signature for authenticating the first device, the second signature being calculated based on a private key of the first device.

72. The authentication method of claim 71, wherein the second signature is calculated based on a second parameter and the private key of the first device, wherein the second parameter comprises at least one of: an identifier of the first device, and a security parameter of the first device.

73. The authentication method of claim 72, wherein the third request message further carries at least one of: the identifier of the first device, and the security parameter of the first device.

74. The authentication method of claim 73, wherein the second parameter further comprises at least one of: an identifier of the AFE, and a second random value.

75. The authentication method of claim 74, further comprising:
sending a first request message to the AFE, wherein the first request message carries at least one of: the identifier of the first device, and a first random value; and
receiving a first response message from the AFE, wherein the first response message carries a first signature for authenticating the AFE.

76. The authentication method of claim 75, further comprising:
authenticating the AFE based on a public key of the AFE and the first signature.

77. The authentication method of claim 76, wherein the first response message further carries at least one of: a security parameter of the AFE, and the identifier of the AFE.

78. The authentication method of claim 77, wherein authenticating the AFE based on the public key of the AFE and the first signature comprises:
authenticating the AFE based on a first parameter, the public key of the AFE and the first signature, wherein the first parameter comprises at least one of: the security parameter of the AFE, and the identifier of the AFE.

79. The authentication method of claim 78, wherein the first response message further carries the second random value.

80. The authentication method of claim 79, wherein the first parameter further comprises at least one of: the identifier of the first device, the first random value, and the second random value.

81. The authentication method of claim 74, further comprising:
sending, through a second device, a first request message to the AFE, wherein the first request message carries at least one of: the identifier of the first device, and a first random value; and
receiving a third response message from the second device, wherein the third response message carries a security parameter of the AFE.

82. The authentication method of claim 81, wherein the third response message further carries at least one of: the identifier of the AFE, and the second random value.

83. An authentication method, implemented by an authentication functional entity (AFE), comprising:
receiving a third request message from a first device, wherein the third request message carries a second signature for authenticating the first device.

84. The authentication method of claim 83, further comprising:
authenticating the first device based on a public key of the first device and the second signature.

85. The authentication method of claim 84, wherein the third request message further carries at least one of: an identifier of the first device, and a security parameter of the first device.

86. The authentication method of claim 85, wherein authenticating the first device based on the public key of the first device and the second signature comprises:
authenticating the first device based on a second parameter, the public key of the first device and the second signature, wherein the second parameter comprises at least one of: the identifier of the first device, and the security parameter of the first device.

87. The authentication method of claim 86, wherein the second parameter further comprises at least one of: an identifier of the AFE, and a second random value.

88. The authentication method of claim 87, further comprising:
receiving a first request message from the first device, wherein the first request message carries at least one of: the identifier of the first device, and a first random value; and
sending a first response message to the first device, wherein the first response message carries a first signature for authenticating the AFE.

89. The authentication method of claim 87, further comprising:
receiving, through a second device, a first request message from the first device, wherein the first request message carries at least one of: an identifier of the first device, and a first random value; and
sending a first response message to the second device, wherein the first response message carries a first signature for authenticating the AFE.

90. The authentication method of claim 88 or 89, wherein the first signature is calculated based on a first parameter and the private key of the AFE, wherein the first parameter comprises at least one of: a security parameter of the AFE, and the identifier of the AFE.

91. The authentication method of claim 90, wherein the first response message further carries at least one of: the security parameter of the AFE, and the identifier of the AFE.

92. The authentication method of claim 91, wherein the first response message further carries the second random value.

93. The authentication method of claim 92, wherein the first parameter further comprises at least one of: the identifier of the first device, the first random value, and the second random value.

94. An authentication method, implemented by a second device, comprising:
receiving a first response message from an authentication functional entity (AFE), wherein the first response message carries a first signature for authenticating the AFE.

95. The authentication method of claim 94, further comprising:
authenticating the AFE based on a public key of the AFE and the first signature.

96. The authentication method of claim 94 or 95, further comprising:
sending a fourth request message to the AFE, wherein the fourth request message carries a third signature for authenticating a second device.

97. An authentication method, implemented by an authentication functional entity (AFE), comprising:
sending a first response message to a second device, wherein the first response message carries a first signature for authenticating the AFE.

98. The authentication method of claim 97, further comprising:
receiving a fourth request message from the second device, wherein the fourth request message carries a third signature for authenticating the second device.

99. An authentication method, implemented by a first device, comprising:
receiving an authentication message from a third device, wherein the authentication message carries a fourth signature for authenticating the third device, and an identifier of the third device.

100. The authentication method of claim 99, further comprising:
authenticating the third device based on a public key associated with the third device, the identifier of the third device, and the fourth signature.

101. The authentication method of claim 100, wherein the authentication message further carries a security parameter for the third device.

102. The authentication method of claim 101, wherein authenticating the third device based on the public key associated with the third device, the identifier of the third device and the fourth signature comprises:
authenticating the third device based on the public key associated with the third device, the fourth signature, the identifier of the third device, and the fourth parameter, wherein the fourth parameter comprises at least one of: the security parameter of the third device, and the identifier of the third device.

103. The authentication method of claim 102, wherein the authentication message further carries a third random value; and the fourth parameter further comprises at least one of: the third random value, an identifier of the first device, and a fourth random value.

104. The authentication method of any one of claims 100-103, further comprising:
sending a request message to the third device, wherein the request message carries at least one of: an identifier of the first device, and a fourth random value.

105. The authentication method of any one of claims 102-104, further comprising:
sending a response message to the third device, wherein the response message carries a fifth signature for authenticating the first device.

106. The authentication method of claim 105, wherein the fifth signature is calculated based on a private key of the first device and a fifth parameter, wherein the fifth parameter comprises at least one of: an identifier of the first device, and a security parameter of the first device.

107. The authentication method of claim 106, wherein the response message further carries at least one of: the identifier of the first device, and the security parameter of the first device.

108. The authentication method of claim 107, wherein the fifth parameter further comprises at least one of: the identifier of the third device, and a third random value.

109. The authentication method of claim 107 or 108, further comprising:
calculating a third session key based on the security parameter of the third device and the security parameter of the first device, wherein the third session key is used for communication between the first device and the third device.

110. The authentication method of any one of claims 100-104, wherein a service node to which the first device and the third device belong is a first service node; and the public key associated with the third device comprises the identifier of the third device and a master public key of the first service node, wherein the master public key of the first service node is a preconfigured one.

111. The authentication method of claim 104, wherein the request message further carries an address of a first certificate, the first certificate being a certificate of a first service node to which the first device belongs, and the first certificate being used to authenticate an identity of the first service node.

112. The authentication method of claim 111, wherein the authentication message further carries an address of a third certificate, the third certificate being a certificate of a second service node to which the third device belongs, and the third certificate being used to authenticate an identity of the second service node, the second service node being different from the first service node.

113. The authentication method of claim 112, further comprising:
based on the address of the third certificate, authenticating the identifier of the second service node and obtaining a master public key of the second service node.

114. The authentication method of claim 112, further comprising:
sending the address of the third certificate to a second device, and receiving an identity authentication result from the second service node of the second device.

115. The authentication method of claim 114, further comprising:
receiving a master public key from the second service node of the second device.

116. The authentication method of any one of claims 112-115, wherein the first device belongs to a first service node and the third device belongs to a second service node; and
the public key associated with the third device comprises the identifier of the third device and a master public key of the second service node.

117. The authentication method of claim 115 or 116, wherein the second device comprises one of: a terminal, and an access network device.

118. The authentication method of any one of claims 100-117, wherein the first device is an Internet of Things (IoT) device or a zero-power device; and
the third device is an IoT device or a zero-power device.

119. An authentication method, implemented by a third device, comprising:
sending an authentication message to a first device, wherein the authentication message carries a fourth signature for authenticating the third device, and an identifier of the third device.

120. The authentication method of claim 119, wherein the authentication message further carries a security parameter of the third device.

121. The authentication method of claim 120, wherein the fourth signature is calculated based on a private key of the third device, the identifier of the third device and a fourth parameter, wherein the fourth parameter comprises at least one of: the security parameter of the third device, and the identifier of the third device.

122. The authentication method of claim 121, wherein the authentication message further carries a third random value.

123. The authentication method of claim 122, wherein the fourth parameter further comprises at least one of: the third random value, an identifier of the first device, and a fourth random value.

124. The authentication method of claim 123, further comprising:
receiving a request message from the first device, wherein the request message carries at least one of: the identifier of the first device, and the fourth random value.

125. The authentication method of claim 124, further comprising:
receiving a response message from the first device, wherein the response message carries a fifth signature for authenticating the first device.

126. The authentication method of claim 125, further comprising:
authenticating the first device based on a public key associated with the first device and the fifth signature.

127. The authentication method of claim 126, wherein the response message further carries at least one of: the identifier of the first device, and a security parameter of the first device.

128. The authentication method of claim 127, wherein authenticating the first device based on the public key associated with the first device and the fifth signature comprises:
authenticating the first device based on the public key associated with the first device, the fifth signature and a fifth parameter, wherein the fifth parameter comprises at least one of: the identifier of the first device, and the security parameter of the first device.

129. The authentication method of claim 128, wherein the fifth parameter further comprises at least one of: the identifier of the third device, and the third random value.

130. The authentication method of any one of claims 127-129, further comprising:
calculating a third session key based on the security parameter of the third device and the security parameter of the first device, wherein the third session key is used for communication between the first device and the third device.

131. The authentication method of any one of claims 126-130, wherein the first device and the third device belong to a first service node; and the public key associated with the first device comprises an identifier of the first device and a master public key of the first service node, the master public key of the first service node being a preconfigured one.

132. The authentication method of any one of claims 126-130, wherein the request message further carries an address of a first certificate, the first certificate being a certificate of a first service node to which the first device belongs, the first certificate being used to authenticate an identity of the first service node.

133. The authentication method of claim 132, further comprising:
based on the address of the first certificate, authenticating the identifier of the first service node and obtaining a master public key of the first service node.

134. The authentication method of claim 132, further comprising:
sending the address of the certificate of the first service node to a fourth device, and receiving an identity authentication result of the first service node from the fourth device.

135. The authentication method of claim 134, further comprising:
receiv a master public key of the first service node from the fourth device.

136. The authentication method of any one of claims 133-135, wherein the public key associated with the first device comprises the identifier of the first device and the master public key of the first service node.

137. The authentication method of any one of claims 132-136, wherein the authentication message further carries an address of a third certificate, the third certificate being a certificate of a second service node to which the third device belongs, the third certificate being used to authenticate an identity of the second service node, and the second service node being different from the first service node.

138. The authentication method of claim 134 or 135, wherein the fourth device comprises one of: a terminal, and an access network device.

139. The authentication method of any one of claims 119-138, wherein the first device is an Internet of Things (IoT) device or a zero-power device; and
the third device is one of: an IoT device and a zero-power device.

140. A first device, comprising:
a first communication unit, configured to send a first request message to an authentication functional entity (AFE), wherein the first request message carries an address of a first certificate, the first certificate is a certificate of a first service node to which the first device belongs, and the first certificate is used to authenticate an identity of the first service node.

141. The first device of claim 140, wherein the first communication unit is configured to receive a first response message from the AFE, wherein the first response message carries information related to a second certificate, and the second certificate is used to authenticate an identity of the AFE.

142. The first device of claim 141, wherein the information related to the second certificate comprises one of:
an address of the second certificate, and the second certificate.

143. The first device of claim 142, further comprising:
a first processing unit, configured to: authenticate the identity of the AFE based on the address of the second certificate; or, authenticate the identity of the AFE based on the second certificate.

144. The first device of any one of claims 141-143, wherein the second certificate carries a public key of the AFE.

145. The first device of claim 142, wherein the first communication unit is configured to send a second request message to the second device, wherein the second request message carries the information related to the second certificate.

146. The first device of claim 145, wherein the first communication unit is configured to receive a second response message from the second device, wherein the second response message carries a public key of the AFE.

147. The first device of claim 144 or 146, wherein the first response message further carries a first signature for authenticating the AFE.

148. The first device of claim 147, wherein the first processing unit is configured to authenticate the AFE based on the public key of the AFE and the first signature.

149. The first device of claim 148, wherein the first response message further carries at least one of: a security parameter of the AFE, and an identifier of the AFE.

150. The first device according to claim 149, wherein the first processing unit is configured to authenticate the AFE based on a first parameter, the public key of the AFE and the first signature, wherein the first parameter comprises at least one of: the security parameter of the AFE and the identifier of the AFE.

151. The first device of claim 150, wherein the first response message further carries a second random value.

152. The first device of claim 151, wherein the first parameter further comprises at least one of: an identifier of the first device, a first random value, and the second random value.

153. The first device of claim 140, wherein the first communication unit is configured to send the first request message to the AFE through a second device.

154. The first device of claim 153, wherein the first communication unit is configured to receive a third response message from the second device, wherein the third response message carries a security parameter of the AFE.

155. The first device of claim 154, wherein the third response message further carries at least one of: an identifier of the AFE, and a second random value.

156. The first device according to any one of claims 151, 152 and 155, wherein the first communication unit is configured to send a third request message to the AFE, wherein the third request message carries a second signature for authenticating the first device, the second signature being calculated based on a private key of the first device.

157. The first device of claim 156, wherein the second signature is calculated based on a second parameter and the private key of the first device, wherein the second parameter comprises at least one of: an identifier of the first device, and a security parameter of the first device.

158. The first device of claim 157, wherein the third request message further carries at least one of: the identifier of the first device, and the security parameter of the first device.

159. The first device of claim 158, wherein the second parameter further comprises at least one of: the identifier of the AFE, and the second random value.

160. The first device according to any one of claims 150-152 and 157-159, wherein the first processing unit is configured to calculate a first session key based on the security parameter of the AFE and a security parameter of the first device, wherein the first session key is used for communication between the first device and the AFE.

161. The first device of claim 153, wherein the first communication unit is configured to receive a third response message from the second device, wherein the third response message is configured to indicate success of authentication.

162. The first device according to any one of claims 140-161, wherein the first request message further carries at least one of: an identifier of the first device, and a first random value.

163. The first device according to any one of claims 145, 146 and 153-155, wherein the second device comprises one of: a terminal, and an access network device.

164. The first device according to any one of claims 140-163, wherein the first device comprises one of: an Internet of Things (IoT) device, and a zero-power device; and
the AFE is deployed in at least one of: application Function (AF), Access and Mobility Management Function (AMF), Session Management Function (SMF), Authentication Server Function (AUSF), Unified Data Management (UDM), Unified Data Repository (UDR), Home Subscriber System (HSS), Authentication Credential Repository and Processing Function (ARPF), Bootstrapping Server Function (BSF), Security Anchor Function (SEAF), and a core network dedicated network element.

165. An authentication functional entity (AFE), comprising:
a second communication unit, configured to receive a first request message, wherein the first request message carries an address of a first certificate, the first certificate is a certificate of a first service node to which a first device belongs, and the first certificate is used to authenticate an identity of the first service node.

166. The AFE of claim 165, further comprising:
a second processing unit, configured to authenticate the identity of the first service node based on the address of the first certificate.

167. The AFE according to claim 165 or 166, wherein the second communication unit is configured to send a first response message, wherein the first response message carries information related to a second certificate, and the second certificate is used to authenticate the identity of the AFE.

168. The AFE of claim 167, wherein the information related to the second certificate comprises one of: an address of the second certificate, and the second certificate.

169. The AFE of claim 167 or 168, wherein the first response message further carries a first signature for authenticating the AFE, the first signature being calculated based on a private key of the AFE.

170. The AFE of claim 169, wherein the first signature is calculated based on a first parameter and the private key of the AFE, wherein the first parameter comprises at least one of: the security parameter of the AFE, and an identifier of the AFE.

171. The AFE of claim 170, wherein the first response message further carries at least one of: the security parameter of the AFE, and the identifier of the AFE.

172. The AFE of claim 171, wherein the first response message further carries a second random value.

173. The AFE of claim 172, wherein the first parameter further comprises at least one of: an identifier of the first device, a first random value, and the second random value.

174. The AFE according to claim 172 or 173, wherein the second communication unit is configured to receive a third request message from the first device, wherein the third request message carries the second signature for authenticating the first device.

175. The AFE of claim 174, wherein the second processing unit is configured to authenticate the first device based on the public key of the first device and the second signature.

176. The AFE of claim 175, wherein the third request message further carries at least one of: the identifier of the first device, and a security parameter of the first device.

177. The AFE according to claim 176, wherein the second processing unit is configured to authenticate the first device based on a second parameter, the public key of the first device and the second signature, wherein the second parameter comprises at least one of: the identifier of the first device, and the security parameter of the first device.

178. The AFE of claim 177, wherein the second parameter further comprises at least one of: the identifier of the AFE, and the second random value.

179. The AFE according to any one of claims 176-178, wherein the second processing unit is configured to calculate a first session key based on the security parameter of the AFE and the security parameter of the first device, wherein the first session key is used for communication between the first device and the AFE.

180. The AFE of any one of claims 167-179, wherein the second communication unit is configured to receive a first request message from the first device, and send the first response message to the first device.

181. The AFE according to claim 172 or 173, wherein the second communication unit is configured to receive a fourth request message from a second device, wherein the fourth request message carries a third signature for authenticating the second device.

182. The AFE of claim 181, wherein the second processing unit is configured to authenticate the second device based on a public key of the second device and the third signature.

183. The AFE of claim 182, wherein the fourth request message further carries at least one of: an identifier of the second device, and a security parameter of the second device.

184. The AFE according to claim 183, wherein the second processing unit is configured to authenticate the second device based on a third parameter, the public key of the second device and the third signature, wherein the third parameter comprises at least one of: the identifier of the second device, and the security parameter of the second device.

185. The AFE of claim 184, wherein the third parameter further comprises at least one of: the identifier of the AFE, an identifier of the first device, a first random value, and the second random value.

186. The AFE of any one of claims 183-185, wherein the second processing unit is configured to calculate a second session key based on the security parameter of the AFE and the security parameter of the second device, wherein the second session key is used for communication between the second device and the AFE.

187. The AFE of any one of claims 167-173, 181-186, wherein the second communication unit is configured to receive the first request message from a second devic, and send the first response message to the second device.

188. The AFE of any one of claims 165-187, wherein the first request message further carries at least one of:
an identifier of the first device, and a first random value.

189. The AFE of any one of claims 181-188, wherein the second device comprises one of: a terminal, and an access network device.

190. The AFE of any one of claims 165-189, wherein the first device comprises one of: an Internet of Things (IoT) device, and a zero-power device; and
the AFE is deployed in at least one of: application Function (AF), Access and Mobility Management Function (AMF), Session Management Function (SMF), Authentication Server Function (AUSF), Unified Data Management (UDM), Unified Data Repository (UDR), Home Subscriber System (HSS), Authentication Credential Repository and Processing Function (ARPF), Bootstrapping Server Function (BSF), Security Anchor Function (SEAF), and A core network dedicated network element.

191. A second device, comprising:
a third communication unit, configured to send a first request message to an authentication functional entity (AFE), wherein the first request message carries an address of a first certificate, the first certificate is a certificate of a first service node to which a first device belongs, and the first certificate is used to authenticate an identity of the first service node.

192. The second device of claim 191, wherein the third communication unit is configured to receive a first response message from the AFE, wherein the first response message carries information related to a second certificate, and the second certificate is used to authenticate an identity of the AFE.

193. The second device of claim 192, wherein the information related to the second certificate comprises one of: an address of the second certificate, and the second certificate.

194. The second device of claim 193, further comprising:
a third processing unit, configured to: authenticate the identity of the AFE based on the address of the second certificate; or authenticate the identity of the AFE based on the second certificate.

195. The second device of any one of claims 192-194, wherein the first response message further carries a first signature.

196. The second device of claim 195, wherein the third processing unit is configured to authenticate the AFE based on a public key of the AFE and the first signature, wherein the public key of the AFE is carried through the second certificate.

197. The second device of claim 196, wherein the first response message further carries at least one of: a security parameter of the AFE, and an identifier of the AFE.

198. The second device of claim 197, wherein the third processing unit is configured to authenticate the AFE based on a first parameter, the public key of the AFE, and the first signature, wherein the first parameter comprises at least one of: the security parameter of the AFE, and the identifier of the AFE.

199. The second device of claim 198, wherein the first response message further carries a second random value; and the first parameter further comprises at least one of: an identifier of the first device, a first random value, and the second random value.

200. The second device of claim 199, wherein the third communication unit is configured to:
send the first request message received from the first device to the AFE; and
send a third response message to the first device, wherein the third response message carries the security parameter of the AFE.

201. The second device of claim 200, wherein the third response message further carries at least one of: the identifier of the AFE, and the second random value.

202. The second device of claim 199, wherein the third communication unit is configured to send a fourth request message to the AFE, wherein the fourth request message carries a third signature for authenticating the second device, the third signature being calculated based on a private key of the second device.

203. The second device of claim 202, wherein the third signature is calculated based on the private key of the second device and a third parameter, wherein the third parameter comprises at least one of: an identifier of the second device, and a security parameter of the second device.

204. The second device of claim 203, wherein the fourth request message further carries at least one of: the identifier of the second device, and the security parameter of the second device.

205. The second device of claim 204, wherein the third parameter further comprises at least one of: the identifier of the AFE, the identifier of the first device, the first random value, and the second random value.

206. The second device of any one of claims 203-205, wherein the third processing unit is configured to calculate a second session key based on the security parameter of the AFE and the security parameter of the second device, wherein the second session key is used for communication between the second device and the AFE.

207. The second device of any one of claims 202-206, wherein the third communication unit is configured to send a third response message to the first device, wherein the third response message is configured to indicate success of authentication.

208. The second device according to any one of claims 191-207, wherein the first request message further carries at least one of: an identifier of the first device, and a first random value.

209. The second device according to any one of claims 191-208, wherein the first device comprises one of: an Internet of Things (IoT) device, and a zero-power device;
the second device comprises one of: a terminal,and an access network device; and
the AFE comprises at least one of: application Function (AF), Access and Mobility Management Function (AMF), Session Management Function (SMF), Authentication Server Function (AUSF), Unified Data Management (UDM), Unified Data Repository (UDR), Home Subscriber System (HSS), Authentication Credential Repository and Processing Function (ARPF), Bootstrapping Server Function (BSF), Security Anchor Function (SEAF), and A core network dedicated network element.

210. A first device, comprising:
a first communication unit, configured to send a third request message to an authentication functional entity (AFE), wherein the third request message carries a second signature for authenticating the first device, the second signature being calculated based on a private key of the first device.

211. The first device of claim 210, wherein the second signature is calculated based on a second parameter and the private key of the first device, wherein the second parameter comprises at least one of: an identifier of the first device, and a security parameter of the first device.

212. The first device of claim 211, wherein the third request message further carries at least one of: the identifier of the first device, and the security parameter of the first device.

213. The first device of claim 212, wherein the second parameter further comprises at least one of: an identifier of the AFE, and a second random value.

214. The first device of claim 213, wherein the first communication unit is configured to:
send a first request message to the AFE, wherein the first request message carries at least one of: the identifier of the first device, and a first random value; and
receive a first response message from the AFE, wherein the first response message carries a first signature for authenticating the AFE.

215. The first device of claim 214, further comprising:
a first processing unit, configured to authenticate the AFE based on a public key of the AFE and the first signature.

216. The first device of claim 215, wherein the first response message further carries at least one of: a security parameter of the AFE, and the identifier of the AFE.

217. The first device of claim 216, wherein the first processing unit is configured to authenticate the AFE based on a first parameter, the public key of the AFE, and the first signature, wherein the first parameter comprises at least one of: the security parameter of the AFE, and the identifier of the AFE.

218. The first device of claim 217, wherein the first response message further carries the second random value.

219. The first device of claim 218, wherein the first parameter further comprises at least one of: the identifier of the first device, the first random value, and the second random value.

220. The first device of claim 213, wherein the first communication unit is configured to:
send a first request message to the AFE through a second device, wherein the first request message carries at least one of: the identifier of the first device, and a first random value;
receive a third response message from the second device, wherein the third response message carries a security parameter of the AFE.

221. The first device of claim 220, wherein the third response message further carries at least one of: the identifier of the AFE, and the second random value.

222. An authentication functional entity (AFE), comprising:
a second communication unit, configured to receive a third request message from a first device, wherein the third request message carries a second signature for authenticating the first device.

223. The AFE of claim 222, further comprising:
a second processing unit, configured to authenticate the first device based on a public key of the first device and the second signature.

224. The AFE of claim 223, wherein the third request message further carries at least one of: an identifier of the first device, and a security parameter of the first device.

225. The AFE of claim 224, wherein the second processing unit is configured to authenticate the first device based on a second parameter, the public key of the first device and the second signature, wherein the second parameter comprises at least one of: the identifier of the first device, and the security parameter of the first device.

226. The AFE of claim 225, wherein the second parameter further comprises at least one of: an identifier of the AFE, and a second random value.

227. The AFE of claim 226, wherein the second communication unit is configured to: receive a first request message from the first device, wherein the first request message carries at least one of: the identifier of the first device, and a first random value; and send a first response message to the first device, wherein the first response message carries a first signature for authenticating the AFE.

228. The AFE of claim 226, wherein the second communication unit is configured to: receive, through a second device, a first request message from the first device, wherein the first request message carries at least one of: the identifier identity of the first device, and a first random value; and send a first response message to the second device, wherein the first response message carries a first signature for authenticating the AFE.

229. The AFE of claim 227 or 228, wherein the first signature is calculated based on a first parameter and the private key of the AFE, wherein the first parameter comprises at least one of: a security parameter of the AFE, and the identifier of the AFE.

230. The AFE of claim 229, wherein the first response message further carries at least one of: the security parameter of the AFE, and the identifier of the AFE.

231. The AFE of claim 230, wherein the first response message further carries the second random value.

232. The AFE of claim 231, wherein the first parameter further comprises at least one of: the identifier of the first device, the first random value, and the second random value.

233. A second device, comprising:
a third communication unit, configured to receive a first response message from an authentication functional entity (AFE), wherein the first response message carries a first signature for authenticating the AFE.

234. The second device of claim 233, further comprising:
a third processing unit, configured to authenticate the AFE based on a public key of the AFE and the first signature.

235. The second device of claim 233 or 234, wherein the third communication unit is configured to send a fourth request message to the AFE, wherein the fourth request message carries a third signature for authenticating a second device.

236. An authentication functional entity (AFE), comprising:
a second communication unit, configured to send a first response message to a second device, wherein the first response message carries a first signature for authenticating the AFE.

237. The AFE of claim 236, wherein the second communication unit is configured to receive a fourth request message from the second device, wherein the fourth request message carries a third signature for authenticating the second device.

238. A first device, comprising:
a first communication unit, configured to receive an authentication message from a third device, wherein the authentication message carries a fourth signature for authenticating the third device and an identifier of the third device.

239. The first device of claim 238, further comprising:
a first processing unit, configured to authenticate the third device based on a public key associated with the third device, the identifier of the third device, and the fourth signature.

240. The first device of claim 239, wherein the authentication message further carries a security parameter of the third device.

241. The first device according to claim 240, wherein the first processing unit is configured to authenticate the third device based on the public key associated with the third device, the fourth signature, the identifier of the third device, and the fourth parameter, wherein the fourth parameter comprises at least one of: the security parameter of the third device, and the identifier of the third device.

242. The first device of claim 241, wherein the authentication message further carries a third random value; and the fourth parameter further comprises at least one of: the third random value, an identifier of the first device, and a fourth random value.

243. The first device of any one of claims 239-242, wherein the first communication unit is configured to send a request message to the third device, wherein the request message carries at least one of: an identifier of the first device, and a fourth random value.

244. The first device of any one of claims 241-243, wherein the first communication unit is configured to send a response message to the third device, wherein the response message carries a fifth signature for authenticating the first device.

245. The first device of claim 244, wherein the fifth signature is calculated based on a private key of the first device and a fifth parameter, wherein the fifth parameter comprises at least one of: an identifier of the first device, and a security parameter of the first device.

246. The first device of claim 245, wherein the response message further carries at least one of: the identifier of the first device, and the security parameter of the first device.

247. The first device of claim 246, wherein the fifth parameter further comprises at least one of:: the identifier of the third device, and a third random value.

248. The first device according to claim 246 or 247, wherein the first processing unit is configured to calculate a third session key based on the security parameter of the third device and the security parameter of the first device, wherein the third session key is used for communication between the first device and the third device.

249. The first device according to any one of claims 239-243, wherein a service node to which the first device and the third device belong is a first service node; and the public key associated with the third device comprises the identifier of the third device and a master public key of the first service node, the master public key of the first service node being a preconfigured one.

250. The first device of claim 243, wherein the request message further carries an address of a first certificate, the first certificate being a certificate of a first service node to which the first device belongs, and the first certificate being used to authenticate an identity of the first service node.

251. The first device according to claim 250, wherein the authentication message further carries an address of a third certificate, the third certificate being a certificate of a second service node to which the third device belongs, and the third certificate being used to authenticate an identity of the second service node, the second service node being different from the first service node.

252. The first device of claim 251, wherein the first processing unit is configured to authenticate the identity of the second service node and obtain a master public key of the second service node based on the address of the third certificate.

253. The first device according to claim 251, wherein the first communication unit is configured to send the address of the third certificate to a second device and receive an identity authentication result of the second service node from the second device.

254. The first device of claim 253, wherein the first communication unit is configured to receive a master public key of the second service node from the second device.

255. The first device according to any one of claims 251-254, wherein the first device belongs to a first service node and the third device belongs to a second service node; and
the public key associated with the third device comprises the identifier of the third device and a master public key of the second service node.

256. The first device according to claim 254 or 255, wherein the second device comprises one of: a terminal, and an access network device.

257. The first device according to any one of claims 239-256, wherein the first device is an Internet of Things (IoT) device or a zero-power device; and
the third device is an IoT device or a zero-power device.

258. A third device, comprising:
a fourth communication unit, configured to send an authentication message to a first device, wherein the authentication message carries a fourth signature for authenticating the third device and an identifier of the third device.

259. The third device of claim 258, wherein the authentication message further carries a security parameter of the third device.

260. The third device of claim 259, wherein the fourth signature is calculated based on a private key of the third device, the identifier of the third device, and a fourth parameter, wherein the fourth parameter comprises at least one of: the security parameter of the third device, and the identifier of the third device.

261. The third device of claim 260, wherein the authentication message further carries a third random value.

262. The third device of claim 261, wherein the fourth parameter further comprises at least one of: the third random value, an identifier of the first device, and a fourth random value.

263. The third device of claim 262, wherein the fourth communication unit is configured to receive a request message from the first device, wherein the request message carries at least one of: the identifier of the first device, and the fourth random value.

264. The third device of claim 263, wherein the fourth communication unit is configured to receive a response message from the first device, wherein the response message carries a fifth signature for authenticating the first device.

265. The third device of claim 264, further comprising:
a fourth processing unit, configured to authenticate the first device based on a public key associated with the first device and the fifth signature.

266. The third device of claim 265, wherein the response message further carries at least one of: the identifier of the first device, and a security parameter of the first device.

267. The third device according to claim 266, wherein the fourth processing unit is configured to authenticate the first device based on the public key associated with the first device, the fifth signature, and a fifth parameter, wherein the fifth parameter comprises at least one of: the identifier of the first device, and the security parameter of the first device.

268. The third device of claim 267, wherein the fifth parameter further comprises at least one of: the identifier of the third device, and the third random value.

269. The third device according to any one of claims 266-268, wherein the fourth processing unit is configured to calculate a third session key based on the security parameter of the third device and the security parameter of the first device, wherein the third session key is used for communication between the first device and the third device.

270. The third device of any one of claims 265-269, wherein the first device and the third device belong to a first service node; and the public key associated with the first device comprises an identifier of the first device and a master public key of the first service node, the master public key of the first service node being a pre-configured one.

271. The third device of any one of claims 265-269, wherein the request message further carries an address of a first certificate, the first certificate being a certificate of a first service node to which the first device belongs, and the first certificate is used to authenticate an identity of the first service node.

272. The third device of claim 271, wherein the fourth processing unit is configured to authenticate the identity of the first service node and obtain a master public key of the first service node based on the address of the first certificate.

273. The third device according to claim 271, wherein the fourth communication unit is configured to send the address of the certificate of the first service node to a fourth device and receive an identity authentication result of the first service node from the fourth device.

274. The third device of claim 273, wherein the fourth communication unit is configured to receive a master public key of the first service node from the fourth device.

275. The third device of any one of claims 272-274, wherein the public key associated with the first device comprises the identifier of the first device, and the master public key of the first service node.

276. The third device according to any one of claims 273-275, wherein the authentication message further carries an address of a third certificate, the third certificate being a certificate of a second service node to which the third device belongs, the third certificate being used to authenticate an identity of the second service node, and the second service node being different from the first service node.

277. The third device according to claim 273 or 274, wherein the fourth device comprises one of: a terminal, and an access network device.

278. The third device of any one of claims 258-277, wherein the first device is of an Internet of Things (IoT) device or a zero-power device; and
the third device is an IoT device or a zero-power device.

279. A first device, comprising: a transceiver, a memory configured to store a computer program, and a processor configured to invoke and run the computer program stored in the memory to cause the first device to perform the authentication method of any one of claims 1 to 25, or claims 71 to 82, or claims 99 to 118.

280. A second device, comprising: a transceiver, a memory configured to store a computer program, and a processor configured to invoke and run the computer program stored in the memory to cause the second device to perform the authentication method of any one of claims 52 to 70, or claims 94 to 96.

281. A third device, comprising: a transceiver, a memory configured to store a computer program, and a processor configured to invoke and run the computer program stored in the memory to cause the third device to perform the authentication method of any one of claims 119 to 139.

282. An authentication functionalal entity (AFE), comprising: a transceiver, a memory configured to store a computer program, and a processor configured to invoke and run a computer program stored in the memory to cause the AFE to perform the authentication method of any one of claims 26 to 51, or claims 83 to 93, or claims 97 to 98.

283. A chip, comprising: a processor for invoking and running a computer program from a memory to cause a device on which the chip is mounted to perform the authentication method of any one of claims 1 to 25, or claims 26 to 51, or claims 52 to 70, or claims 71 to 82, or claims 83 to 93, or claims 94 to 96, or claims 97 to 98, or claims 99 to 118 or claims 119 to 139.

284. A computer-readable storage medium, having stored a computer program thereon that, when run by a device, causes the device to perform the authentication method of any one of claims 1 to 25, or 26 to 51, or 52 to 70, or 71 to 82, or 83 to 93, or 94 to 96, or 97 to 98, or 99 to 118, or 119 to 139.

285. A computer program product, comprising computer program instructions that cause a computer to perform the authentication method of any one of claims 1 to 25, or claims 26 to 51, or claims 52 to 70, or claims 71 to 82, or claims 83 to 93, or claims 94 to 96, or claims 97 to 98, or claims 99 to 118 or claims 119 to 139.

286. A computer program that causes a computer to perform the authentication method of any one of claims 1 to 25, or 26 to 51, or 52 to 70, or 71 to 82, or 83 to 93, or 94 to 96, or 97 to 98, or 99 to 118, or 119 to 139.
